(19) Europäisches Patentamt European Patent Office Office européen des brevets

(11) **EP 4 076 954 B1**

(12) **EUROPEAN PATENT SPECIFICATION**

(45) Date of publication and mention of the grant of the patent:
**20.11.2024 Bulletin 2024/47**

(21) Application number: **20902653.3**

(22) Date of filing: **18.12.2020**

(51) International Patent Classification (IPC):
*B32B 7/12* (2006.01)    *B32B 27/08* (2006.01)
*B32B 27/32* (2006.01)    *B32B 27/30* (2006.01)
*B32B 7/02* (2019.01)    *B32B 27/16* (2006.01)
*B32B 27/18* (2006.01)    *B32B 27/24* (2006.01)

(52) Cooperative Patent Classification (CPC):
**B32B 7/12; B32B 7/02; B32B 27/08; B32B 27/16;
B32B 27/18; B32B 27/302; B32B 27/32;
B32B 27/325;** B32B 27/24; B32B 2250/02;
B32B 2250/03; B32B 2250/04; B32B 2250/246;
B32B 2264/102; B32B 2270/00;     (Cont.)

(86) International application number:
**PCT/US2020/065861**

(87) International publication number:
**WO 2021/127343 (24.06.2021 Gazette 2021/25)**

(54) **ORIENTED MULTILAYER SHRINK FILMS WITH POLYSTYRENE SKIN LAYER**

ORIENTIERTE MEHRLAGIGE SCHRUMPFFOLIEN MIT POLYSTYROLHAUTSCHICHT

FILMS MULTICOUCHES RÉTRACTABLES ORIENTÉS AVEC COUCHE DE PEAU EN POLYSTYRÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.12.2019 US 201962951675 P
29.07.2020 US 202063058079 P**

(43) Date of publication of application:
**26.10.2022 Bulletin 2022/43**

(73) Proprietor: **Taghleef Industries Inc.
Newark, Delaware 19713 (US)**

(72) Inventors:
• **DENICOLA, Anthony, J.
Old Lyme, Connecticut 06371 (US)**
• **WILKIE, Andrew, F.
Avondale, Pennsylvania 19311 (US)**

(74) Representative: **HGF
HGF Limited
1 City Walk
Leeds LS11 9DX (GB)**

(56) References cited:
**WO-A1-2009/045737    WO-A1-2017/210403
WO-A1-2017/210403    WO-A1-2020/028500
US-A- 3 644 428    US-A1- 2003 027 904
US-A1- 2005 214 557    US-A1- 2017 283 116
US-A1- 2019 345 306    US-A1- 2020 298 541**

(52) Cooperative Patent Classification (CPC): (Cont.)
    B32B 2307/406; B32B 2307/41; B32B 2307/516;
    B32B 2307/518; B32B 2307/546; B32B 2307/72;
    B32B 2307/732; B32B 2307/736; B32B 2307/7376;
    B32B 2307/748; B32B 2519/00

## Description

BACKGROUND OF THE INVENTION

This PCT application claims the benefit under 35 U.S.C. §119(e) of Application Serial No. 63/058,079 filed on July 29, 2020 entitled ORIENTED MULTILAYER SHRINK FILMS WITH POLYSTYRENE SKIN LAYER and Application Serial No. 62/951,675 filed on December 20, 2019 entitled ORIENTED MULTILAYER SHRINK FILMS WITH POLYSTYRENE SKIN LAYER.

FIELD OF THE INVENTION

This invention relates generally to shrink films and more particularly to oriented multi-layer shrink films employing polystyrene in at least one skin layer.

DESCRIPTION OF RELATED ART

Shrink labels represent a significant percentage of labelling applications. Within this category, high shrink labels are the fastest growing segment because of the trend towards contoured containers and shrink sleeve labels with 360° graphics. There are two categories of shrink labels: roll-on-shrink-on (ROSO) labels and sleeve labels. Films from which ROSO labels are formed primarily shrink in the machine direction (MD) and generally employ biaxially oriented polypropylene (BOPP) films with shrink levels of generally less than 20%. Sleeve labels are solvent seamed into a tube and placed around a container. When heat is applied, the label preferentially shrinks in the direction extending circumferentially around the container. Sleeve labels primarily shrink in the transverse direction (TD) of film formation.

Current high shrink sleeve labels are made from TD shrink films (i.e., films with predominate shrinkage in the transverse direction of film formation). These films can provided 50% or more shrinkage and are usually made of polyvinyl chloride (PVC), polyethylene terephthalate (PET), polyethylene terephthalate glycol (PETG), polylactic acid (PLA) or oriented polystyrene (OPS).

PVC and PETG are the predominant shrink films in North America. These polymers contaminate the PET in labeled containers and in the recycling process must be separated. Since PETG and PET have similar characteristics, there is no elegant way to segregate them. Recyclers and brand owners are interested in preserving the value of recycled PET employed in the fabrication of containers. A shrink label that floats in water allows easy separation from PET bottles and preserves the recyclability of the container. Numerous commercial prior art label structures employing PVC, PET, PETG, PLA and OPS have densities in excess of 1 g/cm$^3$ making it difficult to separate the labels from the containers to which they are attached during a recycling process. In other words, they are not floatable. In addition, there is a push to avoid PVC packaging because of environmental concerns. OPS offers low cost and high shrinkage, but prior to this invention, optics and rigidity have not been of the desired quality in prior art structures.

Representative prior art publications disclosing multilayer shrink films employing polystyrene in at least one skin layer include:

US 20150010740, assigned to Avery Dennison: Discloses a five-layer film with both skins including 90% polystyrene homopolymer and 10% styrene-ethylene-co-butene-styrene block copolymer. When the skin is a styrene block copolymer (SBC), it is a five-layer structure wherein tie layers between the core and skins either are 100% SEPS or a blend of LDPE (10%) and a maleic anhydride grafted polyolefin (90%). The core composition is 90% LDPE (a blend of two LDPE grades) and 10% propylene-based elastomer copolymer. Both films with SBC skins, which were oriented in the MD direction, exhibited very poor MD shrink performance at 90 °C of 10% and 9% with the 100% SEPS and LDPE/Maleic anhydride polyolefin tie layers, respectively. This level of shrink performance is insufficient for high shrink label applications.

US Patent 5219666, assigned to WR Grace: Discloses an oriented multilayer film with a core layer of very low density polyethylene and outer layers comprising a styrene-butadiene copolymer. The film is made by a blown film process with very low 2.5:1 uniaxial stretching in the machine direction. In a five-layer structure, ethylene-vinyl acetate copolymer is used as the tie-layers. These films were primarily designed to replace PVC films for overwrapping trayed food products where hot plate seals could be formed at 220 °F (104 °C) without undue film shrinkage, or for shrink labels where a shrink temperature of 300 °F (148.8 °C) was used. These films would not be suitable for use in PET bottle shrink label applications and steam shrink tunnel processing applications.

US 8541077, assigned to Dow Global Technologies: Discloses a five-layer film structure in which the core layer is a 100% polypropylene plastomer. The outer skins layers are polystyrene homopolymer or a blend of polystyrene homopolymer and styrene-butadiene block copolymer. Tie layers between the core and skin layers are an elastomeric styrene-ethylene-co-propylene triblock copolymer. This patent states that the disclosed films desirably demonstrate a shrinkage under normal shrink label application temperatures (for example from 110° C. to 140° C. for ROSO or from 110° C. to 130° C. for sleeve) in the preferred orientation direction (when oriented at a temperature from 120° C. to 130° C.) of 20 percent or more, preferably 30 percent or more, more preferably 40 percent or more, still more preferably 50 per cent or more, yet more preferably 60 percent or more, even yet more preferably 70 percent or more. At 105 °C, the disclosed shrink level in the direction of orientation of the films generally is in the range of < 20-35%. These films would not be suitable for PET bottle shrink label applications and steam tunnel processing applications.

US 20160107422, assigned to Seal Air: Discloses a five-layer film structure in which the base (core) layer is an ethylene/alpha-olefin copolymer (LLDPE or VLDPE), alone or in combination either with 20% ethylene-norbomene copolymer (COC) or with 10% styrene-butadiene-styrene (SBS) copolymer. The skins are styrene-butadiene block copolymers (SBC), styrene-isoprene block copolymer (SIS), SEBS, SEPS, or SEP polymers. The intermediate, or tie layers in all examples are a combination of 80-90% EMA and 10-20% SEBS.

US 7935401, assigned to Cryovac: Discloses in all examples films including a base (core) layer having a linear low density polyethylene (LLDPE) or very low density polyethylene (VLDPE) together with one or more ethylene-norbomene (COC) polymers, and skin layers including 100% PETG.

US 8092920, assigned to Dow Global Technologies: Films are produced in a blown film process. The inner (core) layer has at least one stiffening polymer selected from the group consisting of LDPE, LLDPE, HDPE or blends thereof, polypropylene random copolymer, styrene-butadiene block copolymer (SBS), polystyrene, ethylene-vinyl acetate copolymer (EVA) or ethylene-norbomene (COC) copolymer. The opposed skin layers, which may be the same or different, comprise at least one of LDPE, a blend of LDPE and LLDPE, a blend of LDPE and VLDPE, polystyrene, EVA, blends of EVA and LLDPE, COC, SBC, or polypropylene random copolymers. As indicated in the examples, where polystyrene skin layers are used, the films are designed for shrink performance in the direction of maximum orientation greater than 44% at a shrink temperature greater than 120 °C. These films would not be suitable for PET Bottle shrink label applications and steam tunnel processing applications.

US 20030068453, assigned to ExxonMobil: Skin layers of the disclosed multilayer films either are 100% of an amorphous copolyester or are blends of amorphous copolyester with acid/acrylate grafted plastomer. The core layer includes polyethylene, polypropylene, and copolymers of ethylene and one or more alphaolefins. In all the examples, the core layer is either an ethylene-octene copolymer, a blend of LLDPE (60%) and amorphous copolyester (40%) or a blend of LLDPE (50%) and amorphous copolyester (50%). In five-layer structures, the tie layers are a mixture of LLDPE and acid/acrylate graft plastomer. While the films of this disclosed invention are described as being designed for use as a shrink sleeve label, shrink performance data is provided only at 121 °C and 7 minutes of exposure, and two of the four examples only. Achieved a shrink level of 45% and 52%, respectively. This strongly suggests that these films would not be suitable for PET bottle shrink label applications and steam tunnel processing applications where high shrink levels at temperature levels ranging from 80 - 95 °C and short residence times are required.

WO2017/210403 discloses an oriented, multilayer shrink films, either clear or opaque, comprise a core layer and at least one skin layer. The core layer has a thickness greater than the thickness of the at least one skin layer. The at least one skin layer comprises at least one cyclic-olefin copolymer as the predominant component thereof. The core layer comprises a blend of a polyolefin polymer and a polybutene-1 copolymer with ethylene, the butene-1 constituting over 75% by weight of the polybutene-1 copolymer. The film has a shrinkage of at least 20% in at least one of the machine and transverse directions of formation when said film is heated to a temperature of between 80 and 100°C.

BRIEF SUMMARY OF THE INVENTION

The present invention relates to multilayer oriented shrink films according to Claim 1. The multilayer oriented shrink film includes a core or base layer, at least one skin layer and, optionally, at least one interlayer (or tie layer) between the skin and core or base layers, said skin layer being on one side of said base layer, characterized in that said skin layer comprises at least one amorphous styrene-butadiene block copolymer and said core or base layer has a thickness greater than said skin layer and includes at least one co- or terpolymer from the group consisting of polypropylene terpolymers; propylene ethylene random copolymers and propylene butene-1 random copolymers or combinations thereof. Among the propylene copolymers those with an ethylene content of 4.0-7.0 wt.-%, by weight of the copolymer, and with a butene-1 content of 7- 22 wt.-% by weight of the copolymer are most preferred,

at least one polypropylene elastomeric copolymer,

at least one polybutene-1 copolymer,

and optionally in the core layer of both a 3-layer and 5-layer structure, at least one copolymer from the group consisting of styrene-ethylene/butene-styrene triblock copolymers, styrene-ethylene/propylene-styrene triblock copolymers, styrene-ethylene/butene diblock copolymers, styrene-ethylene-propylene diblock copolymers, styrene-ethylene/propylene-styrene-ethylene/propylene tetrablock copolymers and combinations of two or more of said tetrablock, triblock and diblock copolymers.

The at least one interlayer between the amorphous styrene-butadiene block copolymer skin layer and polyolefin core layer contains polypropylene terpolymer, propylene-ethylene random copolymer, or propylene-butene-1 random copolymer and at least one copolymer from the group consisting of styrene-ethylene/butene-styrene triblock copolymers, styrene-ethylene/propylene-styrene triblock copolymers, styrene-ethylene/butene diblock copolymers, styrene-ethylene-propylene diblock copolymers, , styrene-ethylene/propylene-styrene-ethylene/propylene tetrablock copolymers and combinations of two or more of said tetrablock, triblock and diblock copolymers.

These films are useful for the manufacture of labels, in particular solvent seamed sleeve labels, which shrink, when heated at temperatures compatible with the use of a steam tunnel for heat transfer, to conform to the shape of the container. The preferred multilayer films of this invention have a density of less than 1 g/cm$^3$.

In preferred embodiments of this invention the multilayer shrink film includes a skin layer on each of the opposite sides of the core layer and optionally an interlayer on each side of the core layer between the core layer and each skin layer, characterized in that each of the skin layers includes at least one amorphous styrene-butadiene block copolymer and each optional interlayer includes at least one copolymer from the group consisting of styrene-ethylene/butene-styrene triblock copolymers, styrene-ethylene/propylene-styrene triblock copolymers, styrene-ethylene/butene diblock copolymers, styrene-ethylene-propylene diblock copolymers, styrene-ethylene/propylene-styrene-ethylene/propylene tetrablock copolymers and combinations of two or more of said tetrablock, triblock and diblock copolymers.

Preferably the composition of the skin layers on opposite sides of the core or base layer are of the same composition; including at least one amorphous styrene-butadiene block copolymer therein.

The composition of the core or base layer in a five layer structure is the same as described earlier, including the specified required and optional components.

In certain embodiments, the shrink films have a haze less than about 7%. In certain embodiments, the shrink films have a haze less than about 6%. In certain embodiments, the shrink films have a haze less than about 5%. In certain embodiments, the shrink films have a haze less than about 4%. In certain embodiments, the shrink films have a haze less than about 3%. In certain embodiments, the shrink films have a haze less than about 2%. In certain embodiments, the shrink films have a haze less than about 1%. In the most preferred embodiments the shrink films are transparent, having a haze less than 6%. However, opaque films employing a voiding agent and/or a non-voiding whitening agent therein are within the broad scope of this invention. However, the latter non-voided embodiments generally will have a density greater than 0.95 g/cm$^3$ and may have a density above 1.0 g/cm$^3$.

In the preferred embodiments of this invention the predominant film orientation of the multilayer oriented shrink films is in the transverse direction, said film having a transverse direction shrink level in excess of 50%, and more preferably in excess of 60% at 95 °C.

In the most preferred embodiments of this invention the base layer comprises a propylene-ethylene-butene terpolymer with the predominant monomer being propylene, the polybutene-1 copolymer in the base layer is a polybutene-1/ethylene copolymer with the predominant monomer being butene-1, and the polypropylene elastomeric copolymer is a semi-crystalline propylene/ethylene copolymer including over 80%, by weight, propylene.

In the most preferred embodiments of this invention the shrink film is a three-layer or five-layer film including skin layers on opposite sides of the core layer and in engagement therewith in the case of three-layer films or in engagement with intermediate tie layers between the core layer and skin layers in the case of five-layer films.

Applicant has found that combination of polypropylene terpolymer (with ethylene and butene) with polybutene-1 copolymers (with ethylene) and polypropylene elastomeric copolymers (with ethylene) and styrene block copolymers with ethylene/butene or ethylene/propylene when used in the core or base structure of a multilayer film with at least one skin layer comprising at least one amorphous polystyrene-butadiene block copolymer exhibits a very attractive balance of properties and processability. The films and/or labels made from these films have high stiffness, low natural shrink together with directional shrink at 95° C greater than 50%, haze less than 6% (in translucent/transparent embodiments) and density less than 1.0 g/cm$^3$, and a broad orientation processing window. Low density shrink films of less than 1.0 g/cm$^3$ is preferred to facilitate easy separation of the shrink labels from PET containers during recycling after use.

In addition, the films of this invention employing polystyrene skin layers have an earlier shrink initiation point and a more moderate (i.e., gradual) temperature response to shrink as compared to shrink films employing skin layers formed with cyclic olefin copolymer and glycol-modified polyethylene terephthalate. A moderate temperature response and moderate shrink tensions achieved in the shrink films of this invention are highly desirable in many shrink film applications, as better control is provided over the labeling process, a higher quality label application results, and there is a reduced tendency of label shrinkage collapsing thin walled containers.

A multilayer oriented shrink film is also described including a skin layer and a core layer, said skin layer being on one side of said base layer, wherein said skin layer comprises at least one amorphous styrene-butadiene block copolymer and said core layer has a thickness greater than said skin layer and includes, at least one polypropylene co- or terpolymer selected from the group consisting of polypropylene terpolymers with ethylene and butene-1, propylene ethylene copolymers, propylene butene-1 copolymers and combinations thereof; at least one polybutene-1 copolymer; at least one polypropylene elastomeric copolymer; at least one polymer selected from the group consisting of styrene-ethylene-co-propylene-styrene-ethylene-co-propylene tetrablock copolymers, styrene-ethylene-co-butene-styrene triblock copolymers, styrene-ethylene-co-propylene-styrene triblock copolymers, styrene-ethylene-co-butene diblock copolymers and styrene-ethylene-co-propylene diblock copolymers and combinations thereof; optionally, at least one aliphatic, hydrogenated hydrocarbon resin; optionally, a non-voiding opacifying agent and/or a voiding agent; optionally, reclaim polymer, optionally wherein said film is corona treated. A multilayer oriented shrink film is also described wherein the polypropylene co- or terpolymer in the core layer is a propylene-ethylene copolymer with the predominant monomer being propylene, or a propylene-ethylene-butene terpolymer with the predominant monomer being propylene, said polybutene-1copolymer in the base layer being a polybutene-1/ethylene copolymer with the predominant monomer being butene-1, said polypropylene elastomeric copolymer being a semi-crystalline propylene/ethylene copolymer including over 80%, by weight, propylene. A multilayer oriented shrink film is also described wherein said core layer further includes a hard resin therein. A multilayer oriented shrink film is also described including a second skin layer on a side of said base layer opposite to said one side of said base layer, wherein each of said skin layers includes at least one amorphous styrene-butadiene block copolymer. A multilayer oriented shrink film is also described including a second skin layer on a side of said base layer opposite to said one side of said base layer, said skin layers on each side of said base layer being of the same composition, wherein said skin layers include at least one amorphous styrene-butadiene block copolymer. A multilayer oriented shrink film is also described including a second skin layer on a side of said base layer opposed to said one side of said base layer, said second skin layer being of a composition different from said skin layer on said one side of said base layer. A multilayer oriented shrink film is also described including a second skin layer on a side of said base layer opposed to said one side of said base layer, wherein said second skin layer including a cyclic olefin copolymer therein. A multilayer oriented shrink film is also described wherein said film has a density of less than 1 g/cm$^3$. A a multilayer oriented shrink film is also described characterized in having a haze less than 6%. A multilayer oriented shrink film is also described wherein the predominant film orientation is in the transverse direction, said film having a transverse direction shrink level in excess of 50% at 95 °C. A multilayer oriented shrink film is also described wherein the predominant film orientation is in the transverse direction, said film having a transverse direction shrink level in excess of 60% at 95 °C. A multilayer oriented shrink film is also described wherein film is uniaxially oriented in the transverse direction, said film having a transverse direction shrink level in excess of 50% at 95 °C. A multilayer oriented shrink film is also described wherein said shrink film is a three layer film including a second skin layer on the side of the base layer opposed to said one side of said base layer. A multilayer oriented shrink film is also described wherein said skin layers and base layer being the sole layers in said film. A multilayer oriented shrink film is also described wherein a voiding agent is included in one or more of the skin layer and base layer, said shrink film being biaxially oriented. A multilayer oriented shrink film is also described wherein a voiding agent is included in one or more of the skin layer and base layer, said shrink film being uniaxially oriented.

A multilayer oriented shrink film is also described comprising: A) a core layer comprising: i) at least one polypropylene co- or terpolymer selected from the group consisting of polypropylene terpolymers with ethylene and butene-1, propylene ethylene copolymers, propylene butene-1 copolymers and combinations thereof, ii) at least one polybutene-1 copolymer, iii) at least one polypropylene elastomeric copolymer, and iv) at least one polymer selected from the group consisting of styrene-ethylene-co-propylene-styrene-ethylene-co-propylene tetrablock, styrene-ethylene-co-butene-styrene triblock copolymers, styrene-ethylene-co-propylene-styrene triblock copolymers, styrene-ethylene-co-butene diblock copolymers and styrene-ethylene-co-propylene diblock copolymers and combinations thereof; B) at least one skin layer on a side of said core layer; and wherein said at least one skin layer comprises at least one amorphous styrene-butadiene block copolymer, and wherein said core layer has a thickness greater than said at least one skin layer(s), optionally wherein said film is corona treated. A multilayer oriented shrink film is also described wherein said at least one skin layer comprises an amorphous styrene-butadiene block copolymer blend. A multilayer oriented shrink film is also described wherein said core layer comprises: about 36% to about 40% polypropylene co- or terpolymer selected from the group consisting of polypropylene terpolymers with ethylene and butene-1, propylene ethylene copolymers, propylene butene-1 copolymers and combinations thereof, about 20% to about 27% polybutene-1 copolymer, about 20% to about 33% polypropylene elastomeric copolymer, about 0% to about 20% polymer selected from the group consisting of styrene-ethylene-co-butene-styrene triblock copolymers, styrene-ethylene-co-propylene-styrene triblock copolymers, styrene-ethylene-co-butene diblock copolymers and styrene-ethylene-co-propylene diblock copolymers and combinations thereof. A multilayer oriented shrink film is also described comprising a second skin layer on a side of said core layer opposite to said one side of said core layer, wherein each of said skin layers includes at least one amorphous styrene-butadiene block copolymer. A multilayer oriented shrink film is also described comprising a second skin layer on a side of said core layer opposite to said one side of said core layer, said skin layers on each side of said core layer being of the same composition, wherein said skin layers include at least one amorphous styrene-butadiene block copolymer. A multilayer oriented shrink film is also described wherein said film has a density of less than 1 g/cm$^3$. A multilayer oriented shrink film is also described characterized in having a haze less than about 3%. A multilayer oriented shrink film is also described characterized in having a haze less than about 2%. A multilayer oriented shrink film is also described wherein the predominant film orientation is in the transverse direction, said film having a transverse direction shrink level in excess of 50% at 95°C. A multilayer oriented shrink film is also described wherein the predominant film orientation is in the transverse direction, said film having a transverse direction shrink level in excess of 60% at 95°C. A multilayer oriented shrink film is also described wherein said film is uniaxially oriented in the transverse direction, said film having a transverse direction shrink level in excess of 50% at 95°C. A multilayer oriented shrink film is also described wherein said shrink film is a three layer film comprising a second skin layer on the side of the core layer opposed to said one side of said core layer. A multilayer oriented shrink film is also described said skin layers and core layer being the sole layers in said film.

The invention provides a multilayer oriented shrink film comprising: A) a core layer comprising: i) at least one polypropylene co- or terpolymer selected from the group consisting of polypropylene terpolymers with ethylene and butene-1, propylene ethylene copolymers, propylene butene-1 copolymers and combinations thereof, ii) at least one polybutene-1 copolymer, iii) at least one polypropylene elastomeric copolymer, and iv) optionally, at least one polymer selected from the group consisting of styrene-ethylene-co-propylene-styrene-ethylene-co-propylene tetrablock, styrene-ethylene-co-butene-styrene triblock copolymers, styrene-ethylene-co-propylene-styrene triblock copolymers, styrene-ethylene-co-butene diblock copolymers and styrene-ethylene-co-propylene diblock copolymers and combinations thereof; B) at least one skin layer which is disposed upon one side of said core layer; and wherein said skin layer comprises at least one amorphous styrene-butadiene block copolymer, and one or more high styrene content polymers from the group consisting of styrene-ethylene-co-butene-styrene triblock copolymers, styrene-ethylene-co-propylene-styrene triblock copolymers, styrene-ethylene-co-butene diblock copolymers and styrene-ethylene-co-propylene diblock copolymers, wherein said core layer has a thickness greater than said at least one skin layer(s), optionally wherein said film is corona treated. A multilayer oriented shrink film is also described wherein said core layer comprises: about 36% to about 40% polypropylene co- or terpolymer selected from the group consisting of polypropylene terpolymers with ethylene and butene-1, propylene ethylene copolymers, propylene butene-1 copolymers and combinations thereof, about 20% to about 27% polybutene-1 copolymer, about 20% to about 33% polypropylene elastomeric copolymer, about 0% to about 20% polymer selected from the group consisting of styrene-ethylene-co-butene-styrene triblock copolymers, styrene-ethylene-co-propylene-styrene triblock copolymers, styrene-ethylene-co-butene diblock copolymers and styrene-ethylene-co-propylene diblock copolymers and combinations thereof. A multilayer oriented shrink film is also described wherein said at least one skin layer comprises: about 80% - about 99% amorphous styrene-butadiene block copolymer, about 1 % - about 20 % high styrene content polymers selected from the group consisting of styrene-ethylene-co-butene-styrene triblock copolymers, styrene-ethylene-co-propylene-styrene triblock copolymers, styrene-ethylene-co-butene diblock copolymers and styrene-ethylene-co-propylene diblock copolymers. A multilayer oriented shrink film is also described wherein said film has a density of less than 1 g/cm3. A multilayer oriented shrink film is also described characterized in having a haze less than 3%. A multilayer oriented shrink film is also described characterized in having a haze less than 2%. A multilayer oriented shrink film is also described characterized in having a haze less than 1%. A multilayer oriented shrink film is also described said skin layers and core layer being the sole layers in said film. A multilayer oriented shrink film is also described wherein the predominant film orientation is in the transverse direction, said film having a transverse direction shrink level in excess of 50% at 95°C. A multilayer oriented shrink film is also described wherein the predominant film orientation is in the transverse direction, said film having a transverse direction shrink level in excess of 60% at 95 °C. A multilayer oriented shrink film is also described wherein film is uniaxially oriented in the transverse direction, said film having a transverse direction shrink level in excess of 50% at 95 °C. A multilayer oriented shrink film is also described wherein said shrink film is a three layer film comprising a second skin layer on the side of the core layer opposed to said one side of said core layer. A multilayer oriented shrink film is also described wherein said shrink film is a three layer film comprising a second skin layer on the side of the core layer opposed to said one side of said core layer, wherein said second skin layer has an identical composition to said first skin layer.

A multilayer oriented shrink film is also described comprising: A) a core layer comprising: i) at least one polypropylene co- or terpolymer selected from the group consisting of polypropylene terpolymers with ethylene and butene-1, propylene ethylene copolymers, propylene butene-1 copolymers and combinations thereof, ii) at least one polybutene-1 copolymer, iii) at least one polypropylene elastomeric copolymer, and iv) optionally, at least one polymer selected from the group consisting of styrene-ethylene-co-propylene-styrene-ethylene-co-propylene tetrablock, styrene-ethylene-co-butene-styrene triblock copolymers, styrene-ethylene-co-propylene-styrene triblock copolymers, styrene-ethylene-co-butene diblock copolymers and styrene-ethylene-co-propylene diblock copolymers and combinations thereof; v) at least one aliphatic, hydrogenated hydrocarbon resin; B) at least one skin layer which is disposed upon one side of said core layer; and wherein said at least skin layer comprises at least one amorphous styrene-butadiene block copolymer, and one or more high styrene content polymers from the group consisting of styrene-ethylene-co-butene-styrene triblock copolymers, styrene-ethylene-co-propylene-styrene triblock copolymers, styrene-ethylene-co-butene diblock copolymers and styrene-ethylene-co-propylene diblock copolymers, and wherein said core layer has a thickness greater than said at least one skin layer(s), optionally wherein said film is corona treated.

A multilayer oriented shrink film is also described wherein said at least core layer comprises: about 30% to about 40% polypropylene co- or terpolymer selected from the group consisting of polypropylene terpolymers with ethylene and butene-1, propylene ethylene copolymers, propylene butene-1 copolymers and combinations thereof, about 20% to about 27% polybutene-1 copolymer, about 20% to about 33% polypropylene elastomeric copolymer, about 0% to about 20% polymer selected from the group consisting of styrene-ethylene-co-propylene-styrene-ethylene-co-propylene tetrablock, styrene-ethylene-co-butene-styrene triblock copolymers, styrene-ethylene-co-propylene-styrene triblock copolymers, styrene-ethylene-co-butene diblock copolymers and styrene-ethylene-co-propylene diblock copolymers and combinations thereof; about 1 to about 12% aliphatic, hydrogenated hydrocarbon resin. A multilayer oriented shrink film is also described wherein said at least one skin layer comprises: about 80% - about 100% amorphous styrene-butadiene block copolymer, about 0% - about 20 % high styrene content polymers selected from the group consisting of styrene-ethylene-co-butene-styrene triblock copolymers, styrene-ethylene-co-propylene-styrene triblock copolymers, styrene-ethylene-co-butene diblock copolymers and styrene-ethylene-co-propylene diblock copolymers. A multilayer oriented shrink film is also described wherein said film has a density of less than 1 g/cm3. A multilayer oriented shrink film is also described characterized in having a haze less than 7%. A multilayer oriented shrink film is also described characterized in having a haze less than 6%. A multilayer oriented shrink film is also described wherein said shrink film is a three layer film comprising a second skin layer on the side of the core layer opposed to said one side of said core layer. A multilayer oriented shrink film is also described wherein said shrink film is a three layer film comprising a second skin layer on the side of the core layer opposed to said one side of said core layer, wherein said second skin layer has an identical composition to said first skin layer. A multilayer oriented shrink film is also described said skin layers and core layer being the sole layers in said film. A multilayer oriented shrink film is also described wherein the predominant film orientation is in the transverse direction, said film having a transverse direction shrink level in excess of 50% at 95 °C. A multilayer oriented shrink film is also described wherein the predominant film orientation is in the transverse direction, said film having a transverse direction shrink level in excess of 60% at 95 °C. A multilayer oriented shrink film is also described wherein film is uniaxially oriented in the transverse direction, said film having a transverse direction shrink level in excess of 50% at 95°C.

A multilayer oriented shrink film is also described comprising: A) a core layer comprising: i) at least one polypropylene co- or terpolymer selected from the group consisting of polypropylene terpolymers with ethylene and butene-1, propylene ethylene copolymers, propylene butene-1 copolymers and combinations thereof, ii) at least one polybutene-1 copolymer, iii) at least one polypropylene elastomeric copolymer, iv) reclaim polymer, and v) optionally, a non-voiding opacifying agent and/or a voiding agent; B) at least one skin layer which is on one side of said core layer; and wherein said skin layer comprises at least one amorphous styrene-butadiene block copolymer, and wherein said core layer has a thickness greater than said at least one skin layer(s). A multilayer oriented shrink film is also described wherein said core layer comprises: about 20% to about 35% polypropylene co- or terpolymer selected from the group consisting of polypropylene terpolymers with ethylene and butene-1, propylene ethylene, copolymers, propylene butene-1 copolymers and combinations thereof, about 10% to about 25% polybutene-1 copolymer, about 10% to about 30% polypropylene elastomeric copolymer, about 10% to about 60% reclaim polymer, about 0% to about 10% of polyethylene based $TiO_2$ concentrate. A multilayer oriented shrink film is also described wherein said at least one skin layer comprises: about 80% - about 100% amorphous styrene-butadiene block copolymer, about 0% - about 20 % high styrene content polymers selected from the group consisting of styrene-ethylene-co-butene-styrene triblock copolymers, styrene-ethylene-co-propylene-styrene triblock copolymers, styrene-ethylene-co-butene diblock copolymers and styrene-ethylene-co-propylene diblock copolymers. A multilayer oriented shrink film is also described wherein the reclaim polymer is reclaim selected from the group consisting of Terpolymer, butene- ethylene copolymer, propylene-based elastomer, styrene ethylene-co-butene-styrene block copolymer, styrene-butadiene block copolymer, and combinations thereof. A multilayer oriented shrink film is also described wherein said film has a density of less than 1 g/cm$^3$. A multilayer oriented shrink film is also described characterized in having a haze less than 6%. A multilayer oriented shrink film is also described characterized in having a haze less than 5%. A multilayer oriented shrink film is also described characterized in having a haze less than 3%. A multilayer oriented shrink film is also described wherein the predominant film orientation is in the transverse direction, said film having a transverse direction shrink level in excess of 50% at 95°C. A multilayer oriented shrink film is also described wherein the predominant film orientation is in the transverse direction, said film having a transverse direction shrink level in excess of 60% at 95°C. A multilayer oriented shrink film is also described wherein film is uniaxially oriented in the transverse direction, said film having a transverse direction shrink level in excess of 50% at 95°C. A multilayer oriented shrink film is also described wherein said shrink film is a three layer film comprising a second skin layer on the side of the core layer opposed to said one side of said core layer. A multilayer oriented shrink film is also described wherein said shrink film is a three layer film comprising a second skin layer on the side of the core layer opposed to said one side of said core layer, wherein said second skin layer has an identical composition as said first skin layer. A multilayer oriented shrink film is also described said skin layers and core layer being the sole layers in said film.

A multilayer oriented shrink film is also described comprising: A) a core layer comprising: i) at least one polypropylene co- or terpolymer selected from the group consisting of polypropylene terpolymers with ethylene and butene-1, propylene ethylene copolymers, propylene butene-1 copolymers and combinations thereof, ii) at least one polybutene-1 copolymer, iii) at least one polypropylene elastomeric copolymer, and iv) optionally, at least one polymer selected from the group consisting of styrene-ethylene-co-propylene-styrene ethylene-co-propylene tetrablock, styrene-ethylene-co-butene-styrene triblock copolymers, styrene-ethylene-co-propylene-styrene triblock copolymers, styrene-ethylene-co-butene diblock copolymers and styrene-ethylene-co-propylene diblock copolymers and combinations thereof; v) optionally, at least one aliphatic, hydrogenated hydrocarbon resin; B) a first skin layer which is disposed upon one side of said core layer; and wherein said first skin layer comprises at least one amorphous styrene-butadiene block copolymer, and one or more high styrene content polymers from the group consisting of styrene-ethylene-co-butene-styrene triblock copolymers, styrene-ethylene-co-propylene-styrene triblock copolymers, styrene-ethylene-co-butene diblock copolymers and styrene-ethylene-co-propylene diblock copolymers, C) a second skin layer which is disposed on the opposite side of the core layer from said first skin layer, wherein said second skin layer comprises at least one Cyclic Olefin Copolymer; wherein said core layer has a thickness greater than said at least one skin layer(s). A multilayer oriented shrink film is also described wherein said core layer comprises: about 30% to about 40% polypropylene co- or terpolymer selected from the group consisting of polypropylene terpolymers with ethylene and butene-1, propylene ethylene copolymers, propylene butene-1 copolymers and combinations thereof, about 20% to about 27% polybutene-1 copolymer, about 20% to about 33% polypropylene elastomeric copolymer, about 0% to about 20% polymer selected from the group consisting of styrene-ethylene-co-propylene-styrene-ethylene-co-propylene tetrablock, styrene-ethylene-co-butene-styrene triblock copolymers, styrene-ethylene-co-propylene-styrene triblock copolymers, styrene-ethylene-co-butene diblock copolymers and styrene-ethylene-co-propylene diblock copolymers and combinations thereof, about 0% to about 12% aliphatic, hydrogenated hydrocarbon resin.

A multilayer oriented shrink film is also described wherein said first skin layer comprises: about 80% - about 100% amorphous styrene-butadiene block copolymer, about 0 % - about 20 % high styrene content polymers selected from the group consisting of styrene-ethylene-co-butene-styrene triblock copolymers, styrene-ethylene-co-propylene-styrene triblock copolymers, styrene-ethylene-co-butene diblock copolymers and styrene-ethylene-co-propylene diblock copolymers. A multilayer oriented shrink film is also described wherein said second skin layer comprises a cyclic olefin copolymer blend. A multilayer oriented shrink film is also described wherein said film has a density of less than 1 g/cm$^3$. A multilayer oriented shrink film is also described characterized in having a haze less than 3%. A multilayer oriented shrink film is also described characterized in having a haze less than 2%. A multilayer oriented shrink film is also described characterized in having a haze less than 1%. A multilayer oriented shrink film is also described wherein the predominant film orientation is in the transverse direction, said film having a transverse direction shrink level in excess of 50% at 95 °C. A multilayer oriented shrink film is also described wherein the predominant film orientation is in the transverse direction, said film having a transverse direction shrink level in excess of 60% at 95 °C. A multilayer oriented shrink film is also described wherein film is uniaxially oriented in the transverse direction, said film having a transverse direction shrink level in excess of 50% at 95 °C. A multilayer oriented shrink film is also described wherein said shrink film is a three layer film comprising a second skin layer on the side of the core layer opposed to said one side of said core layer. A multilayer oriented shrink film is also described wherein said skin layers and core layer being the sole layers in said film.

A multilayer oriented shrink film is also described comprising: A) a first skin layer which is disposed upon one side of said core layer; and wherein said first skin layer comprises at least one amorphous styrene-butadiene block copolymer, and optionally one or more high styrene content polymers from the group consisting of styrene-ethylene-co-butene-styrene triblock copolymers, styrene-ethylene-co-propylene-styrene triblock copolymers, styrene-ethylene-co-butene diblock copolymers and styrene-ethylene-co-propylene diblock copolymers; B) an intermediate layer between said first skin layer and said core layer, said intermediate layer comprising a blend of one or more polymers selected from the group consisting of styrene-ethylene-co-butene-styrene triblock copolymer, styrene-ethylene-co-propylene-styrene triblock copolymer, styrene-ethylene-co-butene diblock copolymer, styrene-ethylene-co-propylene diblock copolymer and at least one or more polypropylene terpolymer or copolymer; C) a core layer comprising: i) at least one polypropylene co- or terpolymer selected from the group consisting of polypropylene terpolymers with ethylene and butene-1, propylene ethylene copolymers, propylene butene-1 copolymers and combinations thereof, ii) at least one polybutene-1 copolymer, iii) optionally, at least one polypropylene elastomeric copolymer, and iv) optionally, at least one polymer selected from the group consisting of styrene-ethylene-co-propylene-styrene-ethylene-co-propylene tetrablock, styrene-ethylene-co-butene-styrene triblock copolymers, styrene-ethylene-co-propylene-styrene triblock copolymers, styrene-ethylene-co-butene diblock copolymers and styrene-ethylene-co-propylene diblock copolymers and combinations thereof; v) optionally, at least one aliphatic, hydrogenated hydrocarbon resin; D) an intermediate layer comprising a blend of one or more polymers from the group consisting of styrene-ethylene-co-butene-styrene triblock copolymer, styrene-ethylene-co-propylene-styrene triblock copolymer, styrene-ethylene-co-butene diblock copolymer, styrene-ethylene-co-propylene diblock copolymer and at least one or more polypropylene terpolymer or copolymer, E) a second skin layer which is disposed on the opposite side of the core layer from said first skin layer, wherein said second skin layer comprises at least one amorphous styrene-butadiene block copolymer, and optionally one or more high styrene content polymers from the group consisting of styrene-ethylene-co-butene-styrene triblock copolymers, styrene-ethylene-co-propylene-styrene triblock copolymers, styrene-ethylene-co-butene diblock copolymers and styrene-ethylene-co-propylene diblock copolymers; wherein said core layer has a thickness greater than said at least one skin layer(s). A multilayer oriented shrink film is also described wherein said core layer comprises: about 30% to about 40% polypropylene co- or terpolymer selected from the group consisting of polypropylene terpolymers with ethylene and butene-1, propylene ethylene copolymers, propylene butene-1 copolymers and combinations thereof; about 20% to about 27% polybutene-1 copolymer; about 20% to about 33% polypropylene elastomeric copolymer; about 0% to about 20% polymer selected from the group consisting styrene-ethylene-co-propylene-styrene-ethylene-co-propylene tetrablock, styrene-ethylene-co-butene-styrene triblock copolymers, styrene-ethylene-co-propylene-styrene triblock copolymers, styrene-ethylene-co-butene diblock copolymers and styrene-ethylene-co-propylene diblock copolymers and combinations thereof; about 0% to about 12% aliphatic, hydrogenated hydrocarbon resin. A multilayer oriented shrink film is also described wherein said first skin layer comprises: about 80% - about 100% amorphous styrene-butadiene block copolymer, about 0 % - about 20 % high styrene content polymers selected from the group consisting of styrene-ethylene-co-butene-styrene triblock copolymers, styrene-ethylene-co-propylene-styrene triblock copolymers, styrene-ethylene-co-butene diblock copolymers and styrene-ethylene-co-propylene diblock copolymers. A multilayer oriented shrink film is also described wherein said intermediate layer comprises: about 60% to about 95% of a blend of one or more polymers from the group consisting of styrene-ethylene-co-butene-styrene triblock copolymer, styrene-ethylene-co-propylene-styrene triblock copolymer, styrene-ethylene-co-butene diblock copolymer, styrene-ethylene-co-propylene diblock copolymer; and about 5% to about 40% at least one or more polypropylene terpolymer or copolymer. A multilayer oriented shrink film is also described wherein said second skin layer comprises: about 80% - about 100% amorphous styrene-butadiene block copolymer, about 0 % - about 20 % high styrene content polymers selected from the group consisting of styrene-ethylene-co-butene-styrene triblock copolymers, styrene-ethylene-co-propylene-styrene triblock copolymers, styrene-ethylene-co-butene diblock copolymers and styrene-ethylene-co-propylene diblock copolymers. A multilayer oriented shrink film is also described wherein said film has a density of less than 1 g/cm$^3$. A multilayer oriented shrink film is also described characterized in having a haze less than 3%. A multilayer oriented shrink film is also described characterized in having a haze less than 2%. A multilayer oriented shrink film is also described characterized in having a haze less than 1%. A multilayer oriented shrink film is also described wherein the predominant film orientation is in the transverse direction, said film having a transverse direction shrink level in excess of 50% at 95 °C. A multilayer oriented shrink film is also described wherein the predominant film orientation is in the transverse direction, said film having a transverse direction shrink level in excess of 60% at 95 °C. A multilayer oriented shrink film is also described wherein film is uniaxially oriented in the transverse direction, said film having a transverse direction shrink level in excess of 50% at 95°C. A multilayer oriented shrink film is also described comprising: A) a first skin layer which is disposed upon one side of said core layer; and wherein said first skin layer comprises at least one amorphous styrene-butadiene block copolymer, and optionally one or more high styrene content polymers from the group consisting of styrene-ethylene-co-butene-styrene triblock copolymers, styrene-ethylene-co-propylene-styrene triblock copolymers, styrene-ethylene-co-butene diblock copolymers and styrene-ethylene-co-propylene diblock copolymers; B) an intermediate layer between said first skin layer and said core layer, said intermediate layer comprising a blend of one or more polymers selected from the group consisting of styrene-ethylene-co-butene-styrene triblock copolymer, styrene-ethylene-co-propylene-styrene triblock copolymer, styrene-ethylene-co-butene diblock copolymer, styrene-ethylene-co-propylene diblock copolymer and at least one or more polypropylene terpolymer or copolymer; C) a core layer comprising: i) at least one polypropylene co- or terpolymer selected from the group consisting of polypropylene terpolymers with ethylene and butene-1, propylene ethylene copolymers, propylene butene-1 copolymers and combinations thereof, ii) at least one polybutene-1 copolymer, iii) at least one polypropylene elastomeric copolymer, and iv) reclaim polymer; v) optionally, a non-voiding opacifying agent and/or a voiding agent; D) an intermediate layer comprising a blend of one or more polymers from the group consisting of styrene-ethylene-co-butene-styrene triblock copolymer, styrene-ethylene-co-propylene-styrene triblock copolymer, styrene-ethylene-co-butene diblock copolymer, styrene-ethylene-co-propylene diblock copolymer and at least one or more polypropylene terpolymer or copolymer, E) a second skin layer which is disposed on the opposite side of the core layer from said first skin layer, wherein said second skin layer comprises at least one amorphous styrene-butadiene block copolymer, and optionally one or more high styrene content polymers from the group consisting of styrene-ethylene-co-butene-styrene triblock copolymers, styrene-ethylene-co-propylene-styrene triblock copolymers, styrene-ethylene-co-butene diblock copolymers and styrene-ethylene-co-propylene diblock copolymers;
wherein said core layer has a thickness greater than said at least one skin layer(s). A multilayer oriented shrink film is also described wherein said core layer comprises: about 30% to about 40% polypropylene co- or terpolymer selected from the group consisting of polypropylene terpolymers with ethylene and butene-1, propylene ethylene copolymers, propylene butene-1 copolymers and combinations thereof; about 20% to about 27% polybutene-1 copolymer; about 20% to about 33% polypropylene elastomeric copolymer; about 10% to about 60% reclaim polymer; about 0% to about 10% of polyethylene based TiO$_2$ concentrate. A multilayer oriented shrink film is also described wherein the reclaim polymer is reclaim selected from the group consisting of Terpolymer, butene- ethylene copolymer, propylene-based elastomer, styrene ethylene-co-butene-styrene block copolymer, styrene-butadiene block copolymer, and combinations thereof. A multilayer oriented shrink film is also described wherein said first skin layer comprises: about 80% - about 100% amorphous styrene-butadiene block copolymer; about 0 % to about 20 % high styrene content polymers selected from the group consisting of styrene-ethylene-co-butene-styrene triblock copolymers, styrene-ethylene-co-propylene-styrene triblock copolymers, styrene-ethylene-co-butene diblock copolymers and styrene-ethylene-co-propylene diblock copolymers. A multilayer oriented shrink film is also described wherein said intermediate layer comprises: about 60% to about 95% of a blend of one or more polymers from the group consisting of styrene-ethylene-co-butene-styrene triblock copolymer, styrene-ethylene-co-propylene-styrene triblock copolymer, styrene-ethylene-co-butene diblock copolymer, styrene-ethylene-co-propylene diblock copolymer; and about 5% to about 40% at least one or more polypropylene terpolymer or copolymer. A multilayer oriented shrink film is also described wherein said second skin layer comprises: about 80% - about 100% amorphous styrene-butadiene block copolymer; about 0 % - about 20 % high styrene content polymers selected from the group consisting of styrene-ethylene-co-butene-styrene triblock copolymers, styrene-ethylene-co-propylene-styrene triblock copolymers, styrene-ethylene-co-butene diblock copolymers and styrene-ethylene-co-propylene diblock copolymers. A multilayer oriented shrink film is also described wherein said film has a density of less than 1 g/cm$^3$. A multilayer oriented shrink film is also described characterized in having a haze less than 3%. A multilayer oriented shrink film is also described characterized in having a haze less than 2%. A multilayer oriented shrink film is also described characterized in having a haze less than 1%. A multilayer oriented shrink film is also described wherein the predominant film orientation is in the transverse direction, said film having a transverse direction shrink level in excess of 50% at 95°C. A multilayer oriented shrink film is also described wherein the predominant film orientation is in the transverse direction, said film having a transverse direction shrink level in excess of 60% at 95°C. A multilayer oriented shrink film is also described wherein film is uniaxially oriented in the transverse direction, said film having a transverse direction shrink level in excess of 50% at 95°C. A method of making the multilayer oriented shrink film is also described as disclosed herein.

A process of seaming a polyolefin based shrink film is also described, the process comprising: providing a polyolefin based shrink film comprising two skin layers, wherein at least one skin layer comprises at least one styrene copolymer; forming a sleeve with said polyolefin based shrink film; providing a seaming solvent comprising: at least one terpene component; at least one ether component selected from the group consisting of a straight chain ether, a branched chain ether, a cyclic ether, a substituted cyclic ether, a cyclic diether, a substituted cyclic diether, and combinations thereof; and at least one ketone components selected from the group consisting of a straight chain ketone, a branched chain ketone, a cyclic ketone, a substituted cyclic ketone, and combinations thereof; applying the seaming solvent, thereby forming a seam. The seaming solvent comprises: about 40% to about 60% at least one terpene; about 20% to about 40% at least one ether component; about 10% to about 40% at least one ketone component. A process is also described wherein said seaming solvent comprises alpha-Pinene as the at least one terpene component. A process is also described wherein said seaming solvent comprises alpha-Pinene, Cyclohexanone, and 1,3-Dioxolane.

## Definitions and Description of the Test Methods

Unless specified otherwise the following terms shall have the specified meanings set forth below:

"Olefin polymer" means a homopolymer, copolymer or terpolymer in which all of the monomer units in such polymers are olefins.

"Propylene polymer" means a propylene homopolymer, or a copolymer or a terpolymer in which the predominant monomer component by weight is propylene.

"Propylene terpolymer" or "polypropylene terpolymer" means a propylene, ethylene, butene terpolymer in which propylene is the predominant monomer unit by weight.

"Propylene ethylene copolymer" or "polypropylene ethylene copolymer" and "propylene butene-1 copolymer" or "polypropylene butene-1 copolymer" means propylene ethylene or propylene butene-1 copolymer in which propylene is the predominant monomer unit by weight.

"Polypropylene homopolymer"- includes, in addition to a homopolymer, a polypropylene ethylene copolymer in which the percentage of ethylene is so little that it does not adversely affect the crystallinity or other properties of the propylene homopolymer.

These copolymers are referred to as "minirandom" copolymers and have a percentage of ethylene, by weight of the copolymer, of 1% or less.

"MFR" is measured according to ASTM D1238. Temperature in °C and applied weight in kg are reported in the format MFR (temperature / weight), i.e. MFR (230/2.16).

The thermal properties have been determined by "DSC"or differential scanning calorimetry, taking the melting temperature from 2nd heating and crystallization temperature using a heating and cooling rate of 10 K/min between -50 and 250 °C.

"Percent shrinkage" in referring to the shrinkage of a film or a label formed from such film is calculated in accordance with the following formula:

$$\frac{(\text{Dimension prior to shrinkage} - \text{Dimension after shrinkage}) \times 100}{\text{Dimension prior to shrinkage}}$$

"Haze" is reported as a percentage and is determined in accordance with ASTM D1003 test method.

"Density" of the film or label formed therefrom is determined by the displacement procedure of ASTM D792 test method.

"Flexural Stiffness", or "Flex Stiffness", measures the stiffness or bending resistance of plastic films using an MTS/Sintech Q-Test Model QT-5 or similar instrument, a 2N (200g) load cell, a triangular shaped stirrup attached to the load cell and a film holding fixture with a 1 inch wide channel which holds the film in the form of an arc.. Film sample length is 4 inches with width between 1 and 4 inches. Crosshead speed is 12 inches/min with maximum compressive force required to bend the film sample at the center of the arc being measured. Results are reported as grams per inch width. (peak grams divided by sample width in inches).

"Gloss" of the film or label formed therefrom is determined in accordance with ASTM 2457 test method. "Gloss in" refers to the gloss of the inside surface of the produced mill roll and "gloss out" refers to the gloss of the outside surface of the produced mill roll.

Opacity of the film or label formed therefrom is determined in accordance with TAPPI T425 test method.

"MD" and "TD" refer to the machine direction and the transverse direction in the manufacturing process, respectively.

"MD Gurley stiffness" of the film or label formed therefrom was determined in accordance with ASTM D6125 test method.

"Blocking" is a test to determine the blocking tendency of two layers or sheets of a film brought into contact under high pressure as expected to occur during winding, handling, shipment or warehousing... This method consists of placing two sheets of film surfaces together in a jig with inside against outside surfaces and applying 150 psi of compression for 24 hours at room temperature or 3 hours at 35 °C, and then determining the force required to separate them. Peak and peel average values are reported as grams/inch of width.

"Pin Puncture" measures the puncture resistance of plastic films using an MTS/Sintech Q-Test Model QT-5 or similar instrument, a 250N (50 lb.) load cell, a puncture resistance test adapter in the lower jaw and a 1 inch specimen grip in the upper load cell. Crosshead speed is 12 inches/min with the force required to puncture the film sample being measured. Results are reported as grams of force.

"Measured Thickness" is determined by cross-section microtoming a thin slice of the film and viewing the cross-section under a scanning electron microscope with a calibrated image scale to determine individual layer thicknesses of the multilayer film.

"TD shrink tension" of the film or label formed therefrom is determined in accordance with ASTM D2838 test method.

"MD and TD shrink" is determined in hot oil as a function of temperature in accordance with ASTM D1204 test method.

"Natural shrink" of the film is the unconstrained % shrink of a film sample after exposure to a prescribed temperature after a defined period of time. As described in the following examples, sample hand sheets, typically 8.5 inches (21.6 cm) by 11 inches (27.9 cm) are cut from the roll in the TD direction. The sample is placed without constraints in a hot air oven set at the prescribed temperatures (typically 30 °C, 35 °C, 40°C, and 45°C) for 24 hours. Sample dimensions in the MD and TD direction are measured before and after heat exposure and the percentage shrink is calculated from the change in the measured dimensions.

"Room Temperature (RT) Coefficient of Friction (COF)" of the film or label formed therefrom is determined in accordance with ASTM D1894 test method.

"Yield" is the coverage in square inches/pound (in.$^2$/lb.) and is determined in accordance with ASTM D4321 test method.

"Uniaxial" in specifying the direction of orientation of films of this invention refers to films in which the draw ratio in one direction (MD or TD) is less than 1.4x and the draw ratio in the opposed, or orthogonal direction is greater than 2.0x. In such a film the uniaxial direction of orientation is the direction in which the film is stretched more than 2.0x.

"Biaxial" in specifying the direction of orientation of films of this invention refers to films in which the draw ratio in both the MD and TD directions is greater than 2.0x.

"Calculated Thickness ($\mu$m) = 702,538/ (yield*density), where yield units are in$^2$/lb. and density units are g/cm$^3$.

As used herein, the term "reclaim" refers to recovered film waste generated during the manufacturing process as a result of edge trim or out of spec film which is consolidated (often by melt pelletization and homogenization) and incorporated back into one or more layers of the film.

BRIEF DESCRIPTION OF THE DRAWINGS

Figure 1 is a graph showing transverse direction shrink profile with temperature;

Figure 2 is a graph showing transverse direction shrink at various temperatures in relation to film density;

Figure 3 is a graph showing flex and Gurley stiffness as a function of film thickness;

Figure 4 is a graph showing the UV-VIS Spectra of PS skin films;

Figure 5 is a graph showing the relationship between MD flex stiffness and film thickness for shrink films including polystyrene (PS) skins and commercial glycol modified polyethylene terephthalate (PETG) films; and

Figure 6 is a graph showing the relationship between MD flexes stiffness and film yield for shrink films including polystyrene (PS) skins and commercial glycol modified polyethylene terephthalate (PETG) films.

DETAILED DESCRIPTION OF THE INVENTION

The following describes a number of embodiments of this invention. One embodiment, identifying optional components in the core or base layer is depicted below.

Corona Treatment (optional)

| ~4-12 $\mu$m | - skin layer | 65-100% | Styrolux S / 0-35% Styrolux T SBC |
|---|---|---|---|
| 32-45$\mu$m | - core layer | 20-40% | LYB Adsyl 6C30F Terpolymer |
| copolymer | | 10-27% | LYB Koattro DP8310M Polybutene-1 |
| | | 10-33% | Vistamaxx 3980FL |
| Block | | 5-20% | Kraton G SEPSEP or SEBS or SEP or SEPS Copolymers |
| ~4-12 $\mu$m | - skin layer | 65-100% | Styrolux S / 0-35% Styrolux T SBC |

Corona Treatment (optional)

**Polymers**

**Styrene Polymers** - Styrene-Butadiene-Styrene block copolymers are commercially available from Ineos Styrolution America, LLC, Aurora, IL or its distributor, PolyOne Corporation, Littleton, MA. General purpose polystyrene homopolymers are commercially available from American Styrenics, The Woodlands, TX or its distributor PolyOne Corporation, Littleton, MA. The following is a non-exclusive listing of exemplary styrene polymers that are, or that may be usable in the skin layers of the films of this invention:
Styrolux S, Styrene-Butadiene-Styrene block copolymer (S/B/S) with a specific gravity of 1.02 g/cm$^3$, an MFR (200 / 5) = 10 dg/min and a Vicat softening temperature of 72 °C.

Styrolux T, styrene-butadiene block copolymer (SBC) with a specific gravity of 1.02 g/cm$^3$, an MFR (200 / 5) = 10 dg/min and a Vicat softening temperature of 67 °C.

K-resin KR-52, a styrene-butadiene block copolymer (SBC) with a specific gravity of 1.01 g/cm$^3$, an MFR (200

/ 5) = 9 dg/min and a Vicat softening temperature of 61 °C. It is also available from Ineos Styrolution America, and can be used in place of Styrolux T, in combination with Styrolux S and Styrolux T, or can be used alone.

EA3400, is a general purpose polystyrene homopolymer with a specific gravity of 1.04 g/cm³, an MFR (200 / 5) = 9 dg/min and a Vicat softening temperature of 99 °C. This homopolymer is usable in combination with Styrolux T or K-resin KR-52 in the skin layer to provide a balance of stiffness and shrink performance. Preferably EA3400 is present in the range of from about 1% to about 70% by weight of the combination in the skin.

**Polypropylene Terpolymer and Copolymers** - Polypropylene terpolymers are commercially available from LyondellBasell, Houston, TX under the trade name Adsyl. The following is a non-exclusive listing of exemplary polypropylene terpolymers that are, or that may be usable in the core layers of the films in this invention:

LyondellBasell Adsyl 6C30F is a Ziegler-Natta catalyzed random terpolymers of propylene, ethylene, and butene with the propylene being the predominant component, by weight, of the terpolymer. Adsyl 6C30F has a MFR (230 / 2.16) of 5.5 dg/min, a SIT of 98 °C, and a DSC peak melting point of 126° C.

Adsyl 7410XCP also is a terpolymer of propylene, ethylene and butene, with propylene being the predominant component, by weight, and which has a MFR (230 / 2.16) of 5.5 dg/min, a SIT of 75 °C, and a DSC peak melting point of 125 °C and Adsyl 5C30F with a melt flow rate of 5.5 dg/min (230 °C, 2.16 kg), a SIT of 105 °C, and a DSC peak melting point of 132 °C.

Polypropylene copolymers with ethylene or butene-1 as co-monomers are commercially available from a number of sources, including LyondellBasell in Houston, TX, Ineos Olefins & Polymers USA headquartered in League City, TX, Braskem America Inc. headquartered in Philadelphia, PA, Mitsui Chemicals America in New York, New York., and Total USA headquartered in Houston, TX. The following is a non-exclusive listing of exemplary polypropylene copolymers that are, or that may be usable in the core layers in the films of this invention:

Ineos Eltex P KS407 is a copolymer of propylene and about 4.0% ethylene, with propylene being the predominant component, by weight, and which has a MFR (230 / 2.16) of 5 dg/min, and a DSC peak melting point of 134 °C.

Braskem DS6D82 is a copolymer of propylene and about 4.0% ethylene, with propylene being the predominant component, by weight, and which has a MFR (230 / 2.16) of 7 dg/min, and a DSC peak melting point of 134 °C.

Total 8573 is a copolymer of propylene and ethylene with propylene being the predominant component, by weight; having a MFR (230 / 2.16) of 6.8 dg/min and having a DSC peak melting point of approximately 135°C.

LyondellBasell Adsyl 7416 XCP is a copolymer of propylene and ethylene with propylene being the predominant component, by weight; having a MFR (230 / 2.16) of 7.5 dg/min and having a DSC peak melting point of approximately 133°C.

LyondellBasell Adsyl 7415 XCP is a copolymer of propylene and ethylene with propylene being the predominant component, by weight, having a MFR (230 / 2.16) of 0.9 dg/min and having a DSC peak melting point of approximately 133°C.

LyondellBasell Adsyl 3C30F HP is a copolymer of propylene and butene-1 with the propylene being the predominant component, by weight, of the copolymer and which has a MFR (230 / 2.16) of 5.5 dg/min, and a DSC peak melting point of 137° C.

Mitsui Chemicals Tafmer XM-7090 is a copolymer of propylene and butene-1 with the propylene being the predominant component, by weight, of the copolymer and which has a melt flow rate of 7.0 dg/min (230 °C, 2.16kg), and a DSC peak melting point of 98 °C. Mitsui Chemicals Tafmer XM-7080 is a copolymer of propylene and butene-1 with the propylene being the predominant component, by weight, of the copolymer and which has a melt flow rate of 7.0 dg/min (230 °C, 2.16kg), and a DSC peak melting point of 83 °C. Mitsui Chemicals Tafmer XM-7070 is a copolymer of propylene and butene-1 with the propylene being the predominant component, by weight, of the copolymer and which has a melt flow rate of 7.0 dg/min (230 °C, 2.16kg), and a DSC peak melting point of 75 °C. These copolymers is available from Mitsui Chemicals America in New York, New York.

Polypropylene terpolymers and copolymers are primary components of the core and provide high clarity and are a contributing factor to high shrink performance within the temperature range requirement of heat shrink label applications (90 - 100° C). Reference to the polypropylene terpolymers and copolymers being the "primary component" means that the percentage by weight of these polymers combined is greater than the percentage, by weight of any of the other components in the core.

**Polybutene-1 Copolymer** - Polybutene-1 copolymers are commercially available from LyondellBasell, Houston, TX under the trade names Koattro and Toppyl. LyondellBasell Koattro DP8310M and Toppyl DP8220M are Polybutene-1 copolymers with ethylene.

Koattro DP8310M has a MFR (190 / 2.16) of 3.5 dg/min, a melting point of 94 °C, and a density of 0.897 g/cc, and is characterized as having a high ethylene content. In this copolymer the ethylene content is less than 50% by weight thereof, and most preferably is less than 15% by weight.

Toppyl DP8220M has a MFR (190 / 2.16) of 2.5 dg/min, a melting point of 97°C, and a density of 0.901 g/cc and is characterized as having a medium ethylene content. In this copolymer the ethylene content is less than 50 by weight, and most preferably is less than 15% by weight. This does have a lower ethylene content than Koattro DP8310M, identified above.

Polybutene-1 copolymer is an important component of the core; constituting a major factor to high shrink performance within the temperature range requirement of heat shrink label applications (90 - 100° C).

**Vistamaxx and Versify Copolymers** - Propylene-based polyolefin elastomers (POE's) are commercially available from ExxonMobil Chemical Company under the trade name Vistamaxx or Dow Chemical Company under the trade name Versify.

Composition and structure: These POE's are semi-crystalline copolymers of propylene and ethylene with high propylene levels (>80 wt. %) with isotactic stereochemistry. Crystallinity is modulated by the ethylene content to 5-45% crystallinity complementary to a large amorphous fraction. These POE's also have the following properties: a narrow Molecular Weight Distribution (MWD), a MFR (230 / 2.16) in the range of 2 to 25 g/10min, a density in the range of 0.863 to 0.891 g/cm$^3$, a Glass Transition Temperature Tg in the range of 5 to -31°F (-15 to -35°C) and a Melting Range: of 122 to 248°F (50 to 120°C) and higher.

Vistamaxx 3980FL: MFR (190 / 2.16)of 3.2 dg/min, ethylene content of 9%, density of 0.879 g/cc, and Vicat softening point of 76.7 °C

Versify 3000: MFR (230 / 2.16)of 8 dg/min, density of 0.88 g/cc, melting point of 108 °C, crystallinity = 44%, and Vicat softening point of 52 °C.

The propylene based POE, like the polybutene-1 copolymer, is an important component of the core layer; contributing to the desired, high shrink performance within the temperature range requirement for heat shrink label applications (90 - 100° C).

**Styrene Block Copolymers (S-E/B-S and S-E/P)** - Elastomeric Styrene block copolymers (SBC) with triblock styrene-ethylene-co-butene-styrene or styrene-ethylene-co-propylene-styrene or diblock styrene-ethylene-co-butene or styrene-ethylene-co-propylene structures which are used in the core layer of the films of this invention are commercially available from Kraton Corporation, Houston TY or its distributor Univar Solutions, Downers Grove, Illinois. Other Styrene block copolymers considered to be usable in this invention, and identified hereinafter, are commercially available from Kuraray Elastomer Division of Kuraray Americas, Inc., Houston, TX and Asahi Kasei, Tokyo, Japan, or its distributor Marubeni Specialty Chemicals Inc., White Plains, NY. The elastomeric styrene block copolymers are present in the core together with the Propylene-based elastomer. The core can include one or more elastomeric styrene block copolymers in which the "rubbery block" composition is ethylene-butene or ethylene-propylene. These elastomeric materials have a specific gravity in the range of 0.89 to 0.93 g.cm$^3$, a styrene content of 12 to 40%, and an ethylene-butene or ethylene-propylene copolymer content of 60-88%, by weight.

Suitable Kraton elastomeric styrene block copolymers include:

Kraton G1645: Styrene-ethylene-co-butene-Styrene triblock elastomer with 12.5% styrene content, MFR (230 / 2.16) = 3.3 dg/min, and ethylene-co-butene block Tg= - 42.

Kraton G1652: Styrene-ethylene-co-butene-Styrene triblock elastomer with 30% styrene content, MFR (230 / 2.16) = 5 dg/min, and a specific gravity of 0.91 g/cm$^3$.

Kraton G1643: Styrene-ethylene-co-butene-Styrene triblock elastomer with 20% styrene content, MFR (230 / 2.16) = 19 dg/min, and a specific gravity of 0.90.

Kraton G1657: Styrene-ethylene-co-butene-Styrene triblock (70%)/Styrene-ethylene-co-butene diblock (30%) with 13% styrene content, MFR (230 / 5) = 22, and a specific gravity of 0.90 g/cm$^3$.

Kraton G1726: Styrene-ethylene-co-butene-Styrene triblock (30%)/Styrene-ethylene-co-butene diblock (70%) with 30% styrene content, MFR (190 / 2.16) = 19, and a specific gravity of 0.91 g/cm$^3$.

Kraton G1730: Styrene-ethylene-co-propylene-styrene-ethylene-co-propylene tetrablock elastomer with 21% styrene content, MFR (230 / 5) = 13 dg/min, and a specific gravity of 0.90 g/cm$^3$.

Kraton G1701: Styrene-ethylene-co-propylene diblock elastomer with 37% styrene content, MFR (230 / 5) = 1 dg/min, and a specific gravity of 0.92 g/cm$^3$.

Kraton G1702: Styrene-ethylene-co-propylene diblock elastomer with 28% styrene content, MFR (230 / 5) < 1 dg/min, and a specific gravity of 0.91 g/cm$^3$.

Elastomeric Styrene block copolymers (SBC) are also available from Kuraray Elastomer Division of Kuraray Americas, Inc., Houston, TX under the tradename SEPTON. Suitable SEPTON elastomer grades would include:

SEPTON 2063: Styrene - ethylene-co-propylene-Styrene triblock elastomer with 13% styrene content, MFR (230 / 2.16) = 7 dg/min.

SEPTON 2004F: Styrene - ethylene-co-propylene-Styrene triblock elastomer with 18% styrene content, MFR (230 / 2.16) = 5 dg/min

SEPTON 2002: Styrene - ethylene-co-propylene-Styrene triblock elastomer with 30% styrene content, MFR (230 / 2.16) = 70 dg/min.

Elastomeric Styrene block copolymers (SBC) are also available from Asahi Kasei, Tokyo, Japan or its distributor Marubeni Specialty Chemicals Inc., White Plains, NY. under the tradename Tuftec.

Tuftec P1500 SEBS with a specific gravity = 0.91 g/cm$^3$, a PS content = 30%, and a MFR (190/2.16) = 4.0.

## Processing

Manufacturing of the multilayer oriented shrink film according to this invention can be carried out on a typical tenter frame BOPP line, however, it requires process conditions that are different from those used for making other BOPP label or packaging films. So the cast film is much thinner and sensitive to the exact width of the die lip gap, MD orientation is minimal (less than 1.4X at 80-90 °C), and TD orientation is fairly cold (7X to 8.5X at 90 - 105 °C). The essentially uniaxial TD-only oriented film is then wound up on a bobbin.

Manufacturing MD shrink films in accordance with this invention can be carried out in a manner known to those skilled in the art. For example, a multi-layer, relatively thick cast film is co-extruded through a flat film die. The cast film is then quenched or cooled on a chill roll or series of stacked casting rolls. The cooled cast film then is directed into a MD orientation unit where it traverses a series of heated rolls. The reheated cast film is then stretched or oriented up to 10 times or more on smaller diameter rolls rotating at progressively higher speeds. The essentially uniaxially, MD only oriented film is then wound up on a bobbin.

## Examples

In a first embodiment (Examples 1-5) three layer shrink films include opposed skin layers comprising one or more styrene-butadiene block copolymers and a core layer. The core layer optionally includes one or more styrene-ethylene-co-propylene-styrene-ethylene-co-propylene tetrablock, styrene-ethylene-co-butene-styrene or styrene-ethylene-co-propylene-styrene triblock or styrene-ethylene-co-butene or styrene-ethylene-co-propylene diblock copolymers or combinations therein, in combination with a propylene-ethylene-butene terpolymer, a butene-ethylene copolymer and a propylene-based elastomeric polymer. A representative film structure illustrating this embodiment is shown below:

**Corona Treatment (optional)**

| ~4-12 μm | skin layer | 60-100% | Styrolux S |
| | | 0-40% | Styrolux T |
| 32-45 μm copolymer | core layer | 36 - 40% | LYB Adsyl 6C30F Terpolymer |
| | | 20 - 27% | LYB Koattro DP8310M Polybutene-1 |
| | | 20 - 33% | Vistamaxx 3980FL or Versify 3000 |
| SEB | | 0 - 20% | Kraton G SEPSEP or SEBS or SEPS or SEP or Block Copolymers |
| ~4-12 μm | skin layer | 60-100% | Styrolux S |
| | | 0-40% | Styrolux T |

**Corona Treatment (optional)**

**Example 1**

A three layer film, identified as Example 1, comprising a core layer and opposed skin layers contiguous with the opposite faces of the core layer was coextruded, cast on a sequence of two chill rolls at 40 °C, stretched in machine direction (MD) 1.2X at 80 °C, then stretched in a tenter frame at 95 °C, cooled and wound up as described above. The exact formulation and physical properties are summarized in Tables 1 and 2. The core layer included Adsyl 6C30F $C_3C_2C_4$ terpolymer in combination with Koattro DP8310M $C_4C_2$ copolymer, Vistamaxx 3980FL $C_3C_2$ copolymer, and Kraton G1645 styrene-ethylene-co-butene-styrene triblock copolymer. Both skin layers included a blend of Styrolux S and Styrolux T styrene-butadiene block copolymers.

**Table 1.**

| Film Property | | Unit of Measure | Example 1. Three Layer Symmetrical Film Styrolux S/ Styrolux T Skins |
|---|---|---|---|
| Skin Composition | | | 65% Styrolux S / 35% Styrolux T |
| Core Composition | | | 36% Adsyl 6C30F / 24% Koattro DP8310M / 20% Vistamaxx 3980FL / 20% Kraton G1645 |
| Yield | | in$^2$/lb | 14,193 |
| Density | | g/cm$^3$ | 0.916 |
| Film Thickness (calculated) | | microns | 54 |
| Skin Thickness (measured) | | microns | 7.3 |
| Haze | | % | 4.3 |
| Blocking | | | |
| | RT, 150 psi, 24 hrs | | No Blocking |
| | 35° C, 150 psi, 3 hrs | | No Blocking |
| Gurley Stiffness MD/TD | | | 11.9 / 18.8 |
| Flex Stiffness MD/TD | | g/in | 3.6 / 4.2 |
| COF | | | |
| | In/In | | 0.56 / 0.54 |
| | Out/Out | | 0.51 / 0.46 |
| | In/Out | | 0.48 / 0.47 |

The three layer structure of Example 1 with skins consisting of a blend of two styrene block copolymers (Styrolux T and Styrolux S) provides an attractive balance of optical properties, floatability, stiffness, and the absence of blocking under typical storage conditions. TD shrink performance of this three layer structure is also very good with shrink initiation slightly above 60 °C and shrink levels above 50% at temperatures at or above 90 °C, as illustrated in Table 2 below.

**Table 2.**

| Film Property | Unit of Measure | Example 1. Three Layer Symmetrical Film Styrolux S/Styrolux T Skins |
|---|---|---|
| Skin Composition | | 65% Styrolux S / 35% Styrolux T |
| Core Composition | | 36% Adsyl 6C30F /24% Koattro DP8310M / 20% Vistamaxx 3980FL / 20% Kraton G1645 |
| TD Shrink | | |
| 60° C | % | 0 |
| 65° C | % | 5 |
| 70° C | % | 16 |
| 75° C | % | 28 |
| 80° C | % | 36 |
| 85° C | % | 45 |

(continued)

| Film Property | Unit of Measure | Example 1. Three Layer Symmetrical Film Styrolux S/Styrolux T Skins |
|---|---|---|
| 90° C | % | 51 |
| 95° C | % | 59 |
| 100° C | % | 64 |
| 105° C | % | 67 |

## Example 2

Additional three layer structures having varying skin and film thickness were fabricated by coextrusion, cast on a sequence of two chill rolls at 40 °C, stretched in machine direction (MD) 1.2X at 80 °C, then stretched in a tenter frame at 95 °C, cooled and wound up as described above. The three layer structures each including two component styrene block copolymer symmetrical skins and a four component elastomeric core. These latter structures (6 in number), as a group, are identified as Example 2, and the composition and properties of these six structures are described in greater detail in Table 3 below.

**Table 3.**

| Film Property | Unit of Measure | Example 2. Three Layer Symmetrical Styrolux S/Styrolux T Skins | | | | | |
|---|---|---|---|---|---|---|---|
| Skin Composition | | 65% Styrolux S / 35% Styrolux T | | | | | |
| Core Composition | | 36% Adsyl 6C30F / 24% Koattro DP8310M / 20% Vistamaxx 3980FL / 20% Kraton G1645 | | | | | |
| Yield | in$^2$/lb | 16,866 | 16,249 | 14,949 | 13,206 | 12,735 | 12,155 |
| Density | g/cm$^3$ | 0.944 | 0.924 | 0.924 | 0.935 | 0.927 | 0.940 |
| Film Thickness (calculated) | microns | 44 | 47 | 51 | 57 | 59 | 61 |
| Skin Thickness (measured) | microns | 6.4 | 5.8 | 8.8 | 9.9 | 7.9 | 9.8 |
| Haze | % | 1.9 | 2.1 | 3.0 | 3.1 | 2.8 | 2.5 |
| 45° Gloss - IN | gu | >100 | >100 | >100 | >100 | >100 | >100 |
| 45° Gloss - OUT | gu | >100 | >100 | >100 | >100 | >100 | >100 |
| Blocking | | | | | | | |
| RT, 150 psi, 24 hrs | g/in | No blocking | | | | | |
| 35°C, 150 psi, 3 hrs | g/in | No blocking | | | | | |
| Gurley Stiffness MD/TD | | 4.3 / --- | 4.6 / 5.8 | 8.1 / 8.0 | 12.3 / 12.7 | 9.6 / 10.1 | 11.3 / 18.2 |
| Flex Stiffness MD/TD | g/in | 1.8 / 2.3 | 2.4 / 2.8 | 3.0 / 3.7 | 4.8 / 5.5 | 4.5 / 5.5 | 5.7 / 6.8 |
| PIN Puncture | g | --- | --- | --- | 1356 | --- | 1283 |
| COF In/In | | --- | --- | --- | 0.52 / 0.49 | --- | 0.51 / 0.49 |
| Out/Out | | --- | --- | --- | 0.51 / 0.49 | --- | 0.53 / 0.50 |
| In/Out | | --- | --- | --- | | --- | |

(continued)

| Film Property | Unit of Measure | Example 2. Three Layer Symmetrical Styrolux S/Styrolux T Skins | | | | | |
|---|---|---|---|---|---|---|---|
| | | | | | 0.49 / 0.46 | | 0.50 / 0.50 |

The six structures of Example 2 also possessed a very attractive balance of optical properties, floatability, and stiffness with the absence of blocking under typical storage conditions. Despite the almost uniaxial nature of orientation in these films of Example 2 (MD=1.2X, TD=7.4X) the stiffness performance of the films in both directions was surprisingly well balanced in both Gurley and Flex Stiffness tests. As expected, the stiffness of the film was determined to be a strong function of overall film thickness.

As illustrated in Table 4 below, a very consistent and predictable shrink performance also was obtained in Example 2, independent of overall thickness or skin thickness of the film. Specifically the TD shrink level was in the low to mid 60% range in the 90 °C to 95 °C temperature range for all of the six films. The films of Example 2 all had a very moderate Shrink Tension force, and meaningful TD shrink initiation occurred at a temperature above 60 °C.

**Table 4.**

| Film Property | Unit of Measure | Example 2. Three Layer Symmetrical Styrolux S/Styrolux T Skins | | | | | |
|---|---|---|---|---|---|---|---|
| Skin Composition | | 65% Styrolux S / 35% Styrolux T | | | | | |
| Core Composition | | 36% Adsyl 6C30F / 24% Koattro DP8310M / 20% Vistamaxx 3980FL /20% Kraton G1645 | | | | | |
| TD Shrink | | | | | | | |
| 60° C | % | 1 | 2 | 1 | 1 | 1 | 1 |
| 65° C | % | 10 | 11 | 10 | 10 | 10 | 10 |
| 70° C | % | 21 | 23 | 23 | 23 | 23 | 22 |
| 75° C | % | 34 | 33 | 36 | 36 | 36 | 34 |
| 80° C | % | 43 | 43 | 44 | 45 | 46 | 44 |
| 85° C | % | 51 | 51 | 51 | 52 | 52 | 52 |
| 90° C | % | 60 | 59 | 58 | 58 | 60 | 60 |
| 95° C | % | 62 | 63 | 62 | 64 | 64 | 63 |
| 100° C | % | 67 | 68 | 67 | 68 | 68 | 68 |
| 105° C | % | 71 | 70 | 70 | 71 | 71 | 71 |
| Shrink Tension TD | | | | | | | |
| 80° C | grams | --- | --- | --- | --- | 246 | 360 |
| 85° C | grams | --- | --- | --- | --- | 287 | 354 |
| 90° C | grams | --- | --- | --- | --- | 272 | 338 |
| 95° C | grams | --- | --- | --- | --- | 285 | 346 |
| 100° C | grams | --- | --- | --- | --- | 297 | 377 |
| Natural Shrink MD/TD | | | | | | | |
| 30° C | % | -0.5 / 0.0 | --- | --- | -0.5 / 0.0 | --- | -0.5 / 0.0 |
| 35° C | % | -0.5 / 1.0 | --- | --- | -0.3 / 0.8 | --- | -0.5 / 0.8 |
| 40° C | % | -0.5 / 4.0 | --- | --- | -0.5 / 4.0 | --- | -0.3 / 3.8 |
| 45° C | % | -0.5 / 7.7 | --- | --- | 0.0 / 7.5 | --- | 0.0 / 7.1 |

A comparison of the TD shrink profiles of a film with polystyrene skins (designated PS TDS), a film with PETG skins (designated PETG TDS) and a film with COC skins (designated COC TDS) is shown in Figure 1. The values for the film with COC skins are average values from samples of multiple rolls of commercial film. The values for films with PETG skins and polystyrene skins are from a single sample of each film that was considered to reasonably represent the behavior of that film.

As can be observed in Figure 1, the film with polystyrene skins in accordance with this invention had the earliest shrink initiation point and a more moderate (i.e., gradual) temperature response as compared to the COC and PETG based film. As can be seen in Figure 1, at the target shrink temperature of 95 °C for sleeve applications, all three floatable options deliver shrink levels in the low to mid 60's percent range; which is very desirable. A moderate temperature response and moderate shrink tensions observed is highly desirable in many shrink film applications as it provides better control over the labeling process, a higher quality result, and reduced tendency to collapse containers with thin walls.

As presently determined, TD shrink performance (extent of shrink and the shape of the curve) of the films of this invention is essentially independent of film thickness or ratio of skin thickness to core thickness. This is illustrated in the composite view of film properties evaluated to date with skin composition ratio of 65% Styrolux S and 35% Styrolux T, as shown in the graph of Figure 2, with the increasing density representing the increasing percentage the skin layer thickness of the total film thickness.

It has been determined that the stiffness properties of the various films of this invention are primarily a function of the overall film thickness, as illustrated in the graph of Figure 3.

**Example 3**

Six additional films, identified as Example 3 as a group, were fabricated by coextrusion, cast on a sequence of two chill rolls at 40 °C, stretched in machine direction (MD) 1.2X at 80 °C, then stretched in a tenter frame at 95 °C, cooled and wound up as described above.; including the same two components in the skins and the same four components in the core as the various Example 2 structures. However, these additional six structures differed from the Example 2 structures in that the ratio of the two component Styrene block copolymer skins was adjusted to a 3:1 ratio of Styrolux S/Styrolux T. These six additional films differed from each other in overall film thickness and skin thicknesses; the composition and physical properties being reported in Table 5 below.

Table 5.

| Film Property | Unit of Measure | Example 3. Three Layer 75% Styrolux S / 25% Styrolux T Skins | | | | | |
|---|---|---|---|---|---|---|---|
| Skin | | 75% Styrolux S / 25% Styrolux T | | | | | |
| Composition | | | | | | | |
| Core Composition | | 36% Adsyl 6C30F / 24% Koattro DP8310M / 20% Vistamaxx 3980FL / 20% Kraton G1645 | | | | | |
| Yield | in$^2$/lb | 19,211 | 18,682 | 14,187 | 13,190 | 12,003 | 11,850 |
| Density | g/cm$^3$ | 0.929 | 0.930 | 0.924 | 0.932 | 0.930 | 0.926 |
| Film Thickness (calculated) | microns | 39 | 40 | 54 | 57 | 63 | 64 |
| Skin Thickness (measured) | microns | 4.9 | 7.0 | 6.4 | 9.3 | 10.6 | 8.8 |
| Blocking | | | | | | | |
| RT, 150 psi, 24 hrs | g/in | No blocking | | | | | |
| 35°C, 150 psi, 3 hrs | g/in | No blocking | | | | | |
| Gurley Stiffness MD/TD | | 3.0 / 3.7 | 3.5 / 4.3 | 7.8 / 9.6 | 9.6 / 12.0 | --- / 20.1 | 15.6 / 16.8 |
| Flex Stiffness MD/TD | g/in | 1.5 / 1.9 | 1.6 / 2.0 | 3.3 / 3.9 | 4.4 / 5.5 | 7.1 / 8.5 | 5.9 / 7.5 |
| PIN Puncture | g | --- | --- | --- | 1,273 | 1,079 | --- |

(continued)

| Film Property | Unit of Measure | Example 3. Three Layer 75% Styrolux S / 25% Styrolux T Skins | | | | | | |
|---|---|---|---|---|---|---|---|---|
| COF Static/Kinetic | | | --- | --- | 0.52 / 0.49 | 0.51 / 0.49 | --- | --- |
| In/In Out/Out | | | --- | --- | 0.51 / 0.49 | 0.53 / 0.50 | --- | --- |
| In/Out | | | --- | --- | 0.49 / 0.46 | 0.50 / 0.50 | --- | --- |

The six structures of Example 3 also possessed a very attractive balance of floatability and stiffness with the absence of blocking under typical storage conditions. Once again, despite the almost uniaxial nature of orientation in these films of Example 3, the stiffness performance of the films in both directions was surprisingly well balanced in both Gurley and Flex Stiffness tests. As expected, the stiffness of the film was determined to be a strong function of overall film thickness. Table 6 reports the results of percent shrinkage, shrink tension in the transverse direction and natural shrink in both the machine and transverse directions for the six Example 3 samples.

**Table 6.**

| Film Property | Unit of Measure | Example 3. Three Layer 75% Styrolux S /25% Styrolux T Skins | | | | | |
|---|---|---|---|---|---|---|---|
| Skin Composition | | 75% Styrolux S / 25% Styrolux T | | | | | |
| Core Composition | | 36% Adsyl 6C30F / 24% Koattro DP8310M / 20% Vistamaxx 3980FL / 20% Kraton G1645 | | | | | |
| TD Shrink | | | | | | | |
| 60° C | % | 2 | 1.5 | 1 | 0 | 0 | 1 |
| 65° C | % | 11 | 10 | 11 | 9 | 10 | 10 |
| 70° C | % | 24 | 22 | 24 | 22 | 24 | 25 |
| 75° C | % | 35 | 35 | 39 | 38 | 39 | 39 |
| 80° C | % | 44 | 45 | 46 | 47 | 49 | 49 |
| 85° C | % | 51 | 52 | 52 | 52 | 54 | 53 |
| 90° C | % | 59 | 58 | 60 | 59 | 60 | 60 |
| 95° C | % | 63 | 64 | 65 | 63 | 64 | 64 |
| 100° C | % | 67 | 68 | 68 | 67 | 68 | 68 |
| 105° C | % | 70 | 71 | 71 | 70 | 71 | 71 |
| Shrink Tension TD | | | | | | | |
| 80° C | grams | --- | --- | 342 | 337 | --- | --- |
| 85° C | grams | --- | --- | 374 | 371 | --- | --- |
| 90° C | grams | --- | --- | 373 | 354 | --- | --- |
| 95° C | grams | --- | --- | 370 | 371 | --- | --- |
| 100° C | grams | --- | --- | 350 | 363 | --- | --- |
| Natural Shrink MD/TD | | | | | | | |
| 30° C | % | --- | -0.5 / 0.0 | --- | -0.50 / 0.0 | -0.50 / 0.0 | --- |

(continued)

| Natural Shrink MD/TD | | | | | | | |
|---|---|---|---|---|---|---|---|
| 35°C | % | --- | -0.5 / 0.75 | --- | -0.50 / 0.75 | -0.50 / 0.5 | --- |
| 40° C | % | --- | -0.50 / 3.5 | --- | -0.50 / 3.5 | -0.50 / 3.5 | --- |
| 45° C | % | --- | 0.0 / 8.0 | --- | 0.0 / 8.0 | 0.0 / 8.3 | --- |

As noted in Tables 6 and 4, a slightly higher average shrink tension was observed in the Example 3 films of this invention (Table 6) as compared to the Example 2 films of this invention. (Table 4). All other properties of the Example 3 films appear to be comparable to the Example 2 films. (See properties reported in Tables 5 and 6 for the Example 3 films, as compared to the properties reported in Tables 3 and 4 for the Example 2 films).

## Example 4

Four additional films, identified as example 4 as a group, were fabricated by coextrusion, cast on a sequence of two chill rolls at 35 °C, stretched in machine direction (MD) 1.2X at 85 °C, then stretched in a tenter frame at 104 °C, cooled and wound up as described above. The four films all contained Styrolux S to Styrolux T in the same four to one ratio in the skins with a core composition varying only in the styrene-ethylene-butene-styrene triblock copolymer or styrene-ethylene-butene diblock copolymer component. Properties are provided in Table 7 below.

**Table 7**.

| Film Property | Unit of Measure | Example 4. Three Layer Styrolux S / Styrolux T Skins | | | |
|---|---|---|---|---|---|
| Skin Composition | | 80% Styrolux S / 20% Styrolux T | | | |
| Core Composition | | 36% Adsyl 6C30F / 24% Koattro DP8310M / 20% Vistamaxx 3980FL / 20% Kraton GXXXX | | | |
| Kraton G Type in core | | G1645 | G1643 | G1726 | G1657 |
| Yield | in$^2$/lb | 15,311 | 15,626 | 13,420 | 13,466 |
| Density | g/cm$^3$ | 0.932 | 0.935 | 0.935 | 0.933 |
| Film Thickness (calculated) | microns | 50 | 48 | 55 | 56 |
| Skin Thickness (measured) | microns | 8.9 | 8.8 | 9.7 | 9.7 |
| Haze | % | 1.0 | 1.1 | 0.9 | 0.9 |
| Gloss - IN | gu | >100 | >100 | >100 | >100 |
| Gloss - OUT | gu | >100 | >100 | >100 | >100 |
| Blocking | | | | | |
| RT, 150 psi, 24 hrs | g/in | No blocking | | | |
| 35° C, 150 psi, 3 hrs | g/in | No blocking | | | |
| Gurley Stiffness MD/TD | | 8.1 / 9.8 | 8.7 / 9.1 | 11.4 / 15.3 | 12.3 / 14.0 |
| Flex Stiffness MD/TD | g/in | 3.4 / 4.2 | 3.3 / 3.7 | 5.1 / 6.0 | 5.7 / 6.7 |
| PIN Puncture | g | 1263 | 1387 | 1423 | 1278 |
| COF Static/Kinetic | | 0.81 / 0.71 | 0.86 / 0.70 | 0.75 / 0.68 | 0.78 / 0.67 |

(continued)

| Film Property | | | | | Unit of Measure | Example 4. Three Layer Styrolux S / Styrolux T Skins |
|---|---|---|---|---|---|---|
| In/In Out/Out In/Out | | 0.73 / 0.67 0.80 / 0.74 | 0.65 / 0.60 0.72 / 0.62 | 0.69 / 0.65 0.74 / 0.71 | | 0.63 / 0.61 0.67 / 0.63 |
| TD Shrink | | | | | | |
| 60° C | % | 3 | 2 | 2 | | 3 |
| 65° C | % | 11 | 10 | 8 | | 11 |
| 70° C | % | 23 | 21 | 19 | | 22 |
| 75° C | % | 35 | 32 | 30 | | 34 |
| 80° C | % | 46 | 42 | 40 | | 45 |
| 85° C | % | 53 | 51 | 51 | | 54 |
| 90° C | % | 61 | 59 | 59 | | 60 |
| 95° C | % | 66 | 64 | 64 | | 65 |
| 100° C | % | 71 | 70 | 68 | | 69 |
| 105° C | % | 74 | 72 | 72 | | 71 |
| Shrink Tension TD | | | | | | |
| 80° C | grams | 338 | 340 | 370 | | 404 |
| 85° C | grams | 347 | 334 | 385 | | 441 |
| 90° C | grams | 367 | 360 | 426 | | 474 |
| 95° C | grams | 384 | 383 | 411 | | 467 |
| 100° C | grams | 378 | 371 | 392 | | 429 |
| Natural Shrink TD | | | | | | |
| 30° C | % | 0.5 | 0.5 | 0.5 | | 0.8 |
| 35° C | % | 1.3 | 1.0 | 1.0 | | 1.5 |
| 40° C | % | 4.5 | 4.0 | 3.5 | | 5.0 |
| 45° C | % | 8.0 | 7.0 | 6.5 | | 8.3 |

Optical properties (haze and gloss) are exceptional with the introduction of all four amorphous styrene block copolymers into the core. TD directional shrink of greater than 60% at 95 °C was also achieved in all films.

**Example 5**

Six additional films, identified as example 5 as a group, were fabricated by coextrusion, cast on a sequence of two chill rolls at 35 °C, stretched in machine direction (MD) 1.1X at 85 °C, then stretched in a tenter frame at 105 °C, cooled and wound up as described above. The films all contained skin layers with 100% Styrolux S and a core composition containing Kraton G1645 styrene-ethylene-butene-styrene triblock copolymer at a level of 20 wt.%. The films vary only in the overall film thickness and smaller variations in the skin thickness. Properties are provided in Tables 8 and Table 9 below. Once again, excellent optical properties are observed. The use of Styrolux S as the sole component of the skin shifts the TD shrink initiation temperature to a higher temperature and also improves (raises) the natural shrink stability of the film.

**Table 8.**

| Film Property | Unit of Measure | Example 5. Three Layer 100% Styrolux S Skins | | | | | |
|---|---|---|---|---|---|---|---|
| Skin Composition | | 100% Styrolux S | | | | | |
| Core Composition | | 36% Adsyl 6C30F / 24% Koattro DP8310M / 20% Vistamaxx 3980FL / 20% Kraton G1645 | | | | | |
| Yield | in²/lb | 15,566 | 14,621 | 14,426 | 13,900 | 13,475 | 13,619 |
| Density | g/cm³ | 0.952 | 0.951 | 0.943 | 0.951 | 0.943 | 0.946 |
| Film Thickness (calculated) | microns | 48 | 51 | 52 | 53 | 55 | 55 |
| Skin Thickness (measured) | microns | 9.6 | 10.2 | 9.0 | 8.9 | 10.2 | 12.1 |
| Haze | % | 1.6 | --- | 1.2 | 2.0 | 1.5 | --- |
| 45° Gloss - IN | gu | >100 | --- | >100 | >100 | >100 | --- |
| 45° Gloss - OUT | gu | >100 | --- | >100 | >100 | >100 | --- |
| Blocking | | | | | | | |
|     RT, 150 psi, 24 hrs | g/in | No blocking | | | | | |
|     35° C, 150 psi, 3 hrs | g/in | No blocking | | | | | |
| Gurley Stiffness MD/TD | | 8.2 / 10.0 | -- / -- | 10.0 / 13.2 | -- / -- | 13.7 / 14.2 | 14.2 / 16.2 |
| Flex Stiffness MD/TD | g/in | 3.8 / 4.5 | 4.9 / 5.4 | 4.3 / 4.9 | 5.4 / 5.5 | 6.0 / 6.6 | 5.7 / 6.9 |
| PIN Puncture | g | 965 | --- | 998 | 933 | 926 | --- |
| COF Static/Kinetic | | | | | | | |
|     In/In | | 0.81 / 0.73 | --- | --- | 0.71 / 0.56 | 0.72 / 0.61 | --- |
|     Out/Out | | 0.61 / 0.60 | --- | --- | 0.56 / 0.51 | 0.58 / 0.52 | --- |
|     In/Out | | 0.73 / 0.64 | | | 0.61 / 0.56 | 0.63 / 0.61 | |

**Table 9.**

| Film Property | Unit of Measure | Example 5. Three Layer 100% Styrolux S Skins | | | | | |
|---|---|---|---|---|---|---|---|
| Skin Composition | | 100% Styrolux S | | | | | |
| Core Composition | | 36% Adsyl 6C30F / 24% Koattro DP8310M / 20% Vistamaxx 3980FL / 20% Kraton G1645 | | | | | |
| TD Shrink | | | | | | | |
|     60° C | % | -0.8 | -0.7 | -0.8 | -0.8 | -1 | -0.5 |
|     65° C | % | 0.7 | 0.3 | 0 | 1 | 1 | 1.0 |
|     70° C | % | 12 | 11 | 11 | 13 | 12 | 12 |
|     75° C | % | 30 | 28 | 28 | 30 | 29 | 29 |

(continued)

| Film Property | Unit of Measure | Example 5. Three Layer 100% Styrolux S Skins | | | | | |
|---|---|---|---|---|---|---|---|
| 80° C | % | 43 | 41 | 41 | 44 | 42 | 43 |
| 85° C | % | 52 | 50 | 50 | 54 | 52 | 51 |
| 90° C | % | 59 | 57 | 57 | 61 | 58 | 59 |
| 95° C | % | 66 | 63 | 62 | 65 | 64 | 63 |
| 100° C | % | 70 | 70 | 68 | 70 | 70 | 68 |
| 105° C | % | 74 | 73 | 71 | 74 | 73 | 72 |
| Shrink Tension TD | | | | | | | |
| 80° C | grams | 312 | --- | 333 | 350 | 356 | --- |
| 85° C | grams | 278 | --- | 308 | 371 | 360 | --- |
| 90°C | grams | 327 | --- | 323 | 390 | 380 | --- |
| 95° C | grams | 287 | --- | 312 | 371 | 377 | --- |
| 100° C | grams | 294 | --- | 323 | 360 | 381 | --- |
| Natural Shrink TD | | | | | | | |
| 30° C | % | 0.0 | 0.0 | 0.0 | 0.0 | 0.0 | 0.0 |
| 35°C | % | 0.0 | 0.0 | 0.0 | 0.0 | 0.0 | 0.0 |
| 40° C | % | 1.5 | 1.5 | 1.5 | 1.5 | 1.5 | 1.5 |
| 45° C | % | 1.5 | 1.5 | 1.5 | 1.5 | 1.5 | 1.5 |

In a second embodiment of the present invention, a three layer shrink film includes a core layer and opposed skin layer having a thickness less than the core layer. Each of the skin layers includes one or more styrene-butadiene block copolymers and one or more styrene block copolymers from the group consisting of styrene-ethylene-co-butene-styrene triblock copolymers, styrene-ethylene-co-propylene-styrene triblock copolymers, styrene-ethylene-co-butene diblock copolymers and styrene-ethylene-co-propylene diblock copolymers The core layer optionally includes one or more styrene tetrablock, triblock or diblock copolymers therein, in combination with a propylene-ethylene-butene terpolymer, a butene-ethylene copolymer and a propylene-based elastomeric polymer. A representative film structure illustrating this embodiment is shown below.

Corona Treatment (optional)

| ~4-12 μm | skin layer | 80-99% | Styrolux S |
| | | 1-20% | SEBS or SEP or SEPS |
| 32-45 μm | core layer | 36-40% | LYB Adsyl 6C30F Terpolymer |
| | | 20-27% | LYB Koattro DP8310M Polybutene-1 |
| copolymer | | 20-33% | Vistamaxx 3980FL or Versify 3000 |
| SEB | | 0-20% | Kraton G SEPSEP or SEBS or SEPS or SEP or Block Copolymers |
| ~4-12 μm | skin layer | 80-99% | Styrolux S |
| | | 1-20% | SEBS or SEP or SEPS |

Corona Treatment (optional)

The composition of the various polymers in the above structure was provided earlier in this application.

Triblock styrene-ethylene-co-butene-styrene or styrene-ethylene-co-propylene-styrene or diblock styrene-ethylene-co-butene or styrene-ethylene-co-propylene structures suitable to incorporate into the skin layer of this structure and are commercially available from Asahi KASEI Corporation, Tokyo, Japan and its distributor Marubeni Specialty Chemicals Inc., White Plains, NY or Kraton Corporation, Houston, TX and its distributor Univar Solutions, Downers Grove, Illinois. These styrene block copolymers include:

Tuftec P2000 SEBS with a specific gravity = 0.98 g/cm$^3$, a PS content = 67%, and a MFR (190/2.16) = 3.0

Tuftec P5051 SEBS with a specific gravity = 0.94 g/cm$^3$, a PS content = 47%, and a MFR (190/2.16) = 3.0

S.O.E S1606 with a specific gravity = 0.96 g/cm$^3$, a MFR (230/2.16) = 4.0, and a Shore A Hardness = 67

S.O.E S1611 with a specific gravity = 1.02 g/cm$^3$, a MFR (190/2.16) = 4.0, and a Shore A Hardness = 71

S.O.E S1605 with a specific gravity = 1.0 g/cm$^3$, a MFR (230/2.16) = 5.0, and a Shore A Hardness = 87

Kraton G1726: Styrene-ethylene-co-butene-Styrene triblock (30%)/Styrene-ethylene-co-butene diblock (70%) with 30% styrene content, melt flow rate = 19 (190 °C, 2.16 kg), and a specific gravity of 0.91 g/cm$^3$.

Tuftec P1500 SEBS with a specific gravity = 0.91 g/cm$^3$, a PS content = 30%, and a MFR = 4.0 (190 C, 2.16 kg).

**Example 6**

Three additional films, identified as example 6 as a group, were produced by coextrusion, cast on a sequence of two chill rolls at 35 °C, stretched in machine direction (MD) 1.2X at 85 °C, then stretched in a tenter frame at 103 °C, cooled and wound up as described above. The films all contained skin layers with 80% Styrolux S in combination with Tuftec P5051 styrene-ethylene-co-butene-styrene triblock copolymer. The films vary only in the overall film thickness and smaller variations in the skin thickness. Properties are provided in tables 10 and table 11 below.

**Table 10.**

| Film Property | Unit of Measure | Example 6. Three Layer Styrolux S/Tuftec P5051 Skins | | |
|---|---|---|---|---|
| Skin Composition | | 80% Styrolux S / 20% Tuftec P5051 | | |
| Core Composition | | 40% Adsyl 6C30F / 27% Koattro DP8310M / 33% Vistamaxx 3980FL | | |
| Yield | in$^2$/lb | 13,915 | 13,809 | 13,463 |
| Density | g/cm$^3$ | 0.927 | 0.930 | 0.927 |
| Film Thickness (calculated) | microns | 54 | 55 | 56 |
| Skin Thickness (measured) | microns | 8.3 | 8.0 | 6.8 |
| Haze | % | 2.5 | 2.5 | 2.7 |
| Gloss - IN | gu | >100 | >100 | >100 |
| Gloss - OUT | gu | >100 | >100 | >100 |
| Gurley Stiffness MD/TD | | 9.0 / 9.7 | 11.6 / 11.4 | 10.2 / 10.6 |
| Flex Stiffness MD/TD | g/in | 2.8 / 5.1 | 3.9 / 4.9 | 4.4 / 5.1 |
| PIN Puncture | g | 1298 | 1365 | 1426 |

**Table 11.**

| Film Property | Unit of Measure | Example 6. Three Layer Styrolux S/Tuftec P5051 Skins | | |
|---|---|---|---|---|
| Skin Composition | | 80% Styrolux S / 20% Tuftec P5051 | | |
| Core Composition | | 40% Adsyl 6C30F / 27% Koattro DP8310M / 33% Vistamaxx 3980FL | | |
| TD Shrink | | | | |
| 60° C | % | -0.5 | -0.5 | -1 |
| 65° C | % | 1.2 | 1.2 | 1 |
| 70° C | % | 10 | 11 | 12 |
| 75° C | % | 24 | 25 | 24 |
| 80° C | % | 37 | 38 | 37 |
| 85° C | % | 46 | 47 | 47 |
| 90° C | % | 52 | 54 | 55 |
| 95° C | % | 60 | 61 | 61 |
| 100° C | % | 65 | 67 | 67 |
| 105° C | % | 69 | 70 | 71 |
| Shrink Tension TD | | | | |
| 80° C | grams | 378 | 394 | 390 |
| 85° C | grams | 400 | 379 | 372 |
| 90° C | grams | 412 | 406 | 444 |
| 95° C | grams | 423 | 390 | 408 |
| 100° C | grams | 412 | 418 | 418 |
| Natural Shrink TD | | | | |
| 30° C | % | -0.3 | -0.3 | -0.3 |
| 35°C | % | 0 | 0 | 0 |
| 40° C | % | 1.3 | 1.3 | 1.3 |
| 45° C | % | 3.0 | 3.3 | 3.0 |

The three structures of Example 6 also possessed a very attractive balance of properties with the absence of blocking and low natural shrinks under typical storage conditions.

**Example 7**

Three additional films, identified as example 7 as a group, were produced by coextrusion, cast on a sequence of two chill rolls at 35 °C, stretched in machine direction (MD) 1.2X at 85 °C, then stretched in a tenter frame at 109 °C, cooled and wound up as described above.. The films all contained skin layers with 80% Styrolux S in combination with Tuftec P2000 styrene-ethylene-co-butene-styrene triblock copolymer. The films vary only in the overall film thickness and smaller variations in the skin thickness. Properties are provided in tables 12 and table 13 below.

**Table 12.**

| Film Property | Unit of Measure | Example 7. Three Layer Styrolux S/Tuftec P2000 Skins | | |
|---|---|---|---|---|
| Skin Composition | | 80% Styrolux S / 20% Tuftec P2000 | | |
| Core Composition | | 40% Adsyl 6C30F / 27% Koattro DP8310M / 33% Vistamaxx 3980FL | | |
| Yield | $in^2$/lb | 17,686 | 16,014 | 13,040 |

(continued)

| Film Property | Unit of Measure | Example 7. Three Layer Styrolux S/Tuftec P2000 Skins | | |
|---|---|---|---|---|
| Density | g/cm$^3$ | 0.931 | 0.934 | 0.931 |
| Film Thickness (calculated) | microns | 43 | 47 | 58 |
| Skin Thickness (measured) | microns | 6.6 | 8.9 | 11.1 |
| Haze | % | 1.6 | 1.7 | 1.9 |
| Gloss - IN | gu | >100 | >100 | >100 |
| Gloss - OUT | gu | >100 | >100 | >100 |
| Gurley Stiffness MD/TD | | 4.3 / 6.4 | 7.2 / 7.4 | 12.1 / 14.7 |
| Flex Stiffness MD/TD | g/in | 2.2 / 2.7 | 3.1 / 3.7 | 5.9 / 6.6 |
| PIN Puncture | g | 1072 | 1070 | 1179 |

**Table 13.**

| Film Property | Unit of Measure | Example 7. Three Layer Styrolux S/Tuftec P2000 Skins | | |
|---|---|---|---|---|
| Skin Composition | | 80% Styrolux S / 20% Tuftec P2000 | | |
| Core Composition | | 40% Adsyl 6C30F / 27% Koattro DP8310M / 33% Vistamaxx 3980FL | | |
| TD Shrink | | | | |
| 60° C | % | -0.5 | -0.5 | -0.5 |
| 65° C | % | 0 | 0 | 0 |
| 70° C | % | 7 | 7 | 6 |
| 75° C | % | 19 | 17 | 18 |
| 80° C | % | 33 | 34 | 33 |
| 85° C | % | 42 | 40 | 41 |
| 90° C | % | 50 | 49 | 50 |
| 95° C | % | 59 | 58 | 58 |
| 100° C | % | 66 | 65 | 66 |
| 105° C | % | 71 | 71 | 70 |
| Shrink Tension TD | | | | |
| 80° C | grams | 221 | 195 | 222 |
| 85° C | grams | 240 | 263 | 295 |
| 90° C | grams | 239 | 303 | 339 |
| 95° C | grams | 214 | 269 | 293 |
| 100° C | grams | 258 | 246 | 323 |
| Natural Shrink TD | | | | |
| 30° C | % | -0.3 | -0.3 | -0.3 |
| 35°C | % | -0.3 | -0.3 | -0.3 |
| 40° C | % | 0.8 | 0.8 | 0.8 |
| 45° C | % | 2.3 | 2 | 1.8 |

The three structures of Example 7 demonstrated further improvements in stability (lowered natural shrinks) under typical storage conditions can be achieved by raising the styrene content of the SEBS component of the skin. Exceptional optical properties were achieved with this skin structure.

**Example 8**

Three additional films, identified as example 8 as a group, were produced by coextrusion, cast on a sequence of two chill rolls at °C, stretched in machine direction (MD) 1.2X at °C, then stretched in a tenter frame at °C, cooled and wound up as described above.. The films all contained skin layers with 90% Styrolux S in combination with Kraton G1726 styrene-ethylene-co-butene diblock copolymer and a core composition also incorporating Kraton G1726 at a level of 20 wt.%. The films vary only in the overall film thickness and smaller variations in the skin thickness. Properties are provided in tables 14 and table 15 below.

**Table 14.**

| Film Property | | | Unit of Measure | | | Example 8. Three Layer Styrolux S/ Kraton G1726 Skins |
|---|---|---|---|---|---|---|
| Skin Composition | | | | | | 90% Styrolux S / 10% Kraton G1726 |
| Core Composition | | | | | | 36% Adsyl 6C30F / 24% Koattro DP8310M / 20% Vistamaxx 3980FL / 20% Kraton G1726 |
| Yield | | | $in^2$/lb | 14,860 | 13,035 | 12,528 |
| Density | | | $g/cm^3$ | 0.934 | 0.937 | 0.935 |
| Film Thickness (calculated) | | | microns | 51 | 58 | 60 |
| Skin Thickness (measured) | | | microns | 9.4 | 10.8 | 10.6 |
| Haze | | | % | 6.3 | 6.6 | 6.8 |
| Gloss - IN | | | gu | 87 | 87 | 86 |
| Gloss - OUT | | | gu | 87 | 89 | 88 |
| Blocking | | | | | | |
| | RT, 150 psi, 24 hrs | | g/in | | | No blocking |
| | 35° C, 150 psi, 3 hrs | | g/in | | | No blocking |
| Gurley Stiffness MD/TD | | | | 9.6 / 13.4 | 14.1 / 14.8 | 14.8 / 13.6 |
| Flex Stiffness MD/TD | | | g/in | 4.3 / 5.1 | 6.1 / 7.2 | 6.7 / 7.7 |
| PIN Puncture | | | g | 1343 | 1525 | 1748 |
| COF | | | | | | |
| Static/Kinetic | | | | 0.77 / 0.77 | 0.76 / 0.79 | 0.74 / 0.75 |
| | In/In Out/Out | | | 0.70 / 0.68 | 0.62 / 0.67 | 0.69 / 0.67 |
| | In/Out | | | 0.72 / 0.70 | 0.75 / 0.73 | 0.60 / 0.65 |

**Table 15.**

| Film Property | Unit of Measure | Example 8. Three Layer Styrolux S/Kraton G1726 Skins | | |
|---|---|---|---|---|
| Skin Composition | | 90% Styrolux S / 10% Kraton G1726 | | |
| Core Composition | | 36% Adsyl 6C30F / 24% Koattro DP8310M / 20% Vistamaxx 3980FL / 20% Kraton G1726 | | |
| TD Shrink | | | | |
| 60° C | % | 0 | 0 | 0 |
| 65° C | % | 6 | 4 | 5 |
| 70° C | % | 26 | 23 | 16 |
| 75° C | % | 29 | 28 | 30 |
| 80° C | % | 42 | 42 | 44 |
| 85° C | % | 53 | 53 | 51 |
| 90° C | % | 60 | 60 | 58 |
| 95° C | % | 66 | 64 | 65 |
| 100° C | % | 69 | 67 | 70 |
| 105° C | % | 71 | 70 | 72 |
| Shrink TD Tension | | | | |
| 80° C | grams | 413 | 389 | 438 |
| 85° C | grams | 411 | 432 | 490 |
| 90° C | grams | 432 | 434 | 525 |
| 95° C | grams | 451 | 447 | 508 |
| 100° C | grams | 414 | 398 | 437 |
| Natural TD Shrink | | | | |
| 30° C | % | 0.5 | 0.5 | 0.5 |
| 35°C | % | 1.0 | 0.8 | 0.8 |
| 40° C | % | 3.0 | 2.8 | 2.8 |
| 45° C | % | 5.3 | 5.0 | 4.8 |

As this example 8 illustrates, some reductions in optical properties (haze >6%) were observed with the incorporation of lower styrene content (<40 % by weight) styrene-ethylene-co-butene block copolymer in the skin layer relative to previously described examples 6 and 7, which contained high styrene content (>40% by weight) styrene-ethylene-co-butene copolymer in the skins. TD shrink performance profile and stiffness properties of the films were very good.

**Example 9**

Three additional films, identified as example 9 as a group, were produced by coextrusion, cast on a sequence of two chill rolls at 35 °C, stretched in machine direction (MD) 1.2X at 85 °C, then stretched in a tenter frame at 96 °C, cooled and wound up as described above.. The films all contained skin layers with 80% Styrolux S in combination with Tuftec P1500 styrene-ethylene-co-butene-styrene triblock copolymer. The films vary only in the overall film thickness and smaller variations in the skin thickness. Properties are provided in tables 16 and table 17 below.

**Table 16.**

| Film Property | Unit of Measure | Example 9. Three Layer Styrolux S/Tuftec P1500 Skins | | |
|---|---|---|---|---|
| Skin Composition | | 80% Styrolux S / 20% Tuftec P1500 | | |
| Core Composition | | 40% Adsyl 6C30F / 27% Koattro DP8310M / 33% Vistamaxx 3980FL | | |
| Yield | in$^2$/lb | 14,045 | 12,701 | 11,623 |
| Density | g/cm$^3$ | 0.923 | 0.923 | 0.924 |
| Film Thickness (calculated) | microns | 54 | 60 | 65 |
| Skin Thickness (measured) | microns | 8.0 | 6.7 | 11.8 |
| Haze | % | 7.1 | 7.3 | 8.1 |
| Gloss - IN | gu | 81 | 79 | 82 |
| Gloss - OUT | gu | 82 | 80 | 82 |
| Gurley Stiffness MD/TD | | 8.8 / 10.6 | 13.6 / 13.8 | 15.3 / 15.8 |
| Flex Stiffness MD/TD | g/in | 3.1 / 4.3 | 5.8 / 7.3 | 5.7 / 7.6 |
| PIN Puncture | g | 1454 | 1718 | 1758 |

**Table 17.**

| Film Property | Unit of Measure | Example 9. Three Layer Styrolux S/Tuftec P1500 Skins | | |
|---|---|---|---|---|
| Skin Composition | | 80% Styrolux S / 20% Tuftec P1500 | | |
| Core Composition | | 40% Adsyl 6C30F / 27% Koattro DP8310M / 33% Vistamaxx 3980FL | | |
| TD Shrink | | | | |
| 60° C | % | -0.5 | -0.5 | -0.5 |
| 65° C | % | 2 | 2.5 | 2 |
| 70° C | % | 13 | 13 | 12 |
| 75° C | % | 27 | 26 | 26 |
| 80° C | % | 41 | 40 | 41 |
| 85° C | % | 51 | 51 | 50 |
| 90° C | % | 57 | 58 | 57 |
| 95° C | % | 62 | 63 | 63 |
| 100° C | % | 67 | 67 | 67 |
| 105° C | % | 71 | 70 | 70 |
| Shrink Tension    TD | | | | |
| 80° C | grams | 429 | 503 | 475 |
| 85° C | grams | 423 | 491 | 491 |
| 90° C | grams | 435 | 511 | 511 |
| 95° C | grams | 464 | 495 | 500 |
| 100° C | grams | 459 | 515 | 498 |

(continued)

| Natural Shrink    TD | | | | |
|---|---|---|---|---|
| 30° C | % | -0.3 | -0.3 | -0.3 |
| 35° C | % | 0 | 0 | 0 |
| 40° C | % | 1.8 | 2.0 | 1.8 |
| 45° C | % | 4.0 | 4.5 | 3.8 |

Once again, some reduction in optical properties (haze >6) were observed in example 9 with the lower styrene content styrene-ethylene-co-butene-styrene triblock copolymer in the skin layers.

In a third embodiment of the present invention, a three layer shrink film includes a core and opposed skin layers; said core being thicker than said skin layers. a hard resin is incorporated into the core formulation (alone or as a precompounded concentrate in propylene-ethylene-butene terpolymer). It has been found that this improves the overall stiffness of the film, raises the TD shrink initiation temperature of the film and improves storage temperature stability of the film, as well as improves the optical properties of the film with the addition of reclaim. Each of the skin layers includes one or more styrene-butadiene block copolymers and, optionally, one or more high styrene content polymers from the group consisting of styrene-ethylene-co-butene-styrene triblock copolymer, styrene-ethylene-co-propylene-styrene triblock copolymer, styrene-ethylene-co-butene diblock copolymer, styrene-ethylene-co-propylene diblock copolymer and combinations of said high styrene content triblock and diblock styrene copolymers. The core layer optionally includes one or more styrene tetrablock, triblock or diblock copolymers therein in combination with a propylene-ethylene-butene terpolymer, a butene-ethylene copolymer and a propylene-based elastomeric polymer. A representative film structure of this embodiment is shown below:

Corona Treatment (optional)

| ~4-12 μm | skin layer | 80-100% | (65% Styrolux S / 35% Styrolux T SBC) |
|---|---|---|---|
| | | 0-20% | SEBS or SEP or SEPS |
| 32-45 μm | core layer | 30 - 40% | LYB Adsyl 6C30F Terpolymer |
| copolymer | | 20 - 27% | LYB Koattro DP8310M Polybutene-1 |
| | | 15 - 33% | Vistamaxx 3980FL or Versify 3000 |
| SEB | | 0 - 20% | Kraton G SEPSEP or SEBS or SEPS or SEP or Block Copolymers |
| | | 1 - 16% | Plastolyn R1140 or equivalent Hard Resin |
| ~4-12 μm | skin layer | 80-100% | (65% Styrolux S / 35% Styrolux T SBC) |
| | | 0-20% | SEBS or SEP or SEPS |

Corona Treatment (optional)

High styrene content triblock styrene-ethylene-co-butene-styrene or triblock styrene-ethylene-co-propylene-styrene or diblock styrene-ethylene-co-butene or diblock styrene-ethylene-co-propylene structures suitable to incorporate into the skin layer of this structure are commercially available from Asahi KASEI Corporation, Tokyo, Japan, and include the same triblock and diblock copolymers identified above with respect to the second embodiment of this invention.

Hard Resin material suitable for incorporation into the polyolefin core are commercially available from Eastman Chemical Company, Kingsport, TN and include:

Plastolyn R1140, aliphatic, hydrogenated hydrocarbon resin with a Tg = 91 °C and a MW=1,500 g/mol

Regalite R1125, aliphatic, hydrogenated hydrocarbon resin with a Tg = 70 °C and a MW=1,200 g/mol

Regalrez 1126, aliphatic, hydrogenated hydrocarbon resin with a Tg = 67 °C and a MW=1,250 g/mol

Regalrez 6108, mixed aliphatic/aromatic, hydrocarbon resin with a Tg = 55 °C and a MW=1,400 g/mol

Hard Resin material suitable for incorporation into the polyolefin core also are commercially available from ExxonMobil, Houston, TX and include:

Escorez 5340, cycloaliphatic hydrocarbon resin with a Tg = 86 °C and a MW=730 g/mol

Escorez 5637, cycloaliphatic hydrocarbon resin with a Tg = 80 °C and a MW=820 g/mol

**Example 10**

Four additional films, identified as example 10 as a group, were fabricated by coextrusion, cast on a sequence of two chill rolls at 40 °C, stretched in machine direction (MD) 1.1X at 85 °C, then stretched in a tenter frame at 105 °C, cooled and wound up as described above.. The films all contained skin layers with a combination of Styrolux S and Styrolux T and a core composition varying with the substitution of polypropylene terpolymer with a precompounded blend of the terpolymer and hard resin (80% Adsyl 6C30F/20% Plastolyn R1140) and the further introduction of Styrolux S and Styrolux T to the core at concentrations which simulate 15 wt.% reclaim. Properties are provided in tables 18 and table 19 below for two film thicknesses (52-53 $\mu$m and 59-63 $\mu$m respectively).

**Table 18.**

| Film Property | Unit of Measure | Example 10. Three Layer Symmetrical Styrolux S/Styrolux T Skins | |
|---|---|---|---|
| Skin Composition | | 65% Styrolux S / 35% Styrolux T | |
| Core Composition | | 36% (80% Adsyl 6C30F /20% Plastolyn R1140) 24% Koattro DP8310M 20% Vistamaxx 3980FL 20% Kraton G1645 | 36% (80% Adsyl 6C30F/20% Plastolyn R1140) 21.5% Koattro DP8310M 18.5% Vistamaxx 3980FL 19.5% Kraton G1645 3% Styrolux S / 1.5% Styrolux T |
| Yield | in$^2$/lb | 14,438 | 13,816 |
| Density | g/cm$^3$ | 0.944 | 0.953 |
| Film Thickness (calculated) | microns | 52 | 53 |
| Skin Thickness (measured) | microns | 9.8 | 9.5 |
| Haze | % | 2.3 | 5.0 |
| 45° Gloss - IN | gu | >100 | 99 |
| 45° Gloss - OUT | gu | >100 | 100 |
| Blocking | | | |
| RT, 150 psi, 24 hrs | g/in | No blocking | |
| 35° C, 150 psi, 3 hrs | g/in | No blocking | |
| Gurley Stiffness MD/TD | | 9.8 / 11.9 | 8.0 / 10.5 |
| Flex Stiffness MD/TD | g/in | 3.8 / 4.6 | 3.6 / 4.3 |
| TD Shrink | | | |
| 60° C | % | 0.3 | 1 |
| 65° C | % | 6 | 8 |
| 70° C | % | 17 | 19 |
| 75° C | % | 31 | 33 |
| 80° C | % | 42 | 44 |

(continued)

| TD Shrink | | | |
|---|---|---|---|
| 85° C | % | 50 | 52 |
| 90° C | % | 57 | 58 |
| 95° C | % | 64 | 64 |
| 100° C | % | 69 | 68 |
| 105° C | % | 73 | 72 |
| Shrink Tension TD | | | |
| 80° C | grams | 201 | 232 |
| 85° C | grams | 231 | 197 |
| 90° C | grams | 204 | 243 |
| 95° C | grams | 226 | 262 |
| 100° C | grams | 215 | 228 |
| Natural Shrink TD | | | |
| 30° C | % | 0.5 | 0.0 |
| 35° C | % | 0.5 | 1.0 |
| 40° C | % | 3.0 | 3.5 |
| 45° C | % | 3.0 | 3.0 |

**Table 19.**

| Film Property | Unit of Measure | Example 10. Three Layer Symmetrical Styrolux S/Styrolux T Skins | |
|---|---|---|---|
| Skin Composition | | 65% Styrolux S / 35% Styrolux T | |
| Core Composition | | 36% (80% Adsyl 6C30F /20% Plastolyn R1140) 24% Koattro DP8310M 20% Vistamaxx 3980FL 20% Kraton G1645 | 36% (80% Adsyl 6C30F/20% Plastolyn R1140) 21.5% Koattro DP8310M 18.5% Vistamaxx 3980FL 19.5% Kraton G1645 3% Styrolux S / 1.5% Styrolux T |
| Yield | in$^2$/lb | 11,741 | 12,753 |
| Density | g/cm$^3$ | 0.942 | 0.939 |
| Film Thickness (calculated) | microns | 63 | 59 |
| Skin Thickness (measured) | microns | 11.3 | 10.4 |
| Haze | % | 2.5 | 5.5 |
| 45° Gloss - IN | gu | >100 | 96 |
| 45° Gloss - OUT | gu | >100 | 99 |
| Blocking | | | |
| RT, 150 psi, 24 hrs | g/in | No blocking | |
| 35° C, 150 psi, 3 hrs | g/in | No blocking | |

(continued)

| Film Property | Unit of Measure | Example 10. Three Layer Symmetrical Styrolux S/Styrolux T Skins | |
|---|---|---|---|
| Gurley Stiffness MD/TD | | -- / -- | 9.2 / -- |
| Flex Stiffness MD/TD | g/in | -- / -- | 4.5 / 4.9 |
| TD Shrink | | | |
| 60° C | % | 0.3 | 1 |
| 65° C | % | 5 | 8 |
| 70° C | % | 16 | 18 |
| 75° C | % | 29 | 32 |
| 80° C | % | 41 | 43 |
| 85° C | % | 50 | 52 |
| 90° C | % | 57 | 59 |
| 95° C | % | 64 | 65 |
| 100° C | % | 68 | 70 |
| 105° C | % | 71 | 73 |
| Shrink Tension TD | | | |
| 80° C | grams | 241 | 217 |
| 85° C | grams | 256 | 210 |
| 90° C | grams | 227 | 228 |
| 95° C | grams | 248 | 221 |
| 100° C | grams | 237 | 232 |
| Natural Shrink TD | | | |
| 30° C | % | 0.0 | 0.0 |
| 35° C | % | 0.5 | 0.5 |
| 40° C | % | 2.5 | 3.5 |
| 45° C | % | 2.0 | 3.0 |

Introduction of hard resin in the core raises the TD shrink initiation temperature and improves the natural shrink stability of the film. With the addition of skin polymer in the core at the level which simulates 15% reclaim, the film haze is still below the target level of 6%.

In a fourth embodiment of the present invention a three layer shrink film includes a core layer and opposed skin layers. In this embodiment the film structure is symmetric, with one or more styrene-butadiene block copolymers (diblock or triblock) as the opposing skin layers. The core layer includes one or more styrene-butadiene triblock or diblock copolymers, one or more styrene-ethylene-co-butene-styrene triblock or styrene-ethylene-co-butene diblock copolymers therein, in combination with a propylene-ethylene-butene terpolymer or propylene-ethylene copolymer, a butene-ethylene copolymer and a propylene-based elastomeric polymer. This core layer composition is the result of simulating the addition of reclaim into the core. It has been found that the addition of reclaim at these levels creates significant opacity to the film. Optionally, the addition of a TiO2 concentrate with an polyethylene based carrier is present to enhance the films opacity and whiteness. A representative film structure of this sixth embodiment including the optional components is shown below.

Corona Treatment (optional)

| ~4-12 μm | skin layer | 80-100% (60-90% Styrolux S / 10-40% Styrolux T SBC) 0-20% ((SEBS or SEP or SEPS)) |
|---|---|---|
| 30-45 μm XCP | core layer | 20 - 35% LYB Adsyl 6C30F Terpolymer or Adsyl 7415 <br><br> 10 - 25% LYB Koattro DP8310M Polybutene-1 copolymer <br> 10 - 30% Vistamaxx 3980FL or Versify 3000 <br> 10 - 60% Reclaim (Terpolymer, butene- ethylene copolymer, <br> propylene-based elastomer, styrene ethylene-co-butene- styrene block copolymer, <br> styrene-butadiene block copolymer) <br> 0 - 10% Polyethylene based TiO2 concentrate |
| ~4-12 μm | skin layer | 80-100% (60-80% Styrolux S / 20-40% Styrolux T SBC) 0-20% ((SEBS or SEP or SEPS)) |

Corona Treatment (optional)

## Example 11

As described hereinafter, films employing at least 10% reclaim in the core are within the scope of this invention. Four additional films, identified as example 11 as a group, were fabricated by coextrusion, cast on a sequence of two chill rolls at 40 °C, stretched in machine direction (MD) 1.1X at 85 °C, then stretched in a tenter frame at 105 °C, cooled and wound up as described above. Reclaim addition to the core was simulated by adding to the core the two component blend of the PS block copolymers used in the skin layer of the above-described films, in a quantity that constitutes 10% by weight of the composition of the core. Details of the formulation are specified in Table 20 below. Table 20 shows the composition and properties for four (4) films including the simulated 10% recycle material in the core; these films differing from each other only in skin and film thickness. As shown in Table 20, haze values were obtained in the range of approximately 4-5%, which is an acceptable range (criteria is less than 6%). Moreover, the simulation of employing 10% reclaim in the core, by introducing into the core the polystyrene blend employed in the skins, had no noticeable effect on other relevant properties of the film (gloss, blocking, puncture resistance, etc.). Higher levels of reclaim may be usable in this invention without adversely affecting other desired properties of the film. Since the use of reclaim material can provide a significant cost benefit, as compared to using virgin material, it would be desirable to use the highest possible percentage of reclaim that does not adversely affect other desired properties of the film.

**Table 20.**

| Film Property | Unit of Measure | | | Example 11. Three layer Symmetrical Film with Styrolux S/Styrolux T Skins - Reclaim Simulation at 10% | | |
|---|---|---|---|---|---|---|
| Skin Composition | | | | 65% Styrolux S / 35% Styrolux T | | |
| Core Composition | | | | 36% Adsyl 6C30F / 22% Koattro DP8310M / 19% Vistamaxx 3980FL / 20% Kraton G1645 / 2% Styrolux S / 1% Styrolux T | | |
| Yield | $in^2$/lb | 14,959 | | 14,605 | 13,961 | 13,593 |
| Density | g/$cm^3$ | 0.927 | | 0.933 | 0.936 | 0.944 |
| Film Thickness (calculated) | microns | 51 | | 52 | 54 | 55 |
| Skin Thickness (measured) | microns | 6.1 | | 7.8 | 8.6 | 10.1 |
| Haze | % | 5.1 | | 4.1 | 4.6 | 3.8 |
| 45° Gloss - IN | gu | 97 | | >100 | >100 | >100 |
| 45° Gloss - OUT | gu | 97 | | 100 | 100 | >100 |

(continued)

| Film Property | Unit of Measure | Example 11. Three layer Symmetrical Film with Styrolux S/Styrolux T Skins - Reclaim Simulation at 10% | | | | |
|---|---|---|---|---|---|---|
| Blocking | | | | | | |
| RT, 150 psi, 24 hrs | g/in | No blocking | | | | |
| 35° C, 150 psi, 3 hrs | g/in | No blocking | | | | |
| Gurley Stiffness MD/TD | | 7.1 / 8.3 | 7.3 / 9.9 | | 11.1 / 9.8 | 10.4 / 13.4 |
| Flex Stiffness MD/TD | g/in | 3.0 / 3.7 | 3.1 / 3.8 | | 3.8 / 4.5 | 4.4 / 5.1 |
| PIN Puncture | g | 1,291 | 1,270 | | 1,333 | 1,307 |
| COF Static/Kinetic | | | | | | |
| In/In | | 0.56 / 0.56 | 0.63 / 0.63 | | 0.60 / 0.57 | 0.49 / 0.49 |
| Out/Out | | 0.55 / 0.55 | 0.49 / 0.50 | | 0.51 / 0.50 | 0.52 / 0.50 |
| In/Out | | 0.57 / 0.58 | 0.53 / 0.54 | | 0.55 / 0.56 | 0.50 / 0.49 |

The addition of "reclaim" to the core also did not have any measurable effects on the shrink performance or shrink tension of the film structure, as shown in Table 21 below.

**Table 21.**

| Film Property | Unit of Measure | Example 11. Three layer Symmetrical Film with Styrolux S/Styrolux T Skins - Reclaim Simulation at 10% | | | |
|---|---|---|---|---|---|
| Skin Composition | | 65% Styrolux S / 35% Styrolux T | | | |
| Core Composition | | 36% Adsyl 6C30F / 22% Koattro DP8310M / 19% Vistamaxx 3980FL / 20% Kraton G1645 / 2% Styrolux S / 1% Styrolux T | | | |
| TD Shrink | | | | | |
| 60° C | % | 2 | 2 | 1 | 1 |
| 65° C | % | 11 | 11 | 10 | 10 |
| 70° C | % | 24 | 22 | 23 | 22 |
| 75° C | % | 35 | 34 | 35 | 34 |
| 80° C | % | 44 | 44 | 44 | 44 |
| 85° C | % | 51 | 50 | 51 | 52 |
| 90° C | % | 58 | 57 | 59 | 60 |
| 95° C | % | 64 | 63 | 64 | 65 |
| 100° C | % | 68 | 68 | 68 | 69 |
| 105° C | % | 71 | 70 | 70 | 71 |
| Shrink Tension TD | | | | | |
| 80° C | grams | 236 | 310 | 317 | 302 |

(continued)

| | | | | | |
|---|---|---|---|---|---|
| Shrink Tension TD | | | | | |
| 85° C | grams | 293 | 315 | 307 | 299 |
| 90° C | grams | 296 | 320 | 329 | 310 |
| 95° C | grams | 290 | 335 | 330 | 312 |
| 100° C | grams | 288 | 359 | 317 | 319 |
| Natural Shrink MD/TD | | | | | |
| 30° C | % | -0.5 / 0.5 | -0.5 / 0.5 | -0.5 / 0.5 | -0.5 / 0.5 |
| 35 °C | % | -0.5 /1.0 | -0.5 / 1.0 | -0.5 / 1.0 | -0.5 / 1.0 |
| 40° C | % | -0.5 / 4.5 | -0.5 / 4.5 | -0.5 / 4.2 | -0.5 / 4.2 |
| 45° C | % | 0 / 8.0 | 0 / 8.0 | 0 / 7.5 | 0 / 6.0 |

**Example 12.**

Higher levels of reclaim incorporation into the core of the film (>30%) produces a moderate level of opacity in the film while maintaining the desirable floatability of the structure. Film structures with higher levels of reclaim provide a cost effective approach for the introduction of floatable solid white shrink film. Three additional films, identified as example 12 as a group, were fabricated by coextrusion, cast on a sequence of two chill rolls at 40 °C, stretched in machine direction (MD) 1.2X at 80 °C, then stretched in a tenter frame at 108 °C, cooled and wound up as described above. The films all contained skin layers with a combination of Styrolux S and Styrolux T and the core layer includes one or more styrene-butadiene triblock or diblock copolymers, one or more styrene-ethylene-co-butene-styrene triblock or styrene-ethylene-co-butene diblock copolymers therein, in combination with a propylene-ethylene-butene terpolymer or propylene-ethylene copolymer, a butene-ethylene copolymer and a propylene-based elastomeric polymer. This core layer composition is the result of simulating the incorporating of reclaim into the core at levels (simulation of 75% reclaim) which create significant opacity to the film.

**Table 22.**

| Film Property | Unit of Measure | Example 12. Three Layer Symmetric Film - Reclaim Simulation at 75% | | |
|---|---|---|---|---|
| Skin Composition | | 80% Styrolux S / 20% Styrolux T | | |
| Core Composition | | 27% Adsyl 6C30F / 17% Koattro DP8310M / 20% Vistamaxx 3980FL / 25% Styrolux S / 6% Styrolux T / 5% Kraton G1643 | | |
| Yield | in$^2$/lb | 13,902 | 13,076 | 12,687 |
| Density | g/cm$^3$ | 0.962 | 0.958 | 0.961 |
| Film Thickness (calculated) | microns | 53 | 56 | 58 |
| Skin Thickness (measured) | microns | 9.6 | 11.0 | 10.1 |
| Opacity | % | 23 | 24 | 24 |
| Opacity after shrink at 95 C | % | 28 | 31 | 30 |
| Gloss - IN | gu | 88 | 89 | 92 |
| Gloss - OUT | gu | 88 | 88 | 88 |
| Gurley Stiffness MD/TD | | 10.6 / 9.9 | 12.7/ 14.7 | 16.7 / 15.0 |

(continued)

| Film Property | Unit of Measure | Example 12. Three Layer Symmetric Film - Reclaim Simulation at 75% | | |
|---|---|---|---|---|
| Flex Stiffness MD/TD | g/in | 4.6 / 4.9 | 5.7 / 6.4 | 6.0 / 6.5 |
| PIN Puncture | g | 958 | 1070 | 1102 |

**Table 23.**

| Film Property | Unit of Measure | Example 12. Three Layer Symmetric Film-Reclaim Simulation at 75% | | |
|---|---|---|---|---|
| Skin Composition | | 80% Styrolux S / 20% Styrolux T | | |
| Core Composition | | 27% Adsyl 6C30F / 17% Koattro DP8310M / 20% Vistamaxx 3980FL / 25% Styrolux S / 6% Styrolux T / 5% Kraton G1643 | | |
| TD Shrink | | | | |
| 60° C | % | -1 | -1 | -1 |
| 65° C | % | 1 | 1.5 | 1.3 |
| 70° C | % | 11 | 12 | 11 |
| 75° C | % | 24 | 24 | 25 |
| 80° C | % | 37 | 38 | 38 |
| 85° C | % | 46 | 47 | 47 |
| 90° C | % | 54 | 54 | 55 |
| 95° C | % | 61 | 62 | 61 |
| 100° C | % | 67 | 66 | 67 |
| 105° C | % | 70 | 72 | 72 |
| Shrink Tension TD | | | | |
| | | | | |
| 80° C | grams | 229 | 240 | 236 |
| 85° C | grams | 229 | 217 | 220 |
| 90° C | grams | 216 | 218 | 218 |
| 95° C | grams | 225 | 212 | 226 |
| 100° C | grams | 251 | 208 | 233 |
| Natural Shrink TD | | | | |
| 30° C | % | 0 | -0.3 | -0.3 |
| 35°C | % | -0.2 | -0.2 | -0.2 |
| 40° C | % | 1.3 | 1 | 1.3 |
| 45° C | % | 1.5 | 1.5 | 1.5 |

As shown in tables 22 and 23 above, an attractive balance of properties (density, stiffness, TD shrink performance, and good storage temperature stability) is maintained even at very high levels of reclaim.

**Example 13**

As a further illustration of higher levels of reclaim to provide a cost effective approach for the introduction of floatable solid white shrink film, three additional films, identified as example 13 as a group, were fabricated by coextrusion, cast on a sequence of two chill rolls at 40 °C, stretched in machine direction (MD) 1.2X at 80 °C, then stretched in a tenter frame at 108 °C, cooled and wound up as described above. The films all contained skin layers with a combination of Styrolux S and Styrolux T and the core layer includes one or more styrene-butadiene triblock or diblock copolymers, one or more styrene-ethylene-co-butene-styrene triblock or styrene-ethylene-co-butene diblock copolymers therein, in combination with a propylene-ethylene-butene terpolymer or propylene-ethylene copolymer, a butene-ethylene copolymer and a propylene-based elastomeric polymer. This core layer composition is the result of simulating the incorporating of reclaim into the core at levels (simulation of 100% reclaim) which create significant opacity to the film.

**Table 24.**

| Film Property | Unit of Measure | Example 13. Three Layer Symmetric Film-Reclaim Simulation at 100% | | |
|---|---|---|---|---|
| Skin Composition | | 80% Styrolux S / 20% Styrolux T | | |
| Core Composition | | 22.2% Adsyl 6C30F / 13.2% Koattro DP8310M / 16.2% Vistamaxx 3980FL / 34.7% Styrolux S / 8.7% Styrolux T / 5% Kraton G1643 | | |
| Yield | in$^2$/lb | 16,941 | 14,854 | 13,903 |
| Density | g/cm$^3$ | 0.959 | 0.971 | 0.970 |
| Film Thickness (calculated) | microns | 43 | 49 | 52 |
| Skin Thickness (measured) | microns | 8.7 | 12.0 | 11.1 |
| Opacity | % | 18 | 18 | 20 |
| Opacity after shrink at 95 C | % | 27 | 27 | 27 |
| Gloss - IN | gu | >100 | >100 | 99 |
| Gloss - OUT | gu | 99 | >100 | 98 |
| Gurley Stiffness MD/TD | | 6.6 / 6.9 | 13.9/11.4 | 9.6/11.8 |
| Flex Stiffness MD/TD | g/in | 2.7 / 3.1 | 3.8/4.2 | 5.1/5.7 |
| PIN Puncture | g | 815 | 920 | 947 |

**Table 25.**

| Film Property | | | Unit of Measure | Example 13. Three Layer Symmetric Film-Reclaim Simulation at 100% |
|---|---|---|---|---|
| Skin Composition | | | | 80% Styrolux S / 20% Styrolux T |
| Core Composition | | | | 22.2% Adsyl 6C30F / 13.2% Koattro |
| | | DP8310M / 16.2% Vistamaxx 3980FL / 34.7% Styrolux S / 8.7% Styrolux T / 5% Kraton G1643 | | |
| TD Shrink | | | | |
| 60° C | % | -1 | -1 | -1 |
| 65° C | % | 1 | 1.3 | 1.2 |

(continued)

| TD Shrink | | | | | |
|---|---|---|---|---|---|
| 70° C | % | 12 | 12 | 12 | |
| 75° C | % | 27 | 28 | 27 | |
| 80° C | % | 42 | 42 | 41 | |
| 85° C | % | 43 | 45 | 44 | |
| 90° C | % | 59 | 59 | 61 | |
| 95° C | % | 66 | 67 | 66 | |
| 100° C | % | 71 | 72 | 70 | |
| 105° C | % | 74 | 75 | 74 | |
| Shrink Tension TD | | | | | |
| 80° C | grams | 239 | 250 | 238 | |
| 85° C | grams | 237 | 247 | 243 | |
| 90° C | grams | 236 | 222 | 243 | |
| 95° C | grams | 234 | 232 | 239 | |
| 100° C | grams | 209 | 211 | 224 | |
| Natural Shrink TD | | | | | |
| 30° C | % | -0.2 | -0.2 | 0 | |
| 35° C | % | -0.2 | -0.2 | -0.2 | |
| 40° C | % | 1.2 | 1 | 1 | |
| 45° C | % | 1.5 | 1.5 | 1.5 | |

Once again, as shown in tables 24 and 25 above, an attractive balance of properties (density, stiffness, TD shrink performance, and good storage temperature stability) is maintained even at the extreme level of a core structure which simulates a 100% reclaim composition.

In a fifth embodiment of the present invention a three layer shrink film includes a core layer and opposed skin layers; said skin layers being thinner than said core layer. In this embodiment the film structure is asymmetric, including one or more amorphous ethylene-norbomene polymers as one of the skin layers and one or more styrene-butadiene block copolymers (diblock or triblock) as the opposing skin layer. Hard resin can optionally be incorporated into the core formulation (alone or as a precompounded concentrate in Adsyl terpolymer) to improve the overall stiffness of the film and/or raise the TD shrink initiation temperature of the film and improve storage temperature stability of the film and/or improve the optical properties of the film with the addition of reclaim. The skin layer including one or more styrene-butadiene block copolymers (diblock or triblock) optionally includes one or more high styrene content polymers from the group consisting of styrene-ethylene-co-butene-styrene triblock copolymers, styrene-ethylene-co-propylene-styrene triblock copolymers, styrene-ethylene-co-butene diblock copolymers, styrene-ethylene-co-propylene diblock copolymers and combinations of said high styrene content triblock and diblock copolymers. The core layer optionally includes one or more styrene tetrablock, triblock or diblock copolymers therein, in combination with a propylene-ethylene-butene terpolymer, a butene-ethylene copolymer and a propylene-based elastomeric polymer. Also, a hard resin optionally can be included in the core. A representative film structure of this fourth embodiment including the optional components is shown below.

**Corona Treatment (optional)**

| | | | |
|---|---|---|---|
| ~4-12 μm | skin layer | 80-100% | (80% Styrolux S / 20% Styrolux T SBC) |

(continued)

| | | 0-20% | SEBS or SEP or SEPS |
|---|---|---|---|
| 32-45 μm | core layer | 30 - 40% | LYB Adsyl 6C30F Terpolymer |
| | | 20 - 27% | LYB Koattro DP8310M Polybutene-1 copolymer |
| | | 20 - 33% | Vistamaxx 3980FL or Versify 3000 |
| SEB | | 0 - 20% | Kraton G SEPSEP or SEBS or SEPS or SEP or Block Copolymers |
| | | 0 - 12% | Plastolyn R1140 or equivalent Hard Resin |
| ~4-12 μm | skin layer | 100% | 35-65% Topas 8007F-600 COC |
| | | | 65-35% Topas 9506F-500 COC |

**Corona Treatment (optional)**

In the above asymmetric film structure, the presence of a propylene based elastomer (Vistamaxx or Versify) in the core layer ensures an appropriate level of adhesion of the COC blend skin to the olefin core structure. The presence of a COC blend skin affects the shrink initiation temperature and the rate of the shrink response with temperature (i.e., the slope of the plot of shrink response with temperature). This asymmetric structure also reduces the level of high refractive index styrene copolymer present in the core (with the incorporation of edge trim and reclaim) which can adversely affect the optical properties of the film.

High styrene content triblock styrene-ethylene-co-butene-styrene or triblock styrene-ethylene-co-propylene-styrene or diblock styrene-ethylene-co-butene or diblock styrene-ethylene-co-propylene structures suitable to incorporate into the skin layer of this structure are commercially available from Asahi KASEI Corporation, Tokyo, Japan and include the same triblock and diblock copolymers identified above with respect to the second embodiment of this invention. In addition, the hard resins usable in this invention include the same hard resins identified above with respect to the third embodiment of this invention.

**Example 14**

Three additional films, identified as example 14 as a group, were fabricated by coextrusion, cast on a sequence of two chill rolls at 35 °C, stretched in machine direction (MD) 1.2X at 85 °C, then stretched in a tenter frame at 99 °C, cooled and wound up as described above.. The films all contained asymmetric skin layers with a combination of Styrolux S and Styrolux T on one side and a combination of 8007F-600 COC and 9506F-500 COC on the other side. Properties are provided in tables 26 and table 27 below.

**Table 26.**

| Film Property | | Unit of Measure | Example 14. Asymmetric Skin Structure | | |
|---|---|---|---|---|---|
| Skin Composition IN OUT | | | 80% Styrolux S / 20% Styrolux T 40% Topas 8007F-600 / 60% Topas 9506F-500 | | |
| Core Composition | | | 40% Adsyl 6C30F / 20% Koattro DP8310M / 20% Vistamaxx 3980FL / 20% Kraton G1657 | | |
| Yield | | in²/lb | 15,241 | 13,903 | 13,516 |
| Density | | g/cm³ | 0.927 | 0.923 | 0.926 |
| Film Thickness (calculated) | | microns | 50 | 55 | 57 |
| Skin Thickness (measured) | | microns | 10.3 | 7.2 | 11.3 |
| Haze | | % | 1.0 | 0.8 | 0.9 |
| Gloss - IN | | gu | >100 | >100 | >100 |
| Gloss - OUT | | gu | 99 | >100 | 100 |
| Blocking | | | | | |
| RT, 150 psi, 24 hrs | | g/in | No blocking | | |

(continued)

| Film Property | Unit of Measure | Example 14. Asymmetric Skin Structure | | |
|---|---|---|---|---|
| 35° C, 150 psi, 3 hrs | g/in | No blocking | | |
| Gurley Stiffness MD | | 8.1 | 10.1 | 13.8 |
| Flex Stiffness MD/TD | g/in | 4.2 / 5.4 | 3.8 / 5.1 | 5.2 / 6.9 |
| PIN Puncture | g | 1122 | 1284 | 1298 |

**Table 27.**

| Film Property | Unit of Measure | Example 14. Asymmetric Skin Structure | | |
|---|---|---|---|---|
| Skin IN Composition OUT | | 80% Styrolux S / 20% Styrolux T<br><br>40% Topas 8007F-600 / 60% Topas 9506F-500 | | |
| Core Composition | | 40% Adsyl 6C30F / 20% Koattro DP8310M / 20% Vistamaxx 3980FL / 20% Kraton G1657 | | |
| TD Shrink | | | | |
| 60° C | % | 0 | 0 | 0 |
| 65° C | % | 5 | 5 | 5 |
| 70° C | % | 13 | 14 | 13 |
| 75° C | % | 28 | 28 | 28 |
| 80° C | % | 46 | 44 | 46 |
| 85° C | % | 53 | 54 | 53 |
| 90° C | % | 61 | 62 | 62 |
| 95° C | % | 67 | 67 | 68 |
| 100° C | % | 70 | 72 | 71 |
| 105° C | % | 74 | 73 | 74 |
| Shrink TD Tension | | | | |
| 80° C | grams | 476 | 467 | 525 |
| 85° C | grams | 493 | 512 | 604 |
| 90° C | grams | 562 | 540 | 605 |
| 95° C | grams | 501 | 532 | 574 |
| 100° C | grams | 509 | 508 | 492 |
| Natural TD Shrink | | | | |
| 30° C | % | 0.5 | 0.5 | 0.5 |
| 35° C | % | 1.0 | 1.0 | 1.0 |
| 40° C | % | 3.5 | 3.0 | 3.25 |
| 45° C | % | 5.0 | 5.25 | 5.25 |

The use of asymmetric skins leads to excellent optical properties, very good film stiffness, and good natural shrink stability.

In a sixth embodiment of the present invention a five layer shrink film includes a core layer, opposed skin layers and two intermediate adhesive layers interposed between the core and the two skin layers; said intermediate adhesive layers and skin layers being thinner than said core layer. In this embodiment the film structure is symmetric, with one or more styrene-butadiene block copolymers (diblock or triblock) as the opposing skin layers and intermediate layers consisting of blends of one or more polymers from the group consisting of styrene-ethylene-co-butene-styrene triblock copolymer, styrene-ethylene-co-propylene-styrene triblock copolymer, styrene-ethylene-co-butene diblock copolymer, styrene-ethylene-co-propylene diblock copolymer and at least one or more polypropylene terpolymer or copolymer. The core layer optionally includes one or more styrene tetrablock, triblock or diblock copolymers therein, in combination with a propylene-ethylene-butene terpolymer, a butene-ethylene copolymer and a propylene-based elastomeric polymer. Also, a hard resin optionally can be included in the core formulation (alone or as a precompounded concentrate in polypropylene terpolymer) to improve the overall stiffness of the film and/or raise the TD shrink initiation temperature of the film and improve storage temperature stability of the film and/or improve the optical properties of the film with the addition of reclaim. A representative film structure of this sixth embodiment including the optional components is shown below.

Corona Treatment (optional)

| | | |
|---|---|---|
| ~4-12 μm | skin layer | 80-100% (65 - 100% Styrolux S / 0 - 35% Styrolux T SBC)<br>0-20% (SEBS or SEP or SEPS) |
| 1.5 - 4.5 μm | inter. layer | 60-95% Kraton G SEBS or SEPS Block Copolymer<br>5-40% LYB 6C30F Terpolymer or Total 8573 Copolymer |
| 30-45 μm 7415XCP copolymer<br><br>SEP or SEB | core layer | 30 - 40% LYB Adsyl 6C30F Terpolymer or Adsyl<br>20 - 27% LYB Koattro DP8310M Polybutene-1<br>20 - 33% Vistamaxx 3980FL or Versify 3000<br>0-20% Kraton G SEPSEP or SEBS or SEPS or Block Copolymers<br>0 - 16% Plastolyn R1140 or equivalent Hard Resin |
| 1.5 - 4.5 μm Copolymer Copolymer | inter. layer | 60-95% Kraton G SEBS or SEPS Block<br>5-40% LYB 6C30F Terpolymer or Total 8573 |
| ~4-12 μm T SBC) | skin layer | 80-100% (65 - 100% Styrolux S / 0 - 35% Styrolux<br>0-20% ((SEBS or SEP or SEPS)) |

Corona Treatment (optional)

**Example 15**

Three additional films, identified as example 15 as a group, were fabricated by coextrusion, cast on a sequence of two chill rolls at 35 °C, stretched in machine direction (MD) 1.2X at 85 °C, then stretched in a tenter frame at 103 °C, cooled and wound up as described above.. The films all contained skin layers with a combination of 80% Styrolux S and 20% Styrolux T. and a core composition comprising polypropylene terpolymer, polybutene-1 copolymer, and propylene-ethylene elastomeric copolymer. The intermediate layers are a blend of 65% Kraton G1643 and 35% Adsyl 6C30F. Properties are provided in tables 28 and table 29 below .

**Table 28.**

| Film Property | Unit of Measure | Example 15. Five Layer Symmetric Film |
|---|---|---|
| Skin Composition | | 80% Styrolux S / 20% Styrolux T |

(continued)

| Film Property | Unit of Measure | Example 15. Five Layer Symmetric Film | | |
|---|---|---|---|---|
| Interlayer Composition | | 65% Kraton G1643 / 35% Adsyl 6C30F | | |
| Core Composition | | 40% Adsyl 6C30F / 26.7% Koattro DP8310M / 33.3% Vistamaxx 3980FL | | |
| Yield | in$^2$/lb | 14,505 | 14,273 | 13,109 |
| Density | g/cm$^3$ | 0.933 | 0.935 | 0.937 |
| Film Thickness (calculated) | microns | 52 | 53 | 57 |
| Interlayer Thickness ( measured) | microns | 4.1 | 3.3 | 4.3 |
| Skin Thickness (measured) | microns | 8.6 | 9.5 | 8.4 |
| Haze | % | 1.4 | 1.5 | 0.9 |
| Gloss - IN | gu | >100 | >100 | >100 |
| Gloss - OUT | gu | >100 | >100 | 100 |
| Blocking | | | | |
| RT, 150 psi, 24 hrs | g/in | No blocking | | |
| 35° C, 150 psi, 3 hrs | g/in | No blocking | | |
| Gurley Stiffness MD/TD | | 10.0/9.5 | 13.6/12.7 | 16.3 / 14.2 |
| Flex Stiffness MD/TD | g/in | 5.1 / 5.6 | 4.1 / 4.8 | 5.9/6.1 |
| PIN Puncture | g | 1417 | 1208 | 1395 |
| COF Static/ Kinetic In/In Out/Out In/Out | | 0.72/0.63 0.75/0.75 0.80/0.71 | 0.73/0.59 0.95/0.80 0.68/0.65 | --- --- --- |

**Table 29.**

| Film Property | | Unit of Measure | | Example 15. Five Layer Symmetric Film |
|---|---|---|---|---|
| Skin Composition | | | | 80% Styrolux S / 20% Styrolux T |
| Interlayer Composition | | 65% Kraton G 1643 / 35% Adsyl 6C30F | | |
| Core Composition | | 40% Adsyl 6C30F / 26.7% Koattro DP8310M / 33.3% Vistamaxx 3980FL | | |
| TD Shrink | | | | |
| 60° C | % | 1.5 | 1.7 | 1.5 |
| 65° C | % | 10 | 10 | 9 |
| 70° C | % | 21 | 21 | 21 |
| 75° C | % | 27 | 27 | 26 |
| 80° C | % | 41 | 43 | 40 |
| 85° C | % | 52 | 52 | 51 |
| 90° C | % | 59 | 59 | 60 |

(continued)

| Film Property | | | Unit of Measure | Example 15. Five Layer Symmetric Film |
|---|---|---|---|---|
| 95° C | % | 64 | 63 | 64 |
| 100° C | % | 68 | 69 | 70 |
| 105° C | % | 71 | 71 | 72 |
| Shrink Tension      TD | | | | |
| 80° C | grams | 309 | 304 | 345 |
| 85° C | grams | 368 | 350 | 406 |
| 90° C | grams | 355 | 353 | 411 |
| 95° C | grams | 337 | 331 | 370 |
| 100° C | grams | 321 | 334 | 336 |
| Natural Shrink      TD | | | | |
| 30° C | % | 0.5 | 0.5 | 0.5 |
| 35°C | % | 1.0 | 1.0 | 1.0 |
| 40° C | % | 1.5 | 1.0 | 1.25 |
| 45° C | % | 6.5 | 6.25 | 6.5 |

The five layer films exhibit an excellent balance of optics, stiffness, and TD shrink performance. The natural shrink stability under normal storage conditions ($\leq 40$ °C) for the five layer structure is significantly improved relative to a 3 layer structure with the same styrene-ethylene/butene-styrene triblock elastomer in the core (described in example 4).

## Example 16

Three additional films, identified as example 16 as a group, were fabricated by coextrusion, cast on a sequence of two chill rolls at 40 °C, stretched in machine direction (MD) 1.2X at 80 °C, then stretched in a tenter frame at 108 °C, cooled and wound up as described above. The films all contained skin layers with a combination of 90% Styrolux S and 10% Styrolux T. and a core composition comprising polypropylene terpolymer, polybutene-1 copolymer, and propylene-ethylene elastomeric copolymer. The intermediate layers are a blend of 70% Kraton G1643 and 30% Adsyl 6C30F. Properties are provided in tables 30 and table 31 below .

**Table 30.**

| Film Property | Unit of Measure | Example 16. Five Layer Symmetric Film | | |
|---|---|---|---|---|
| Skin Composition | | 90% Styrolux S / 10% Styrolux T | | |
| Interlayer Composition | | 70% Kraton G1643 / 30% Adsyl 6C30F | | |
| Core Composition | | 40% Adsyl 6C30F / 26.7% Koattro DP8310M / 33.3% Vistamaxx 3980FL | | |
| Yield | in$^2$/lb | 18,158 | 16,660 | 16,016 |
| Density | g/cm$^3$ | 0.940 | 0.933 | 0.936 |
| Film Thickness (calculated) | microns | 41 | 45 | 47 |
| Interlayer Thickness ( measured) | microns | 3.6 | 3.8 | 3.8 |
| Skin Thickness (measured) | microns | 6.8 | 10.8 | 9.6 |
| Haze | % | 1.2 | 0.9 | 1.4 |

(continued)

| Film Property | | Unit of Measure | Example 16. Five Layer Symmetric Film | | |
|---|---|---|---|---|---|
| Gloss - IN | | gu | >100 | >100 | >100 |
| Gloss - OUT | | gu | >100 | >100 | >100 |
| Gurley Stiffness | MD/TD | | 6.5 / 7.2 | 5.9/9.5 | 7.2 / 7.9 |
| Flex Stiffness | MD/TD | g/in | 2.5 / 3.0 | 2.1/2.4 | 4.0/5.4 |

**Table 31.**

| Film Property | Unit of Measure | Example 16. Five Layer Symmetric Film | | |
|---|---|---|---|---|
| Skin Composition | | 90% Styrolux S / 10% Styrolux T | | |
| Interlayer Composition | | 70% Kraton G 1643 / 30% Adsyl 6C30F | | |
| Core Composition | | 40% Adsyl 6C30F / 26.7% Koattro DP8310M / 33.3% Vistamaxx 3980FL | | |
| TD Shrink | | | | |
| 60° C | % | -1 | -1 | -1 |
| 65° C | % | 1 | 1 | 1 |
| 70° C | % | 13 | 12 | 11 |
| 75° C | % | 28 | 27 | 28 |
| 80° C | % | 39 | 38 | 38 |
| 85° C | % | 50 | 51 | 50 |
| 90° C | % | 62 | 62 | 62 |
| 95° C | % | 62 | 62 | 62 |
| 100° C | % | 70 | 69 | 69 |
| 105° C | % | 72 | 71 | 72 |
| Shrink TD Tension | | | | |
| 85° C | grams | 169 | 174 | 199 |
| 90° C | grams | 232 | 195 | 226 |
| 95° C | grams | 212 | 209 | 241 |
| 100° C | grams | 213 | 206 | 234 |
| Natural TD Shrink | | | | |
| 35°C | % | 0 | 0 | 0 |
| 40° C | % | 0 | 0 | 0 |
| 45° C | % | 2.5 | 2.5 | 2.5 |

The five layer films exhibit an excellent balance of optics, stiffness, and TD shrink performance. The natural shrink under normal storage conditions (≤ 40 °C) exhibits a high degree of stability (no TD dimensional change for 24 hours) for the five layer structure.

**Example 17**

Three additional films, identified as example 17 as a group, were fabricated by coextrusion, cast on a sequence of two chill rolls at 40 °C, stretched in machine direction (MD) 1.2X at 80 °C, then stretched in a tenter frame at 105 °C, cooled and wound up as described above. The films all contained skin layers of 100% Styrolux S and a core composition comprising polypropylene terpolymer, polybutene-1 copolymer, and propylene-ethylene elastomeric copolymer. The intermediate layers are a blend of 70% Kraton G1643 and 30% Adsyl 6C30F. Properties are provided in tables 32 and table 33 below .

**Table 32.**

| Film Property | Unit of Measure | Example 17. Five Layer Symmetric Film | | |
|---|---|---|---|---|
| Skin Composition | | 100% Styrolux S | | |
| Interlayer Composition | | 70% Kraton G1643 / 30% Adsyl 6C30F | | |
| Core Composition | | 40% Adsyl 6C30F / 26.7% Koattro DP8310M / 33.3% Vistamaxx 3980FL | | |
| Yield | $in^2$/lb | 18,809 | 17,362 | 16,426 |
| Density | g/cm$^3$ | 0.935 | 0.940 | 0.943 |
| Film Thickness (calculated) | microns | 40 | 43 | 45 |
| Interlayer Thickness ( measured) | microns | 3.2 | 2.8 | 3.1 |
| Skin Thickness (measured) | microns | 7.1 | 8.0 | 9.4 |
| Haze | % | 1.0 | 0.6 | 0.5 |
| Gloss - IN | gu | >100 | >100 | >100 |
| Gloss - OUT | gu | >100 | >100 | >100 |
| Gurley Stiffness       MD/TD | | 8.5 / 6.7 | 6.4 / 7.5 | 8.4 / 8.4 |
| Flex Stiffness       MD/TD | g/in | 1.7 / 2.2 | 2.3 / 2.7 | 2.8/3.1 |

**Table 33.**

| Film Property | Unit of Measure | Example 17. Five Layer Symmetric Film | | |
|---|---|---|---|---|
| Skin Composition | | 100% Styrolux S | | |
| Interlayer Composition | | 70% Kraton G 1643 / 30% Adsyl 6C30F | | |
| Core Composition | | 40% Adsyl 6C30F / 26.7% Koattro DP8310M / 33.3% Vistamaxx 3980FL | | |
| TD Shrink | | | | |
| 60° C | % | -1 | -1 | -1 |
| 65° C | % | 0 | 0 | 0 |
| 70° C | % | 9 | 12 | 11 |
| 75° C | % | 26 | 26 | 26 |
| 80° C | % | 38 | 38 | 38 |
| 85° C | % | 49 | 47 | 46 |
| 90° C | % | 63 | 63 | 63 |

(continued)

| Film Property | Unit of Measure | Example 17. Five Layer Symmetric Film | | |
|---|---|---|---|---|
| 95° C | % | 63 | 63 | 63 |
| 100° C | % | 68 | 69 | 68 |
| 105° C | % | 72 | 71 | 71 |
| Shrink Tension     TD | | | | |
| 85° C | grams | 183 | 193 | 230 |
| 90° C | grams | 227 | 179 | 222 |
| 95° C | grams | 211 | 177 | 218 |
| 100° C | grams | 213 | 237 | 218 |
| Natural Shrink     TD | | | | |
| 35°C | % | 0 | 0 | 0 |
| 40° C | % | 0 | 0 | 10 |
| 45° C | % | 1.5 | 1.5 | 1.5 |

The five layer films exhibit an excellent balance of optics, stiffness, and TD shrink performance. The natural shrink under normal storage conditions ($\leq$ 40 °C) exhibits an exceptional degree of stability (no TD dimensional change for 24 hours) for the five layer structure.

**Example 18**

Three additional films, identified as example 18 as a group, were produced by coextrusion, cast on a sequence of two chill rolls at 40 °C, stretched in machine direction (MD) 1.2X at 80 °C, then stretched in a tenter frame at 108 °C, cooled and wound up as described above. The films all contained skin layers with a combination of 80% Styrolux S and 20% Styrolux T. and a core composition comprising fractional melt flow polypropylene-ethylene copolymer, polybutene-1 copolymer, and propylene-ethylene elastomeric copolymer. The intermediate layers are a blend of 70% Kraton G1643 and 30% Total 8573 high ethylene copolymer. Properties are provided in tables 34 and table 35 below .

**Table 34.**

| Film Property | Unit of Measure | Example 18. Five Layer Symmetric Film | | |
|---|---|---|---|---|
| Skin Composition | | 80% Styrolux S / 20% Styrolux T | | |
| Interlayer Composition | | 70% Kraton G1643 / 30% Total 8573 | | |
| Core Composition | | 40% Adsyl 7415 XCP / 26.7% Koattro DP8310M / 33.3% Vistamaxx 3980FL | | |
| Yield | in$^2$/lb | 13,018 | 12,761 | 12,211 |
| Density | g/cm$^3$ | 0.934 | 0.937 | 0.938 |
| Film Thickness (calculated) | microns | 58 | 59 | 61 |
| Interlayer Thickness ( measured) | microns | 5.4 | 5.2 | 4.1 |
| Skin Thickness (measured) | microns | 10.8 | 10.6 | 10.2 |
| Haze | % | 2.2 | 2.7 | 2.4 |
| Gloss - IN | gu | >100 | >100 | >100 |
| Gloss - OUT | gu | >100 | >100 | >100 |

(continued)

| Film Property | | Unit of Measure | Example 18. Five Layer Symmetric Film | | |
|---|---|---|---|---|---|
| Gurley Stiffness | MD/TD | | 12.1 / 15.1 | 14.9/16.4 | 14.5 / 15.7 |
| Flex Stiffness | MD/TD | g/in | 5.6 / 6.1 | 6.6/7.1 | 7.3 / 8.1 |
| PIN Puncture | | g | 1111 | 1070 | 1162 |

**Table 35.**

| Film Property | Unit of Measure | Example 18. Five Layer Symmetric Film | | |
|---|---|---|---|---|
| Skin Composition | | 80% Styrolux S / 20% Styrolux T | | |
| Interlayer Composition | | 70% Kraton G1643 / 30% Total 8573 | | |
| Core Composition | | 40% Adsyl 7415 XCP / 26.7% Koattro DP8310M / 33.3% Vistamaxx 3980FL | | |
| TD Shrink | | | | |
| 60° C | % | 0 | 0 | -0.3 |
| 65° C | % | 4 | 4 | 4 |
| 70° C | % | 14 | 14 | 14 |
| 75° C | % | 25 | 25 | 26 |
| 80° C | % | 33 | 32 | 34 |
| 85° C | % | 39 | 39 | 40 |
| 90° C | % | 46 | 46 | 47 |
| 95° C | % | 52 | 53 | 54 |
| 100° C | % | 57 | 57 | 59 |
| 105° C | % | 63 | 64 | 64 |
| Shrink Tension    TD | | | | |
| 80° C | grams | 458 | 426 | 433 |
| 85° C | grams | 453 | 425 | 431 |
| 90° C | grams | 458 | 428 | 462 |
| 95° C | grams | 447 | 425 | 462 |
| 100° C | grams | 481 | 469 | 460 |
| Natural Shrink    TD | | | | |
| 30° C | % | 0 | 0 | 0 |
| 35° C | % | 0.5 | 0.5 | 0.5 |
| 40° C | % | 2.5 | 2.5 | 2.5 |
| 45° C | % | 3 | 3 | 3 |

The five layer films of example 18 illustrate propylene-ethylene copolymers can be substituted for the terpolymer component of the interlayer composition while retaining key performance characteristics of the film (floatability, haze < 6%, shrink at 95° C > 50%). Some increase in shrink tension and a reduction of natural shrink at the highest temperature (45°C) was observed relative to the films of example 15, consistent with the greater rigidity of the copolymer.

## Example 19

Three additional films, identified as example 19 as a group, were produced by coextrusion, cast on a sequence of two chill rolls at 40 °C, stretched in machine direction (MD) 1.2X at 80 °C, then stretched in a tenter frame at 105 °C, cooled and wound up as described above. The films all contained skin layers with a combination of 80% Styrolux S and 20% Styrolux T. and a core composition comprising fractional melt flow polypropylene-ethylene copolymer, polybutene-1 copolymer, and propylene-ethylene elastomeric copolymer. The intermediate layers are a blend of 70% Kraton G1643 and 30% Adsyl 6C30F terpolymer. Substituting a fractional melt flow rate propylene-ethylene copolymer in the film core in place of the higher melt flow rate terpolymer of examples 15 provides improvements in extrusion stability and extrudate melt strength. Properties are provided in tables 36 and table 37 below.

**Table 36.**

| Film Property | | Unit of Measure | Example 19. Five Layer Symmetric Film | | |
|---|---|---|---|---|---|
| Skin Composition | | | 80% Styrolux S / 20% Styrolux T | | |
| Interlayer Composition | | | 70% Kraton G1643 / 30% Adsyl 6C30F | | |
| Core Composition | | | 40% Adsyl 7415 XCP / 26.7% Koattro DP8310M / 33.3% Vistamaxx 3980FL | | |
| Yield | | in$^2$/lb | 20,313 | 17,201 | 16,901 |
| Density | | g/cm$^3$ | 0.953 | 0.958 | 0.946 |
| Film Thickness (calculated) | | microns | 36 | 43 | 44 |
| Interlayer Thickness (measured) | | microns | 3.7 | 3.5 | 4.7 |
| Skin Thickness (measured) | | microns | 7.9 | 10.0 | 10.5 |
| Haze | | % | 1.1 | 1.0 | 1.5 |
| Gloss - IN | | gu | >100 | >100 | >100 |
| Gloss - OUT | | gu | >100 | >100 | >100 |
| Gurley Stiffness | MD/TD | | 4.3 / 3.9 | 5.0 / 6.0 | 7.3 / 7.2 |
| Flex Stiffness | MD/TD | g/in | 1.7 / 1.9 | 2.8 / 3.1 | 2.4 / 2.9 |
| PIN Puncture | | g | 631 | 912 | 873 |

**Table 37.**

| Film Property | Unit of Measure | Example 19. Five Layer Symmetric Film | | |
|---|---|---|---|---|
| Skin Composition | | 80% Styrolux S / 20% Styrolux T | | |
| Interlayer Composition | | 70% Kraton G1643 / 30% Adsyl 6C30F | | |
| Core Composition | | 40% Adsyl 7415 XCP / 26.7% Koattro DP8310M / 33.3% Vistamaxx 3980FL | | |
| TD Shrink | | | | |
| 60° C | % | 0 | 0 | -0.2 |
| 65° C | % | 4.7 | 4.2 | 4.7 |
| 70° C | % | 16 | 17 | 16 |
| 75° C | % | 31 | 29 | 32 |

(continued)

| TD Shrink | | | | |
|---|---|---|---|---|
| 80° C | % | 40 | 40 | 40 |
| 85° C | % | 47 | 48 | 48 |
| 90° C | % | 53 | 54 | 54 |
| 95° C | % | 59 | 59 | 58 |
| 100° C | % | 64 | 64 | 61 |
| 105° C | % | 68 | 68 | 66 |
| Shrink Tension          TD | | | | |
| 80° C | grams | 268 | 253 | 352 |
| 85° C | grams | 310 | 298 | 320 |
| 90° C | grams | 312 | 288 | 322 |
| 95° C | grams | 232 | 287 | 287 |
| 100° C | grams | 304 | 260 | 300 |
| Natural Shrink          TD | | | | |
| 30° C | % | 0 | 0 | 0 |
| 35 °C | % | 0.3 | 0.3 | 0.5 |
| 40° C | % | 2.5 | 2.7 | 2.7 |
| 45° C | % | 3.5 | 3 | 3 |

Five layer films with a well-balanced and attractive combination of optical properties, shrink performance, low shrink tension, and stable natural shrink at typical storage temperatures were observed.

**Example 20**

Three additional films, identified as example 20 as a group, were fabricated by coextrusion, cast on a sequence of two chill rolls at 40 °C, stretched in machine direction (MD) 1.2X at 85 °C, then stretched in a tenter frame at 105 °C, cooled and wound up as described above.. The films all contained skin layers of 100% of Styrolux S and a core composition comprising fractional melt flow polypropylene-ethylene copolymer, polybutene-1 copolymer, and propylene-ethylene elastomeric copolymer. The intermediate layers are a blend of 70% Kraton G1643 and 30% Adsyl 6C30F terpolymer. Substituting a fractional melt flow rate propylene-ethylene copolymer in the film core in place of the higher melt flow rate terpolymer of example 17 provides improvements in extrusion stability and extrudate melt strength. Properties are provided in tables 38 and table 39 below.

**Table 38.**

| Film Property | | Unit of Measure | Example 20. Five Layer Symmetric Film | | |
|---|---|---|---|---|---|
| Skin Composition | | | 100% Styrolux S | | |
| Interlayer Composition | | 70% Kraton G1643 / 30% Adsyl 6C30F | | | |
| Core Composition | | 40% Adsyl 7415 XCP / 26.7% Koattro DP8310M / 33.3% Vistamaxx 3980FL | | | |
| Yield | in$^2$/lb | 20,313 | 17,201 | 16,901 | |
| Density | g/cm$^3$ | 0.953 | 0.958 | 0.946 | |
| Film Thickness (calculated) | microns | 36 | 43 | 44 | |
| Interlayer Thickness ( measured) | microns | 3.7 | 3.5 | 4.7 | |

(continued)

| Film Property | | | Unit of Measure | Example 20. Five Layer Symmetric Film |
|---|---|---|---|---|
| Skin Thickness (measured) | microns | 7.9 | 10.0 | 10.5 |
| Haze | % | 1.1 | 1.0 | 1.5 |
| Gloss - IN | gu | >100 | >100 | >100 |
| Gloss - OUT | gu | >100 | >100 | >100 |
| Gurley Stiffness       MD/TD | | 4.3 / 3.9 | 5.0 / 6.0 | 7.3 / 7.2 |
| Flex Stiffness       MD/TD | g/in | 1.7 / 1.9 | 2.8 / 3.1 | 2.4 / 2.9 |
| PIN Puncture | g | 631 | 912 | 873 |

**Table 39.**

| Film Property | Unit of Measure | Example 20. Five Layer Symmetric Film | | |
|---|---|---|---|---|
| Skin Composition | | 100% Styrolux S | | |
| Interlayer Composition | | 70% Kraton G1643 / 30% Adsyl 6C30F | | |
| Core Composition | | 40% Adsyl 7415 XCP / 26.7% Koattro DP8310M / 33.3% Vistamaxx 3980FL | | |
| TD Shrink | | | | |
| 60° C | % | 0 | 0 | -0.2 |
| 65° C | % | 4.7 | 4.2 | 4.7 |
| 70° C | % | 16 | 17 | 16 |
| 75° C | % | 31 | 29 | 32 |
| 80° C | % | 40 | 40 | 40 |
| 85° C | % | 47 | 48 | 48 |
| 90° C | % | 53 | 54 | 54 |
| 95° C | % | 59 | 59 | 58 |
| 100° C | % | 64 | 64 | 61 |
| 105° C | % | 68 | 68 | 66 |
| Shrink Tension       TD | | | | |
| 80° C | grams | 268 | 253 | 352 |
| 85° C | grams | 310 | 298 | 320 |
| 90° C | grams | 312 | 288 | 322 |
| 95° C | grams | 232 | 287 | 287 |
| 100° C | grams | 304 | 260 | 300 |
| Natural Shrink       TD | | | | |
| 30° C | % | 0 | 0 | 0 |
| 35°C | % | 0.3 | 0.3 | 0.5 |
| 40° C | % | 2.5 | 2.7 | 2.7 |
| 45° C | % | 3.5 | 3 | 3 |

Five layer films with a well-balanced and attractive combination of optical properties, shrink performance, low shrink tension, and stable natural shrink at typical storage temperatures were observed.

**Example 21**

Three additional films, identified as example 21 as a group, were produced by coextrusion, cast on a sequence of two chill rolls at 40 °C, stretched in machine direction (MD) 1.2X at 80 °C, then stretched in a tenter frame at 108 °C, cooled and wound up as described above.. The films all contained skin layers with a combination of 80% Styrolux S and 20% Styrolux T and a core composition comprising a concentrate of 60% fractional melt flow polypropylene-ethylene copolymer and 40% Plastolyn R1140 hard resin, polybutene-1 copolymer, and propylene-ethylene elastomeric copolymer. The intermediate layers are a blend of 70% Kraton G1643 and 30% Adsyl 6C30F terpolymer. Properties are provided in tables 40 and table 41 below .

**Table 40.**

| Film Property | Unit of Measure | Example 21. Five Layer Symmetric Film | | |
|---|---|---|---|---|
| Skin Composition | | 80% Styrolux S / 20% Styrolux T | | |
| Interlayer Composition | | 70% Kraton G1643 / 30% Adsyl 6C30F | | |
| Core Composition | | 40% (60% Adsyl 7415 XCP/40% Plastolyn R1140) Concentrate) / 26.7% Koattro DP8310M / 33.3% Vistamaxx 3980FL | | |
| Yield | $in^2$/lb | 13,639 | 12,717 | 12,271 |
| Density | g/$cm^3$ | 0.947 | 0.935 | 0.944 |
| Film Thickness (calculated) | microns | 54 | 59 | 61 |
| Interlayer Thickness ( measured) | microns | 5.3 | 4.7 | 4.8 |
| Skin Thickness (measured) | microns | 8.5 | 11.1 | 10.7 |
| Haze | % | 1.1 | 0.8 | 1.0 |
| Gloss - IN | gu | >100 | >100 | >100 |
| Gloss - OUT | gu | >100 | >100 | >100 |
| Gurley Stiffness      MD/TD | | 11.3/ 12.5 | 12.7 / 15.8 | 20.1 / 17.4 |
| Flex Stiffness     MD/TD | g/in | 5.0 / 5.7 | 5.3 / 6.3 | 6.4 / 7.2 |
| PIN Puncture | g | 935 | 1052 | 1081 |

**Table 41.**

| Film Property | Unit of Measure | Example 21. Five Layer Symmetric Film |
|---|---|---|
| Skin Composition | | 80% Styrolux S / 20% Styrolux T |
| Interlayer Composition | | 70% Kraton G1643 / 30% Adsyl 6C30F |
| Core Composition | | 40% (60% Adsyl 7415 XCP/40% Plastolyn |
| | R1140) Concentrate) / 26.7% Koattro DP8310M / 33.3% Vistamaxx 3980FL | |

(continued)

| TD Shrink | | | | |
|---|---|---|---|---|
| 60° C | % | 0 | -0.2 | 0 |
| 65° C | % | 2.5 | 2.7 | 2.8 |
| 70° C | % | 16 | 16 | 17 |
| 75° C | % | 30 | 30 | 31 |
| 80° C | % | 43 | 41 | 44 |
| 85° C | % | 50 | 50 | 51 |
| 90° C | % | 58 | 58 | 59 |
| 95° C | % | 64 | 62 | 63 |
| 100° C | % | 68 | 68 | 69 |
| 105° C | % | 71 | 71 | 73 |
| Shrink Tension TD | | | | |
| 80° C | grams | 267 | 273 | 264 |
| 85° C | grams | 268 | 259 | 280 |
| 90° C | grams | 273 | 276 | 293 |
| 95° C | grams | 292 | 301 | 298 |
| 100° C | grams | 294 | 308 | 298 |
| Natural Shrink TD | | | | |
| 30° C | % | 0 | 0 | 0 |
| 35° C | % | 0.5 | 0 | 0.3 |
| 40° C | % | 2 | 2 | 2 |
| 45° C | % | 2.5 | 2.5 | 2.5 |

The introduction of hard resin in the core provides an enhancement of film properties, including stiffness, shrink performance, lower shrink tension, and natural shrink stability at the highest storage temperatures.

**Example 22**

Three additional films, identified as example 22 as a group, were produced by coextrusion, cast on a sequence of two chill rolls at 40 °C, stretched in machine direction (MD) 1.2X at 80 °C, then stretched in a tenter frame at 108 °C, cooled and wound up as described above. The films all contained skin layers with a combination of 80% Styrolux S and 20% Styrolux T and a core composition comprising a concentrate of 60% fractional melt flow polypropylene-ethylene copolymer and 40% Plastolyn R1140 hard resin, fractional melt flow polypropylene-ethylene copolymer, polybutene-1 copolymer, and propylene-ethylene elastomeric copolymer. The intermediate layers are a blend of 70% Kraton G1643 and 30% Adsyl 6C30F terpolymer. Properties are provided in table 42 and table 43 below .

**Table 42.**

| Film Property | Unit of Measure | Example 22. Five Layer Symmetric Film |
|---|---|---|
| Skin Composition | | 80% Styrolux S / 20% Styrolux T |
| Interlayer Composition | | 70% Kraton G1643 / 30% Adsyl 6C30F |
| Core Composition | | 30% (60% Adsyl 7415 XCP/40% Plastolyn R1140) Concentrate) / 10% Adsyl 7415 XCP/ 26.7% Koattro DP8310M / 33.3% Vistamaxx 3980FL |

(continued)

| Film Property | Unit of Measure | Example 22. Five Layer Symmetric Film | | |
|---|---|---|---|---|
| Yield | in²/lb | 13,582 | 12,584 | 11,481 |
| Density | g/cm³ | 0.941 | 0.940 | 0.945 |
| Film Thickness (calculated) | microns | 55 | 59 | 65 |
| Interlayer Thickness ( measured) | microns | 3.9 | 4.7 | 4.9 |
| Skin Thickness (measured) | microns | 10.2 | 9.2 | 11.1 |
| Haze | % | 1.0 | 0.7 | 1.1 |
| Gloss - IN | gu | >100 | >100 | >100 |
| Gloss - OUT | gu | >100 | >100 | >100 |
| Gurley Stiffness        MD/TD | | 12.9/13.4 | 12.9/17.6 | 18.7/26.4 |
| Flex Stiffness     MD/TD | g/in | 4.9 / 6.3 | 6.8 / 7.4 | 8.5 / 9.7 |
| PIN Puncture | g | 878 | 1147 | 1151 |

**Table 43.**

| Film Property | Unit of Measure | Example 22. Five Layer Symmetric Film | | |
|---|---|---|---|---|
| Skin Composition | | 80% Styrolux S / 20% Styrolux T | | |
| Interlayer Composition | | 70% Kraton G1643 / 30% Adsyl 6C30F | | |
| Core Composition | | 30% (60% Adsyl 7415 XCP/40% Plastolyn R1140) Concentrate) / 10% Adsyl 7415 XCP/ 26.7% Koattro DP8310M / 33.3% Vistamaxx 3980FL | | |
| TD Shrink | | | | |
| 60° C | % | -0.8 | -0.5 | -0.7 |
| 65° C | % | 2 | 2 | 2 |
| 70° C | % | 15 | 15 | 14 |
| 75° C | % | 29 | 27 | 29 |
| 80° C | % | 40 | 38 | 40 |
| 85° C | % | 48 | 45 | 48 |
| 90° C | % | 54 | 52 | 55 |
| 95° C | % | 60 | 61 | 61 |
| 100° C | % | 67 | 67 | 68 |
| 105° C | % | 71 | 70 | 70 |
| Shrink Tension        TD | | | | |
| 80° C | grams | 297 | 311 | 312 |
| 85° C | grams | 313 | 326 | 311 |

(continued)

| Shrink Tension | TD | | | | |
|---|---|---|---|---|---|
| 90° C | | grams | 298 | 315 | 295 |
| 95° C | | grams | 305 | 303 | 324 |
| 100° C | | grams | 316 | 292 | 332 |
| Natural Shrink | TD | | | | |
| 30° C | | % | 0 | 0 | 0 |
| 35° C | | % | 0 | 0.2 | 0.2 |
| 40° C | | % | 2 | 2 | 2 |
| 45° C | | % | 2.5 | 2 | 2 |

Once again, the benefits of hard resin introduction to the core is illustrated by the excellent combination of optical properties, stiffness, shrink performance, and film dimensional stability under storage conditions.

**Example 23**

Three additional films, identified as example 23 as a group, were produced by coextrusion, cast on a sequence of two chill rolls at 35 °C, stretched in machine direction (MD) 1.2X at 85 °C, then stretched in a tenter frame at 96 °C, cooled and wound up as described above. The films all contained skin layers with a combination of 80% Styrolux S and 20% Styrolux T and a core composition comprising polypropylene terpolymer, polybutene-1 copolymer, and propylene-ethylene elastomeric copolymer. The intermediate layers are a blend of 70% by weight Tuftec P2000 styrene-ethylene-co-butene-styrene block copolymer and 30% by weight Adsyl 6C30F propylene-ethylene-butene terpolymer. Properties are provided in tables 44 and table 45 below .

**Table 44.**

| Film Property | | Unit of Measure | Example 23. Five Layer Symmetric Film | | |
|---|---|---|---|---|---|
| Skin Composition | | | 80% Styrolux S / 20% Styrolux T | | |
| Interlayer Composition | | | 70% Tuftec P2000/30% Adsyl 6C30F | | |
| Core Composition | | | 40% Adsyl 6C30F / 26.7% Koattro DP8310M / 33.3% Vistamaxx 3980FL | | |
| Yield | | $in^2$/lb | 16,045 | 13,686 | 13,576 |
| Density | | g/cm$^3$ | 0.944 | 0.940 | 0.936 |
| Film Thickness (calculated) | | microns | 46 | 55 | 55 |
| Interlayer Thickness ( measured) | | microns | 2.8 | 3.0 | 3.8 |
| Skin Thickness (measured) | | microns | 9.3 | 8.6 | 9.3 |
| Haze | | % | 1.3 | 1.2 | 1.2 |
| Gloss - IN | | gu | >100 | >100 | >100 |
| Gloss - OUT | | gu | >100 | >100 | >100 |
| Gurley Stiffness | MD/TD | | 8.1 / 8.3 | 10.7 / 12.2 | 11.8 / 13.1 |
| Flex Stiffness | MD/TD | g/in | 2.9 / 3.3 | 4.5 / 6.5 | 5.0 / 6.2 |

(continued)

| Film Property | Unit of Measure | Example 23. Five Layer Symmetric Film | | |
|---|---|---|---|---|
| PIN Puncture | g | 1201 | 1256 | 1306 |

**Table 45.**

| Film Property | Unit of Measure | Example 23. Five Layer Symmetric Film | | |
|---|---|---|---|---|
| Skin Composition | | 80% Styrolux S / 20% Styrolux T | | |
| Interlayer Composition | | 70% Tuftec P2000/30% Adsyl 6C30F | | |
| Core Composition | | 40% Adsyl 6C30F / 26.7% Koattro DP8310M / 33.3% Vistamaxx 3980FL | | |
| TD Shrink | | | | |
| 60° C | % | 0 | 0 | 0 |
| 65° C | % | 8 | 7 | 7 |
| 70° C | % | 21 | 20 | 21 |
| 75° C | % | 34 | 33 | 33 |
| 80° C | % | 48 | 48 | 48 |
| 85° C | % | 53 | 55 | 55 |
| 90° C | % | 61 | 61 | 61 |
| 95° C | % | 65 | 66 | 66 |
| 100° C | % | 68 | 70 | 69 |
| 105° C | % | 70 | 72 | 71 |
| Shrink Tension    TD | | | | |
| 80° C | grams | 482 | 530 | 525 |
| 85° C | grams | 494 | 532 | 567 |
| 90° C | grams | 514 | 554 | 552 |
| 95° C | grams | 507 | 534 | 581 |
| 100° C | grams | 476 | 541 | 600 |
| Natural Shrink    TD | | | | |
| 30° C | % | 0 | 0 | 0 |
| 35°C | % | -0.5 | -0.5 | -0.5 |
| 40° C | % | 3.5 | 3.5 | 3.5 |

An excellent combination of optical properties, stiffness, shrink performance, and film dimensional stability under storage conditions was observed.

In a seventh embodiment of the present invention a five layer shrink film includes a core layer, two intermediate adhesive layers, and opposed skin layers; said intermediate adhesive layers and skin layers being thinner than said core layer. In this embodiment the film structure is symmetric, with one or more styrene-butadiene block copolymers (diblock or triblock) as the opposing skin layers and intermediate layers consisting of blends of one or more polymers from the group consisting of styrene-ethylene-co-butene-styrene triblock copolymer, styrene-ethylene-co-propylene-styrene triblock copolymer, styrene-ethylene-co-butene diblock copolymer, styrene-ethylene-co-propylene diblock copolymer and at least one or more polypropylene terpolymer or copolymer. The core layer includes one or more styrene-butadiene triblock or diblock copolymers, one or more styrene-ethylene/butene-styrene triblock or styrene-ethylene/butene diblock copolymers therein, in combination with a propylene-ethylene-butene terpolymer or propylene-ethylene copolymer, a butene-ethylene copolymer and a propylene-based elastomeric polymer. This core layer composition is the result of simulating the addition of reclaim into the core at levels which create significant opacity to the film. Optionally, a TiO2 concentrate with an ethylene polymer based carrier is present to enhance the films opacity and whiteness. A representative film structure of this sixth embodiment including the optional components is shown below.

Corona Treatment (optional)

| ~4-12 $\mu$m | skin layer | 80-100% (80% Styrolux S / 20% Styrolux T SBC) |
| | | 0-20% ((SEBS or SEP or SEPS)) |
| 1.5 - 4.5 $\mu$m Copolymer | inter-layer | 60-95% Kraton G SEBS or SEPS Block Copolymer |
| | | 5-40% LYB 6C30F Terpolymer or Total 8573 |
| 30-45 $\mu$m 7415 XCP copolymer | core layer | 20 - 35% LYB Adsyl 6C30F Terpolymer or Adsyl |
| | | 10 - 25% LYB Koattro DP8310M Polybutene-1 |
| | | 10 - 30% Vistamaxx 3980FL or Versify 3000 |
| | | 10 - 60% Reclaim (Terpolymer, butene- ethylene copolymer, propylene-based elastomer, styrene ethylene/butene-styrene block copolymer, styrene-butadiene block copolymer) |
| | | 0 - 10% Polyethylene based TiO2 concentrate |
| 1.5 - 4.5 $\mu$m Copolymer | inter-layer | 60-95% Kraton G SEBS or SEPS Block Copolymer |
| | | 5-40% LYB 6C30F Terpolymer or Total 8573 |
| ~4-12 $\mu$m | skin layer | 80-100% (80% Styrolux S / 20% Styrolux T SBC) |
| | | 0-20% ((SEBS or SEP or SEPS)) |

Corona Treatment (optional)

**Example 24**

Three additional films, identified as example 24 as a group, were produced by coextrusion, cast on a sequence of two chill rolls at 40 °C, stretched in machine direction (MD) 1.2X at 80 °C, then stretched in a tenter frame at 108 °C, cooled and wound up as described above. The films all contained skin layers with a combination of 80% Styrolux S and 20% Styrolux T and the core layer includes one or more styrene-butadiene triblock or diblock copolymers, one or more styrene-ethylene-co-butene-styrene triblock or styrene-ethylene-co-butene diblock copolymers therein, in combination with a propylene-ethylene-butene terpolymer or propylene-ethylene copolymer, a butene-ethylene copolymer and a propylene-based elastomeric polymer. This core layer composition is the result of incorporating reclaim into the core at levels which create significant opacity to the film. The intermediate layers are a blend of 70% Kraton G1643 and 30% Adsyl 6C30F. Properties are provided in tables 46 and table 47 below .

**Table 46.**

| Film Property | Unit of Measure | Example 24. Five Layer Symmetric Film | | |
|---|---|---|---|---|
| Skin Composition | | 80% Styrolux S / 20% Styrolux T | | |
| Interlayer Composition | | 70% Kraton G1643 / 30% Adsyl 6C30F | | |
| Core Composition | | 31% Adsyl 6C30F / 18% Koattro DP8310M / 24.3% Vistamaxx 3980FL / 17.3% Styrolux S / 4.4% Styrolux T / 5% Kraton G1643 | | |
| Yield | in$^2$/lb | 13,089 | 12,531 | 12,027 |

(continued)

| Film Property | Unit of Measure | Example 24. Five Layer Symmetric Film | | |
|---|---|---|---|---|
| Density | g/cm³ | 0.949 | 0.954 | 0.953 |
| Film Thickness (calculated) | microns | 57 | 59 | 61 |
| Interlayer Thickness ( measured) | microns | 4.2 | 4.4 | 3.3 |
| Skin Thickness (measured) | microns | 8.7 | 11.5 | 9.5 |
| Opacity | % | 22 | 21 | 22 |
| Opacity after shrink at 95 C | % | 27 | 27 | 27 |
| Gloss - IN | gu | 89 | 88 | 87 |
| Gloss - OUT | gu | 88 | 89 | 88 |
| Gurley Stiffness        MD/TD | | 15.0 / 15.1 | 15.8 / 15.5 | 14.3 / 15.8 |
| Flex Stiffness        MD/TD | g/in | 6.5 / 6.8 | 5.4 / 6.8 | 6.9 / 7.6 |
| PIN Puncture | g | 1123 | 1167 | 1197 |

**Table 47.**

| Film Property | Unit of Measure | Example 24. Five Layer Symmetric Film | | |
|---|---|---|---|---|
| Skin Composition | | 80% Styrolux S / 20% Styrolux T | | |
| Interlayer Composition | | 70% Kraton G1643 / 30% Adsyl 6C30F | | |
| Core Composition | | 31% Adsyl 6C30F / 18% Koattro DP8310M / 24.3% Vistamaxx 3980FL / 17.3% Styrolux S / 4.4% Styrolux T / 5% Kraton G1643 | | |
| TD Shrink | | | | |
| 60° C | % | -0.8 | -0.5 | -1 |
| 65° C | % | 1.3 | 1 | 1 |
| 70° C | % | 12 | 12 | 12 |
| 75° C | % | 24 | 22 | 24 |
| 80° C | % | 36 | 34 | 34 |
| 85° C | % | 44 | 44 | 43 |
| 90° C | % | 50 | 52 | 49 |
| 95° C | % | 59 | 59 | 57 |
| 100° C | % | 64 | 66 | 64 |
| 105° C | % | 70 | 71 | 70 |
| Shrink Tension        TD | | | | |
| 80° C | grams | 232 | 226 | 224 |
| 85° C | grams | 231 | 220 | 228 |

(continued)

| Film Property | Unit of Measure | Example 24. Five Layer Symmetric Film | | |
|---|---|---|---|---|
| 90° C | grams | 219 | 219 | 230 |
| 95° C | grams | 210 | 216 | 218 |
| 100° C | grams | 215 | 223 | 243 |
| Natural Shrink    TD | | | | |
| 30° C | % | 0 | 0 | 0 |
| 35°C | % | 0 | 0 | 0 |
| 40° C | % | 1.5 | 1.5 | 1.5 |
| 45° C | % | 1.5 | 1.5 | 1.5 |

The above example 24 illustrates high levels of reclaim can be incorporated into the film core while maintaining film floatability (density less than 1.0 g/cm$^3$). Reclaim is compatible in the core structures and does not detrimentally impact the ability to produce a high quality TD oriented film with a good balance of properties. As illustrated in the next example 25, this provides an excellent base film for the further introduction of an opacifying agent (TiO$_2$) in sufficient quantity to produce a solid white film while maintaining a density below 1 g/cm$^3$.

**Example 25**

Three additional films, identified as example 25 as a group, were produced by coextrusion, cast on a sequence of two chill rolls at 40 °C, stretched in machine direction (MD) 1.2X at 80 °C, then stretched in a tenter frame at 108 °C, cooled and wound up as described above. The films all contained skin layers with a combination of 80% Styrolux S and 20% Styrolux T and the core layer includes one or more styrene-butadiene triblock or diblock copolymers, one or more styrene-ethylene-co-butene-styrene triblock or styrene-ethylene-co-butene diblock copolymers therein, in combination with a propylene-ethylene-butene terpolymer or propylene-ethylene copolymer, a butene-ethylene copolymer, a propylene-based elastomeric polymer, and a 70% TiO$_2$ concentrate in a LDPE carrier. This core layer composition is the result of simulating the incorporating of reclaim into the core at levels which create significant opacity to the film. Opacity is further enhanced through the introduction of TiO$_2$ with an ethylene polymer carrier which does not interfere with the shrink performance of the film. The intermediate layers are a blend of 70% Kraton G1643 and 30% Adsyl 6C30F. Properties are provided in tables 48 and table 49 below .

**Table 48.**

| Film Property | Unit of Measure | Example 25. Five Layer Symmetric Film | | |
|---|---|---|---|---|
| Skin Composition | | 80% Styrolux S / 20% Styrolux T | | |
| Interlayer Composition | | 70% Kraton G1643 / 30% Adsyl 6C30F | | |
| Core Composition | | 30% Adsyl 6C30F / 17% Koattro DP8310M / 21.3% Vistamaxx 3980FL / 17.3% Styrolux S / 4.4% Styrolux T / 5% Kraton G1643 / 5% POLYBATCH White 8000 EC | | |
| Yield | in$^2$/lb | 12,789 | 12,564 | 12,444 |
| Density | g/cm$^3$ | 0.972 | 0.974 | 0.968 |
| Film Thickness (calculated) | microns | 56 | 57 | 58 |
| Interlayer Thickness ( measured) | microns | 4.2 | 4.9 | 4.0 |
| Skin Thickness (measured) | microns | 10.1 | 9.8 | 9.2 |

(continued)

| Film Property | Unit of Measure | Example 25. Five Layer Symmetric Film | | |
|---|---|---|---|---|
| Opacity as produced | % | 63 | 62 | 61 |
| Opacity after shrink at 95 C | % | 67 | 66 | 66 |
| Gloss - IN | gu | 65 | 65 | 63 |
| Gloss - OUT | gu | 60 | 65 | 66 |
| Gurley Stiffness MD/TD | | 15.1 / 16.1 | 14.8 / 14.9 | 14.2 / 18.0 |
| Flex Stiffness MD/TD | g/in | 6.5 / 7.6 | 5.9 / 5.9 | 6.2 / 6.7 |
| PIN Puncture | g | 1137 | 1219 | 1101 |

**Table 49.**

| Film Property | | Unit of Measure | Example 25. Five Layer Symmetric Film | | |
|---|---|---|---|---|---|
| Skin Composition | | 80% Styrolux S / 20% Styrolux T | | | |
| Interlayer Composition | | 70% Kraton G1643 / 30% Adsyl 6C30F | | | |
| Core Composition | | 30% Adsyl 6C30F / 17% Koattro DP8310M / 21.3% Vistamaxx 3980FL / 17.3% Styrolux S / 4.4% Styrolux T / 5% Kraton G1643 / 5% POLYBATCH White 8000 EC | | | |
| TD Shrink | | | | | |
| 60° C | % | -1 | -1 | | -1 |
| 65° C | % | 1 | 1 | | 1 |
| 70° C | % | 12 | 12 | | 12 |
| 75° C | % | 23 | 23 | | 24 |
| 80° C | % | 34 | 35 | | 37 |
| 85° C | % | 43 | 44 | | 45 |
| 90° C | % | 49 | 50 | | 51 |
| 95° C | % | 56 | 58 | | 58 |
| 100° C | % | 64 | 64 | | 64 |
| 105° C | % | 70 | 71 | | 70 |
| Shrink TD Tension | | | | | |
| 80° C | grams | 233 | 240 | | 225 |
| 85° C | grams | 217 | 223 | | 240 |
| 90° C | grams | 221 | 229 | | 227 |
| 95° C | grams | 218 | 218 | | 225 |
| 100° C | grams | 216 | 230 | | 205 |
| Natural Shrink TD | | | | | |
| 30° C | % | -0.3 | -0.2 | | 0 |

(continued)

| Film Property | | | Unit of Measure | Example 25. Five Layer Symmetric Film |
|---|---|---|---|---|
| 35°C | % | -0.2 | -0.2 | 0 |
| 40° C | % | 1.5 | 1.3 | 1.5 |
| 45° C | % | 1.5 | 1.5 | 1.5 |

The ability to incorporate high level of reclaim into the core of the film and the introduction of low levels of opacifying agent while maintaining a density less than 1.0 g/cm$^3$ is shown in the above example 25. An overall excellent balance of opacity, stiffness, shrink performance under steam tunnel conditions, and storage stability is demonstrated.

The introduction of reclaim and an opacifying agent into the core while maintaining a density below 1 g/cm$^3$ provides the ability to produce a floatable film which can be separated from non-floatable containers while creating an effective UV and Visible light barrier in applications, such as dairy products, where the container contents are detrimentally affected over time by light exposure in the wavelength range of 200 - 750 nm. This is illustrated in Figure 4 which compares the light blocking performance (% Transmission) of optically clear film of Example 15, Example 24, and Example 25. Exceptional light blocking performance (below 5% transmission in the range of 200-750 nm wavelength) with the incorporation of film reclaim and the introduction of low levels of opacifying agents is demonstrated.

The relationship between film thickness and MD flex stiffness for the PS skin floatable films of this invention is illustrated and compared to commercially available non-floatable PETG shrink film materials having a densities greater than 1 g/cm$^3$ (densities = 1.27-1.31 g/cm$^3$) in Figure 5 below. In addition to an overall exponential dependence on film thickness, the blend ratio of the two components incorporated into the PS skins of the floatable films has a very significant influence on the MD flexural stiffness of the structure. A stiffness/thickness match of the commercial non-floatable PETG shrink film is achievable while maintaining a density less than 1 g/cm$^3$ for the PS skin floatable films of this invention.

Because of the substantial difference in density between the floatable films with PS skins in comparison to the non-floatable PETG films, on the basis of equivalent yield or coverage (in$^2$/lb), the floatable film structures provide a substantially higher specific stiffness (stiffness to weight or yield ratio) relative to the non-floatable PETG film, as illustrated in Figure 6, which compares flex stiffness to film yield. Here again, the blend ratio of the two component incorporated into the PS skin has a very significant influence on the magnitude of stiffness to yield ratio.

In an eighth embodiment of the present invention, three component organic solvent blends usable to form continuous welded seams in accordance with the broadest aspects of this invention have been identified. The blends are based on the combination of one component selected from the class of naturally occurring organic materials known as terpenes, at least one or more components selected from the group consisting of a straight chain ether, a branched chain ether, a cyclic ether, a substituted cyclic ether, a cyclic diether, a substituted cyclic diether, and at least one or more components selected from the group consisting of a straight chain ketone, a branched chain ketone, a cyclic ketone, and a substituted cyclic ketone.

Specific combinations and ratios of one or more terpenes in combination with one and/or the other of cyclic ketones and cyclic ethers have been found to be very effective seaming solvents for polyolefin based shrink film with at least one skin layer comprising at least one styrene copolymer. Preferred solvent blends are based on $\alpha$-Pinene as the terpene component. Five layer film of example 15, described in Table 28 and 29 above, was hand seamed into shrink sleeves using a laboratory seamer (available from Ryback & Ryback, Inc., Monroe, NC). Several solvent blends based on combinations of $\alpha$-Pinene, Cyclohexanone, and 1,3-Dioxolane were evaluated. Seam width for all films was kept within a range of 0.2 - 0.3 inches (5-7.5 mm). The resulting sleeves were aged at room temperature for several hours prior to T-peel testing on a MTS Q-Test/1L tensile tester. Results are described in Table 50 below.

**Table 50.**

| Solvent Recipe (Vol %) | T-Peel (g/25 mm) | | Lap Shear (lb-f) |
|---|---|---|---|
| | Peak | Peel | |
| 50% $\alpha$-Pinene<br>40% Cyclohexanone<br>10% 1,3-Dioxolane | 756 | 654 | 18 |
| 40% $\alpha$-Pinene<br>20% Cyclohexanone<br>40% 1,3-Dioxolane | 689 | 570 | 22 |

(continued)

| Solvent Recipe (Vol %) | T-Peel (g/25 mm) | | Lap Shear (lb-f) |
| --- | --- | --- | --- |
| | Peak | Peel | |
| 40% α-Pinene<br>30% Cyclohexanone<br>30% 1,3-Dioxolane | 798 | 639 | 20 |
| 40% α-Pinene<br>40% Cyclohexanone<br>20% 1,3-Dioxolane | 617 | 492 | 21 |
| 40% α-Pinene<br>50% Cyclohexanone<br>10% 1,3-Dioxolane | 750 | 627 | 19 |
| 60% α-Pinene<br>30% Cyclohexanone<br>10% 1,3-Dioxolane | 720 | 668 | 17 |
| 50% α-Pinene<br>30% Cyclohexanone<br>20% 1,3-Dioxolane | 663 | 624 | 18 |

Consistent high peel strength (Peak and Peel) was observed with the solvent blends selected, indicating the films would be suitable for shrink sleeve applications and that a number of options exist for solvent seaming of these floatable films.

Additional seaming tests were conducted on a series of films described in embodiments six and seven. A solvent blend of 40 vol % α-Pinene, 30 vol % Cyclohexanone, and 30 vol % 1,3-Dioxolane was used for these seaming evaluations. T-peel results are described in Table 51 below:

**Table 51.**

| Solvent Recipe (Vol %) | Film Designation | T-Peel (g/25 mm) | |
| --- | --- | --- | --- |
| | | Peak | Peel |
| 40% α-Pinene | Example 18 | 1134 | 1025 |
| 30% Cyclohexanone | Example 19 | 838 | 787 |
| 30% 1,3-Dioxolane | Example 21 | 803 | 724 |
| | Example 22 | 998 | 860 |
| | Example 23 | 1304 | 857 |
| | Example 24 | 645 | 554 |
| | Example 25 | 725 | 611 |

Exceptional high peel strength (Peak and Peel) was observed with the solvent blend selected, indicating these films would be suitable for shrink sleeve applications.

In the most preferred embodiments of this invention, the film, without a voiding or whitening agent therein, is essentially uniaxially oriented. If a voiding agent is included in the structure to provide opacity, it may be desirable to biaxially orient the film to aid in creating voids, and thereby reducing the density of the film.

In general, an opaque shrink film in accordance with this invention provided with a voiding agent have a density less than 1 g/cm$^3$. If a non-voiding, opacifying agent is used in one or more layers thereof, the film density may be greater than or less than 1 g/cm$^3$, dependent upon the concentration of opacifying agent incorporate. Non-voiding opacifying agent and voiding agents are well known in the art. By way of example, a non-voiding opacifying agent can include $TiO_2$ and voiding agents according to this invention include PBT (polybutylene terephthalate) and $CaCO_3$. This invention is not limited to the use of any specific non-voiding opacifying agent and/or voiding agent; the particular agent(s) selected being within the general skill of the art.

Although the present invention has been described in connection with preferred embodiments thereof, it will be appreciated by those skilled in the art that additions, modifications, substitutions, and deletions not specifically described may be made without departing from the scope of the invention defined in the appended claim.

**Claims**

1.    A multilayer oriented shrink film comprising:

A) a core layer comprising:

- i) at least one polypropylene co- or terpolymer selected from the group consisting of polypropylene terpolymers with ethylene and butene-1, propylene ethylene copolymers, propylene butene-1 copolymers and combinations thereof,
- ii) at least one polybutene-1 copolymer,
- iii) at least one polypropylene elastomeric copolymer, and
- iv) optionally, at least one polymer selected from the group consisting of styrene-ethylene-co-propylene-styrene-ethylene-co-propylene tetrablock, styrene-ethylene-co-butene-styrene triblock copolymers, styrene-ethylene-co-propylene-styrene triblock copolymers, styrene-ethylene-co-butene diblock copolymers and styrene-ethylene-co-propylene diblock copolymers and combinations thereof;

B) at least one skin layer which is disposed upon one side of said core layer; and wherein said skin layer comprises at least one amorphous styrene-butadiene block copolymer, and one or more high styrene content polymers from the group consisting of styrene-ethylene-co-butene-styrene triblock copolymers, styrene-ethylene-co-propylene-styrene triblock copolymers, styrene-ethylene-co-butene diblock copolymers and styrene-ethylene-co-propylene diblock copolymers, wherein said core layer has a thickness greater than said at least one skin layer(s),

optionally wherein said film is corona treated.

2.    The multilayer oriented shrink film of claim 1, wherein said core layer comprises:

- 36% to 40% polypropylene co- or terpolymer selected from the group consisting of polypropylene terpolymers with ethylene and butene-1, propylene ethylene copolymers, propylene butene-1 copolymers and combinations thereof
- 20% to 27% polybutene-1 copolymer,
- 20% to 33% polypropylene elastomeric copolymer,
- 0% to 20% polymer selected from the group consisting of styrene-ethylene-co-butene-styrene triblock copolymers, styrene-ethylene-co-propylene-styrene triblock copolymers, styrene-ethylene-co-butene diblock copolymers and styrene-ethylene-co-propylene diblock copolymers and combinations thereof.

3.    The multilayer oriented shrink film of any one of claims 1 to 2, wherein said at least one skin layer comprises:

- 80% to 99% amorphous styrene-butadiene block copolymer
- 1% to 20% high styrene content polymers selected from the group consisting of styrene-ethylene-co-butene-styrene triblock copolymers, styrene-ethylene-co-propylene-styrene triblock copolymers, styrene-ethylene-co-butene diblock copolymers and styrene-ethylene-co-propylene diblock copolymers.

4.    The multilayer oriented shrink film of any one of claims 1 or 3, wherein said film has a density of less than 1 g/cm$^3$.

5.    The multilayer oriented film of any one of claims 1 to 4, **characterized in** having a haze as measured in the description of less than 3%.

6.    The multilayer oriented film of any one of claims 1 to 5, **characterized in** having a haze as measured in the description of less than 2%.

7.    The multilayer oriented film of any one of claims 1 to 6, **characterized in** having a haze as measured in the description of less than 1%.

8. The multilayer oriented shrink film of any one of claims 1 to 7, said skin layers and core layer being the sole layers in said film.

9. The multilayer oriented shrink film of any one of claims 1 to 8, wherein the predominant film orientation is in the transverse direction, said film having a transverse direction shrink level as measured in the description in excess of 50% at 95°C.

10. The multilayer oriented shrink film of any one of claims 1 to 9, wherein the predominant film orientation is in the transverse direction, said film having a transverse direction shrink level as measured in the description in excess of 60% at 95 °C.

11. The multilayer oriented shrink film of any one of claims 1 to 10, wherein the film is uniaxially oriented in the transverse direction, said film having a transverse direction shrink level as measured in the description in excess of 50% at 95 °C.

12. The multilayer oriented shrink film of any one of claims 1 to 11, wherein said shrink film is a three layer film comprising a second skin layer on the side of the core layer opposed to said one side of said core layer.

13. The multilayer oriented shrink film of any one of claims 1 to 12, wherein said shrink film is a three layer film comprising a second skin layer on the side of the core layer opposed to said one side of said core layer, wherein said second skin layer has an identical composition to said first skin layer.


**Patentansprüche**

1. Mehrlagige orientierte Schrumpffolie, umfassend:

A) eine Kernschicht, die Folgendes umfasst:

- i) mindestens ein Polypropylen-Co- oder -Terpolymer, das aus der Gruppe ausgewählt ist, die aus Polypropylen-Terpolymeren mit Ethylen und Buten-1, Propylen-Ethylen-Copolymeren, Propylen-Buten-1-Copolymeren und Kombinationen davon besteht,
- ii) mindestens ein Polybuten-1-Copolymer,
- iii) mindestens ein Polypropylen-Elastomer-Copolymer und
- iv) optional mindestens ein Polymer, das aus der Gruppe ausgewählt ist, die aus Styrol-Ethylen-Co-Propylen-Styrol-Ethylen-Co-Propylen-Tetrablock-, Styrol-Ethylen-Co-Buten-Styrol-Triblockcopolymeren, Styrol-Ethylen-Co-Propylen-Styrol-Triblockcopolymeren, Styrol-Ethylen-Co-Buten-Diblockcopolymeren und Styrol-Ethylen-Co-Propylen-Diblockcopolymeren und Kombinationen davon besteht;

B) mindestens eine Hautschicht, die auf einer Seite der Kernschicht angeordnet ist; und wobei die Hautschicht mindestens ein amorphes Styrol-Butadien-Blockcopolymer und ein oder mehrere Polymere mit hohem Styrolgehalt aus der Gruppe, die aus Styrol-Ethylen-Co-Buten-Styrol-Triblockcopolymeren, Styrol-Ethylen-Co-Propylen-Styrol-Triblockcopolymeren, Styrol-Ethylen-Co-Buten-Diblockcopolymeren und Styrol-Ethylen-Co-Propylen-Diblockcopolymeren besteht, umfasst, wobei die Kernschicht eine größere Dicke als die mindestens eine Hautschicht(en) aufweist,

wobei die Folie optional einer Koronabehandlung unterzogen wurde.

2. Mehrlagige orientierte Schrumpffolie nach Anspruch 1, wobei die Kernschicht Folgendes umfasst:

- 36 % bis 40 % Polypropylen-Co- oder -Terpolymer, das aus der Gruppe ausgewählt ist, die aus Polypropylen-Terpolymeren mit Ethylen und Buten-1, Propylen-Ethylen-Copolymeren, Propylen-Buten-1-Copolymeren und Kombinationen davon besteht,
- 20 % bis 27 % Polybuten-1-Copolymer,
- 20 % bis 33 % Polypropylen-Elastomer-Copolymer,
- 0 % bis 20 % Polymer, das aus der Gruppe ausgewählt ist, die aus Styrol-Ethylen-Co-Buten-Styrol-Triblockcopolymeren, Styrol-Ethylen-Co-Propylen-Styrol-Triblockcopolymeren, Styrol-Ethylen-Co-Buten-Diblockcopolymeren und Styrol-Ethylen-Co-Propylen-Diblockcopolymeren und Kombinationen davon besteht.

**3.** Mehrlagige orientierte Schrumpffolie nach einem der Ansprüche 1 bis 2, wobei die mindestens eine Hautschicht Folgendes umfasst:

- 80 % bis 99 % amorphes Styrol-Butadien-Blockcopolymer
- 1 % bis 20 % Polymere mit hohem Styrolgehalt, die aus der Gruppe ausgewählt sind, die aus Styrol-Ethylen-Co-Buten-Styrol-Triblockcopolymeren, Styrol-Ethylen-Co-Propylen-Styrol-Triblockcopolymeren, Styrol-Ethylen-Co-Buten-Diblockcopolymeren und Styrol-Ethylen-Co-Propylen-Diblockcopolymeren besteht.

**4.** Mehrlagige orientierte Schrumpffolie nach einem der Ansprüche 1 oder 3, wobei die Folie eine Dichte von weniger als 1 g/cm$^3$ aufweist.

**5.** Mehrlagige orientierte Folie nach einem der Ansprüche 1 bis 4, **dadurch gekennzeichnet, dass** sie eine Trübung, wie in der Beschreibung gemessen, von weniger als 3 % aufweist.

**6.** Mehrlagige orientierte Folie nach einem der Ansprüche 1 bis 5, **dadurch gekennzeichnet, dass** sie eine Trübung, wie in der Beschreibung gemessen, von weniger als 2 % aufweist.

**7.** Mehrlagige orientierte Folie nach einem der Ansprüche 1 bis 6, **dadurch gekennzeichnet, dass** sie eine Trübung, wie in der Beschreibung gemessen, von weniger als 1 % aufweist.

**8.** Mehrlagige orientierte Schrumpffolie nach einem der Ansprüche 1 bis 7, wobei die Hautschichten und die Kernschicht die einzigen Schichten in der Folie sind.

**9.** Mehrlagige orientierte Schrumpffolie nach einem der Ansprüche 1 bis 8, wobei die vorherrschende Folienorientierung in der Querrichtung liegt, wobei die Folie einen Schrumpfgrad in Querrichtung, wie in der Beschreibung gemessen, über 50 % bei 95 °C aufweist.

**10.** Mehrlagige orientierte Schrumpffolie nach einem der Ansprüche 1 bis 9, wobei die vorherrschende Folienorientierung in der Querrichtung liegt, wobei die Folie einen Schrumpfgrad in Querrichtung, wie in der Beschreibung gemessen, über 60 % bei 95 °C aufweist.

**11.** Mehrlagige orientierte Schrumpffolie nach einem der Ansprüche 1 bis 10, wobei die Folie einachsig in der Querrichtung orientiert ist, wobei die Folie einen Schrumpfgrad in Querrichtung, wie in der Beschreibung gemessen, über 50 % bei 95 °C aufweist.

**12.** Mehrlagige orientierte Schrumpffolie nach einem der Ansprüche 1 bis 11, wobei die Schrumpffolie eine dreischichtige Folie ist, die eine zweite Hautschicht auf der Seite der Kernschicht umfasst, die der einen Seite der Kernschicht gegenüberliegt.

**13.** Mehrlagige orientierte Schrumpffolie nach einem der Ansprüche 1 bis 12, wobei die Schrumpffolie eine dreischichtige Folie ist, die eine zweite Hautschicht auf der Seite der Kernschicht umfasst, die der einen Seite der Kernschicht gegenüberliegt, wobei die zweite Hautschicht eine identische Zusammensetzung wie die erste Hautschicht aufweist.

**Revendications**

**1.** Film multicouche rétractable orienté comprenant :

A) une couche de coeur comprenant :

- i) au moins un copolymère ou terpolymère de polypropylène choisi dans le groupe constitué par les terpolymères de polypropylène avec l'éthylène et le butène-1, les copolymères éthylène propylène, les copolymères butène-1 propylène et leurs combinaisons,
- ii) au moins un copolymère de polybutène-1,
- iii) au moins un copolymère élastomère de polypropylène, et
- iv) éventuellement, au moins un polymère choisi dans le groupe constitué par les tétrablocs styrène-éthylène-co-propylène-styrène-éthylène-co-propylène, les copolymères triblocs styrène-éthylène-co-butène-styrène, les copolymères triblocs styrène-éthylène-co-propylène-styrène, les copolymères diblocs styrène-éthylène-co-butène et les copolymères diblocs styrène-éthylène-co-propylène et leurs combinaisons ;

B) au moins une couche de peau qui est disposée sur un côté de ladite couche de coeur ; et dans lequel ladite couche de peau comprend au moins un copolymère à blocs styrène-butadiène amorphe, et un ou plusieurs polymères à haute teneur en styrène du groupe constitué par des copolymères triblocs styrène-éthylène-co-butène-styrène, des copolymères triblocs styrène-éthylène-co-propylène-styrène, des copolymères diblocs styrène-éthylène-co-butène et des copolymères diblocs styrène-éthylène-co-propylène, dans lequel ladite couche de coeur comporte une épaisseur supérieure à ladite au moins une couche de peau,

éventuellement dans lequel ledit film est traité par effet corona.

2. Film multicouche rétractable orienté selon la revendication 1, dans lequel ladite couche de coeur comprend :

- 36% à 40% de copolymère ou terpolymère de polypropylène choisi dans le groupe constitué par les terpolymères de polypropylène avec l'éthylène et le butène-1, les copolymères éthylène propylène, les copolymères butène-1 propylène et leurs combinaisons ;
- 20% à 27% de copolymère de polybutène-1,
- 20% à 33% de copolymère élastomère de polypropylène,
- 0% à 20% de polymère choisi dans le groupe constitué par les copolymères triblocs styrène-éthylène-co-butène-styrène, les copolymères triblocs styrène-éthylène-co-propylène-styrène, les copolymères diblocs styrène-éthylène-co-butène et les copolymères diblocs styrène-éthylène-co-propylène et leurs combinaisons.

3. Film multicouche rétractable orienté selon l'une quelconque des revendications 1 à 2, dans lequel ladite au moins une couche de peau comprend :

- 80 à 99 % de copolymère à blocs styrène-butadiène amorphe ;
- 1% à 20 % de polymères à haute teneur en styrène choisi dans le groupe constitué par les copolymères triblocs styrène-éthylène-co-butène-styrène, les copolymères triblocs styrène-éthylène-co-propylène-styrène, les copolymères diblocs styrène-éthylène-co-butène et les copolymères diblocs styrène-éthylène-co-propylène.

4. Film multicouche rétractable orienté selon l'une quelconque des revendications 1 ou 3, dans lequel ledit film comporte une densité inférieure à 1 g/cm$^3$.

5. Film multicouche orienté selon l'une quelconque des revendications 1 à 4, **caractérisé en ce qu'**il comporte un voile tel que mesuré dans la description inférieur à 3 %.

6. Film multicouche orienté selon l'une quelconque des revendications 1 à 5, **caractérisé en ce qu'**il comporte un voile tel que mesuré dans la description inférieur à 2 %.

7. Film multicouche orienté selon l'une quelconque des revendications 1 à 6, **caractérisé en ce qu'**il comporte un voile tel que mesuré dans la description inférieur à 1 %.

8. Film multicouche rétractable orienté selon l'une quelconque des revendications 1 à 7, lesdites couches de peau et la couche de coeur étant les seules couches dans ledit film.

9. Film multicouche rétractable orienté selon l'une quelconque des revendications 1 à 8, dans lequel l'orientation prédominante du film est dans la direction transversale, ledit film comportant un niveau de rétrécissement dans la direction transversale tel que mesuré dans la description de plus de 50 % à 95° C.

10. Film multicouche rétractable orienté selon l'une quelconque des revendications 1 à 9, dans lequel l'orientation prédominante du film est dans la direction transversale, ledit film comportant un niveau de rétrécissement dans la direction transversale tel que mesuré dans la description de plus de 60 % à 95° C.

11. Film multicouche rétractable orienté selon l'une quelconque des revendications 1 à 10, dans lequel le film est orienté uniaxialement dans la direction transversale, ledit film comportant un niveau de rétrécissement dans la direction transversale tel que mesuré dans la description de plus de 50 % à 95° C.

12. Film multicouche rétractable orienté selon l'une quelconque des revendications 1 à 11, dans lequel ledit film rétrac-

EP 4 076 954 B1

table est un film à trois couches comprenant une seconde couche de peau sur le côté de la couche de coeur opposé audit côté de ladite couche de coeur.

13. Film multicouche rétractable orienté selon l'une quelconque des revendications 1 à 12, dans lequel ledit film rétractable est un film à trois couches comprenant une seconde couche de peau sur le côté de la couche de coeur opposé audit côté de ladite couche de coeur, dans lequel ladite seconde couche de peau comporte une composition identique à ladite première couche de peau.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63058079 W
- US 62951675 B
- US 20150010740 A
- US 5219666 A
- US 8541077 B

- US 20160107422 A
- US 7935401 B
- US 8092920 B
- US 20030068453 A
- WO 2017210403 A